(19) **Europäisches Patentamt / European Patent Office / Office européen des brevets**

(11) **EP 4 725 842 A1**

(12) **EUROPEAN PATENT APPLICATION**
published in accordance with Art. 153(4) EPC

(43) Date of publication:
**15.04.2026 Bulletin 2026/16**

(51) International Patent Classification (IPC):
**B64D 27/24** (2024.01)     **H02P 29/62** (2016.01)

(21) Application number: **24819316.1**

(52) Cooperative Patent Classification (CPC):
**B64D 27/24; H02P 29/62**

(22) Date of filing: **04.06.2024**

(86) International application number:
**PCT/JP2024/020358**

(87) International publication number:
**WO 2024/253087 (12.12.2024 Gazette 2024/50)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.06.2023 JP 2023094322**

(71) Applicant: **DENSO CORPORATION**
**Kariya-city, Aichi 448-8661 (JP)**

(72) Inventors:
• **TAKEMURA, Yuichi**
  **Kariya-city, Aichi 448-8661 (JP)**
• **KAWAZU, Shinsuke**
  **Kariya-city, Aichi 448-8661 (JP)**

• **HAYASHI, Jiro**
  **Kariya-city, Aichi 448-8661 (JP)**
• **YAMAMOTO, Takehiro**
  **Kariya-city, Aichi 448-8661 (JP)**
• **SUZUKI, Akira**
  **Kariya-city, Aichi 448-8661 (JP)**
• **SUGITA, Shun**
  **Kariya-city, Aichi 448-8661 (JP)**
• **SUZUKI, Hideaki**
  **Kariya-city, Aichi 448-8661 (JP)**
• **NAKATA, Shingo**
  **Kariya-city, Aichi 448-8661 (JP)**

(74) Representative: **TBK**
**Bavariaring 4-6**
**80336 München (DE)**

(54) **PROPULSION SYSTEM, PROPULSION CONTROL DEVICE, AND PROPULSION CONTROL PROGRAM**

(57)     A propulsion system includes a propulsion device and a flight control device. The propulsion device includes a motor. The motor includes a rotor magnet. The flight control device acquires a motor temperature (Tm) in step S103 of a flight control process. The flight control device acquires a motor current (Im) in step S108. In steps S109 to S113, the flight control device performs management processing for managing demagnetization of the rotor magnet using driving information such as the motor temperature (Tm) and the motor current (Im). The management processing includes processing of determining whether a state of the motor is in an abnormal region, a demagnetization region, or a general region. In the management processing, the motor current is limited according to which region the state of the motor is in.

EP 4 725 842 A1

# FIG. 4

```
                    ┌─────────────────┐
                    │  FLIGHT CONTROL │
                    └─────────────────┘
                             │
              ┌──────────────────────────────┐
              │  ACQUIRE eVTOL INFORMATION    │──── S101
              └──────────────────────────────┘
                             │
         NO         ╱─────────────────╲  ── S102
      ┌────────────<     FLYING?       >
      │             ╲─────────────────╱
      │                    │ YES
 S114 │             ┌──────────────┐
      │             │  ACQUIRE Tm  │──── S103
      ▼             └──────────────┘
┌──────────────┐           │            ── S104
│ MAINTENANCE  │    ╱─────────────────╲        NO            ── S108
└──────────────┘   <  ABNORMAL REGION? >─────────────┐  ┌──────────────┐
      │             ╲─────────────────╱               └──│  ACQUIRE Im  │
      │                    │ YES                          └──────────────┘
      │                                                          │     ── S109
      │                                              ╱─────────────────────╲    NO
      │                                             <    DEMAGNETIZATION     >────┐
      │                                              ╲      REGION?         ╱     │
      │                                               ╲─────────────────────╱     │
      │                                                    │ YES  ── S110         │
      │                                              ┌──────────────┐             │
      │                                              │   COUNT Cd   │             │
      │                                              └──────────────┘             │
      │                                                    │       ── S111        │
      │                           ── S105            ╱─────────────────╲    NO    │
      │                 ┌──────────────────┐        <     Cd≥TCd?       >─────────┤
      │                 │ STORE ABNORMALITY│         ╲─────────────────╱          │
      │                 └──────────────────┘               │ YES  ── S112         │
      │                           │   ── S106        ┌──────────────────┐         │
      │                 ┌──────────────────┐         │  SET FIRST FLAG  │         │
      │                 │ NOTIFY ABNORMALITY│         └──────────────────┘         │
      │                 └──────────────────┘               │      ── S113         │
      │                           │   ── S107        ┌──────────────────┐         │
      │                 ┌──────────────────┐         │  DEMAGNETIZATION │         │
      │                 │   ABNORMALITY     │         │     HANDLING     │         │
      │                 │ LIMIT PROCESSING  │         └──────────────────┘         │
      │                 └──────────────────┘               │                      │
      │                           │                        │                      │
      └───────────────────────────┼────────────────────────┴──────────────────────┘
                                   ▼
                            ┌───────────┐
                            │    END    │
                            └───────────┘
```

## Description

CROSS REFERENCE TO RELATED APPLICATION

The present application is based on Japanese Patent Application No. 2023-094322 filed on June 07, 2023. The entire disclosures of all of the above applications are incorporated herein by reference.

TECHNICAL FIELD

The present disclosure relates to a propulsion system, a propulsion control device, and a propulsion control program.

BACKGROUND ART

Patent Literature 1 describes a motor system including a motor. In the motor system, when a motor temperature exceeds a reference temperature, it is determined that a motor temperature abnormality occurs, and a motor output decreases. In Patent Literature 1, it is possible to prevent further deterioration of a state of the motor in which the motor temperature abnormality occurs.

PRIOR ART LITERATURE

PATENT LITERATURE

Patent Literature 1: JP2020-205709A

SUMMARY OF INVENTION

In a motor including a permanent magnet, demagnetization of the permanent magnet may progress as the motor is driven. On the other hand, in Patent Literature 1, the demagnetization of the permanent magnet is not taken into consideration in driving the motor, and it is considered that the demagnetization of the permanent magnet progresses to such an extent that an abnormality of the motor occurs. When the demagnetization of the permanent magnet progresses to such an extent that an abnormality of the motor occurs, there is a concern that, in a moving object propelled by driving the motor, safety of the moving object may decrease.

A main object of the present disclosure is to provide a propulsion system, a propulsion control device, and a propulsion control program capable of enhancing safety of a moving object.

Multiple aspects disclosed in the description adopt different technical means to achieve respective objects. Reference numerals in parentheses in the claims and the section are an example indicating a correspondence relationship with specific means described in an embodiment to be described later as one aspect, and do not limit the technical scope.

In order to achieve the above object, according to a disclosed aspect, a propulsion system is configured to propel a moving object. The propulsion system comprises: a motor including a permanent magnet and configured to be driven to propel the moving object; an information acquisition unit configured to acquire driving information indicating a driving state of the motor; and a demagnetization management unit configured to manage demagnetization of the permanent magnet using the driving information acquired by the information acquisition unit.

According to the propulsion system, the demagnetization of the permanent magnet is managed using the driving information of the motor. In the configuration, the motor can be driven such that the demagnetization of the permanent magnet is less likely to occur. Therefore, it is possible to suppress demagnetization of the permanent magnet. Further, in the configuration, it is possible to take abnormality countermeasures such as reducing a load of the permanent magnet at a timing before the demagnetization of the permanent magnet progresses to such an extent that the abnormality of the motor occurs. Therefore, a decrease in safety of the moving object caused by progress of the demagnetization of the permanent magnet can be restricted. As described above, the safety of the moving object can be improved by managing the demagnetization of the permanent magnet.

According to a disclosed aspect, a propulsion control device is configured to control a propulsion system including a motor, which is configured to be driven to propel a moving object. The propulsion control device comprises: an information acquisition unit configured to acquire driving information indicating a driving state of the motor; and a demagnetization management unit configured to manage demagnetization of a permanent magnet of the motor using the driving information acquired by the information acquisition unit.

According to the propulsion control device, similarly to the propulsion system, the safety of the moving object can be improved.

According to a disclosed aspect, a propulsion control program is configured to cause at least one processor to control a propulsion system including a motor, which is configured to be driven to propel a moving object. The propulsion control program is configured to cause the at least one processor to execute: processing of acquiring driving information indicating a driving state of the motor; and processing of managing demagnetization of a permanent magnet of the motor using the driving information.

According to the propulsion control program, similarly to the propulsion system, the safety of the moving object can be improved.

According to the propulsion control device, effects similar to those of the propulsion system can be achieved.

BRIEF DESCRIPTION OF DRAWINGS

FIG. 1 is a diagram showing a configuration of an eVTOL according to a first embodiment.

FIG. 2 is a block diagram showing an electrical configuration of a propulsion system.

FIG. 3 is a diagram illustrating a demagnetization region.

FIG. 4 is a flowchart showing a procedure of a flight control process.

FIG. 5 is a flowchart showing a procedure of a demagnetization handling process.

FIG. 6 is a flowchart showing a procedure of a second limit range process.

FIG. 7 is a flowchart showing a procedure of a limit handling process.

FIG. 8 is a flowchart showing a procedure of a maintenance process.

FIG. 9 is a flowchart showing a procedure of the demagnetization handling process in a second embodiment.

FIG. 10 is a diagram illustrating a deviation amount.

FIG. 11 is a flowchart showing a procedure of the flight control process in a third embodiment.

FIG. 12 is a diagram illustrating the demagnetization region.

FIG. 13 is a flowchart showing a procedure of the flight control process in a fourth embodiment.

FIG. 14 is a flowchart illustrating a procedure of the demagnetization handling process.

FIG. 15 is a block diagram showing an electrical configuration of the propulsion system in a fifth embodiment.

FIG. 16 is a flowchart showing a procedure of the flight control process.

FIG. 17 is a flowchart illustrating a procedure of a landing handling process.

FIG. 18 is a diagram illustrating a first cooling threshold and a first stop threshold.

FIG. 19 is a flowchart showing a procedure of a driving inspection process.

FIG. 20 is a flowchart showing a procedure of a take-off preparation process.

FIG. 21 is a flowchart showing a procedure of a charging handling process.

DESCRIPTION OF EMBODIMENTS

Hereinafter, multiple embodiments for carrying out the present disclosure will be described with reference to the drawings. In each embodiment, the same reference numerals are assigned to portions corresponding to the items described in the preceding embodiments, and a repetitive description thereof may be omitted. In each embodiment, when only a part of the configuration is described, another embodiment previously described can be employed for the other part of the configuration. Not only combinations between portions that are specifically clarified as being able to be used in combination in each embodiment are possible, but also partial combinations between the embodiments whose combination is not specifically clarified are possible as long as no adverse effect is particularly generated on the combination.

<First Embodiment>

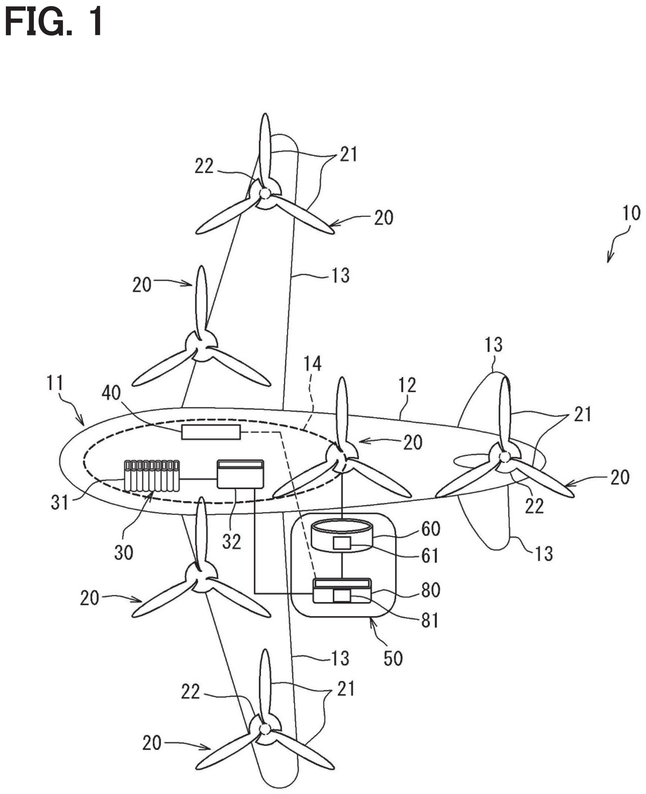

A propulsion system 30 shown in FIG. 1 is mounted on an eVTOL 10. The eVTOL 10 is an electric vertical take-off and landing aircraft. The electric vertical take-off and landing aircraft is an electric-powered vertical take-off and landing aircraft, and can take off and land vertically. The eVTOL is an abbreviation of electric vertical take-off and landing aircraft. The eVTOL 10 is an electric-powered flight vehicle that flies through the atmosphere and may be referred to as an electric flight vehicle. The eVTOL 10 is also an electric-powered aircraft and may be referred to as an electric aircraft. The eVTOL 10 is a manned flight vehicle carrying an occupant. The occupant of the eVTOL 10 includes a pilot acting as an operator or a driver. The propulsion system 30 is a system that is driven to propel the eVTOL 10. The propulsion system 30 may be referred to as a flight system.

The eVTOL 10 includes an airframe 11 and propellers 20. The airframe 11 includes an airframe main body 12 and wings 13. The airframe main body 12 is a body of the airframe 11 and has, for example, a shape extending in a front-rear direction. The airframe main body 12 has an occupant compartment 14 for carrying occupants. Each of the wings 13 extends from the airframe main body 12, and multiple wings 13 are provided on the airframe main body 12. The wings 13 are fixed wings. The multiple wings 13 include a main wing, a tail wing, and the like.

The eVTOL 10 has a cabin. The cabin is provided inside the eVTOL 10. For example, the cabin is an internal space of the airframe main body 12 and is formed by the airframe main body 12. Examples of the cabin include the occupant compartment 14, and a cargo compartment. Examples of the occupant compartment 14 include a passenger compartment and a pilot compartment. Seats for the occupants to sit are provided in the occupant compartment 14. The occupant compartment 14 may not be occupied by the occupants, and may accommodate cargo.

Multiple propellers 20 are provided on the airframe 11. The eVTOL 10 is a multicopter including at least three propellers 20. For example, at least six propellers 20 are provided on the airframe 11. The propellers 20 are provided on the airframe main body 12 and the wings 13. Each of the propellers 20 rotates about a propeller axis thereof. The propeller axis is, for example, a center line of the propeller 20. The propeller 20 can generate thrust and lift in the eVTOL 10. The propeller 20 may be referred to as a rotor or a rotary blade.

In the eVTOL 10, by providing multiple propellers 20, balance of the airframe is easily maintained. Even if a propeller output of one of the propellers 20 is unintentionally reduced, the eVTOL 10 can continue to fly using the remaining propellers 20. Examples of the propeller output include a rotation speed and a torque of the propeller 20.

The propeller 20 includes blades, a boss, and a propeller shaft. The blades are arranged in a circumferential direction of the propeller axis. The boss couples the multiple blades. The propeller shaft is a rotating shaft of the propeller 20 and extends along the propeller axis from the boss.

Examples of a flight mode of the eVTOL 10 include vertical take-off, vertical landing, cruise, hovering, and the like. The flight mode may be referred to as a flight behavior. In the vertical take-off, the eVTOL 10 can take off without sliding. In the vertical take-off, the eVTOL 10 may rise in the vertical direction or may rise obliquely upward. In the vertical landing, the eVTOL 10 can land without sliding. In the vertical landing, the eVTOL 10 may descend in the vertical direction or may descend obliquely downward.

The cruise may be referred to as horizontal flight. In the cruise, the eVTOL 10 may fly in a horizontal direction without moving in an upper-lower direction, or may fly in the horizontal direction while moving in the upper-lower direction. The hovering may be referred to as hovering flight. In the hovering, the eVTOL 10 may fly as if stopping at a predetermined position in the air, or the eVTOL 10 may deviate from a predetermined position in the upper-lower direction or the horizontal direction.

The flight mode of the eVTOL 10 includes lift. In the lift, the eVTOL 10 moves in the upper-lower direction. As the lift, the eVTOL 10 may ascend obliquely upward or may descend obliquely downward. The eVTOL 10 takes off vertically when lifting upward. The eVTOL 10 lands vertically when lifting downward.

The eVTOL 10 is a tilt-rotor aircraft. In the eVTOL 10, a tilt angle of the propeller 20 is adjustable. In the eVTOL 10, one propeller 20 can function as both a lift-propeller and a cruise-propeller. For example, when the eVTOL 10 is to lift, the tilt angle is adjusted such that the propeller 20 functions as a lift-rotor. When the eVTOL 10 is to cruise, the tilt angle is adjusted such that the propeller 20 functions as a cruiserotor. The eVTOL 10 may not be a tilt-rotor aircraft. For example, the eVTOL 10 may include the lift-propeller 20 and the cruise-propeller 20 which are separated.

The eVTOL 10 includes a battery 31, a distributor 32, a communication unit 34, a flight control device 40, and EPUs 50. The battery 31, the distributor 32, the communication unit 34, the flight control device 40, and the EPU 50 are included in the propulsion system 30. The propulsion system 30 may include at least the flight control device 40 and the EPU 50. The flight control device 40 may be referred to as a flight controller.

The battery 31 is electrically connected to the EPU 50. The battery 31 is a power supplying unit that supplies electric power to the EPU 50, and corresponds to a power supply unit. The battery 31 is a DC voltage source that applies a DC voltage to the EPU 50. The batteries 31 include a rechargeable secondary battery. Examples of the secondary battery include a lithium-ion battery and a nickel-hydrogen battery. The battery 31 can store electric power and corresponds to a power storage device. As the power supply unit, a fuel cell, a generator, or the like may be used in addition to or instead of the battery 31.

The distributor 32 is electrically connected to the battery 31 and multiple EPUs 50. The distributor 32 distributes the electric power from the battery 31 to the multiple EPUs 50. The battery 31 is electrically connected to the multiple EPUs 50 via the distributor 32. The battery 31 supplies the electric power to the EPUs 50 via the distributor 32.

The communication unit 34 is a communication device capable of wirelessly communicating with an external device. The external device is a device located at a position away from the eVTOL 10. Examples of the external device include a communication device provided in an external facility on the ground and a communication device provided in another flight vehicle. Examples of the external facility include a control center, and a management center. The communication unit 34 can communicate with the flight control device 40. The communication unit 34 is connected to the flight control device 40 to be capable of performing wired communication. The communication unit 34 may wirelessly communicate with the flight control device 40.

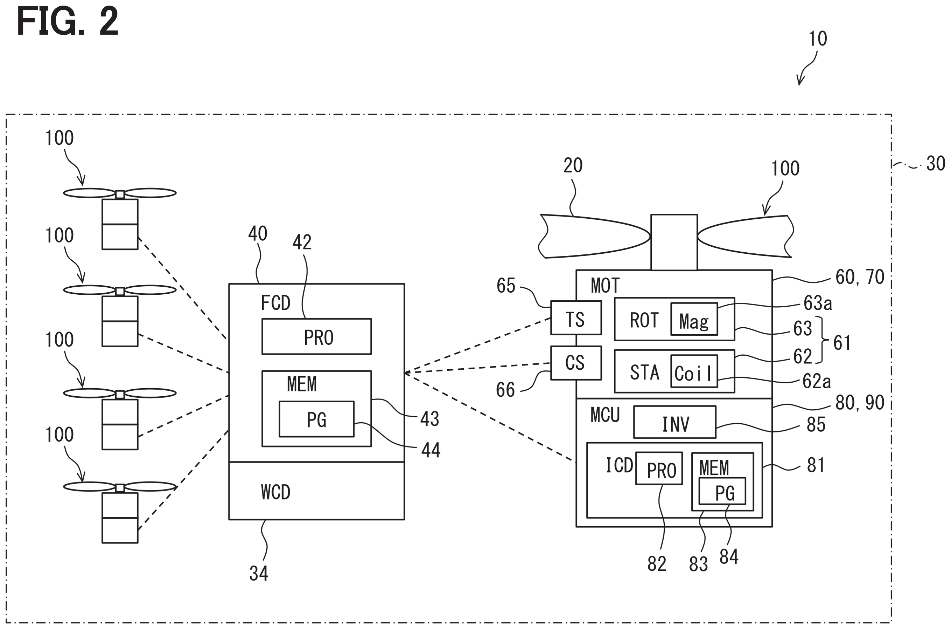

In FIGS. 1 and 2, the EPU 50 is a device that is driven to drive the propeller 20 to rotate, and corresponds to a drive device. The EPU is an abbreviation of electric propulsion unit. The EPU 50 may be referred to as a power drive device or a power drive system. The EPU 50 is provided individually for each of the multiple propellers 20. The EPU 50 is aligned with the propeller 20 along the propeller axis. All of the multiple EPUs 50 are fixed on the airframe 11. The EPU 50 rotatably supports the propeller 20. The EPU 50 is connected to the propeller 20. The propeller 20 is fixed to the airframe 11 with the EPU 50 interposed therebetween.

As shown in FIG. 2, the eVTOL 10 includes propulsion devices 100. Each of the propulsion devices 100 includes the propeller 20 and the EPU 50. The propulsion device 100 is a device for propelling the eVTOL 10. The propulsion device 100 rotates the propeller 20 to cause the eVTOL 10 to fly. The eVTOL 10 is also a moving object that moves using the propulsion devices 100. Multiple propulsion devices 100 are provided on the eVTOL 10. One propulsion device 100 includes one propeller 20 and one EPU 50 for driving the propeller 20. In the propeller 20 and the EPU 50, the EPU 50 alone may be referred to as the propulsion device 100.

The EPU 50 includes a motor device 60 and an inverter device 80. The motor device 60 includes a motor 61 and a motor housing 70. The motor housing 70 is a case and accommodates the motor 61. The motor 61 is a multi-phase AC motor. The motor 61 is a rotary electric machine of a multi-phase AC type. The motor 61 is a flight driving source of the eVTOL 10 and functions as an electric motor. The motor 61 drives and rotates the propeller 20 to enable the eVTOL 10 to fly. The motor 61 is a flight-motor causing the eVTOL 10 to fly. The EPU 50 drives the propeller 20 to rotate by driving the motor 61. As the motor 61, for example, a brushless motor is used.

The motor 61 includes a motor stator 62 and a motor rotor 63. The motor 61 includes the motor stator 62. The motor stator 62 is a stator and is fixed to the motor housing 70. The motor rotor 63 is rotated relative to the motor stator 62. The motor 61 is, for example, an axial gap-type motor. In the motor 61, the motor stator 62 and the motor rotor 63 are arranged along an axial direction. The motor 61 includes a motor shaft that rotates together with the motor rotor 63. The motor shaft is rotatably supported by the motor housing 70 and the like.

The motor 61 is driven when electric power is supplied to the motor stator 62. The motor stator 62 includes a stator coil 62a. The stator coil 62a is a multi-phase coil. The stator coil 62a forms an armature. When the electric power is supplied to the motor stator 62, a current flows through the stator coil 62a, and thus the motor rotor 63 is rotated.

The motor rotor 63 includes a rotor magnet 63a. The rotor magnet 63a generates a field magnet. The rotor magnet 63a is a permanent magnet. The rotor magnet 63a is implemented by a rare-earth magnet, a ferrite magnet, or the like. For example, the rotor magnet 63a is implemented by a neodymium magnet. In the rotor magnet 63a, thermal demagnetization may occur. In the rotor magnet 63a, as a temperature of the rotor magnet 63a increases, a magnetic force tends to decrease due to the thermal demagnetization.

Examples of demagnetization occurring in the rotor magnet 63a include reversible demagnetization and irreversible demagnetization. The reversible demagnetization and the irreversible demagnetization may occur due to the thermal demagnetization of the rotor magnet 63a. In the thermal demagnetization, the magnetic force of the rotor magnet 63a decreases due to heat. When the reversible demagnetization of the rotor magnet 63a occurs due to the thermal demagnetization, an amount of demagnetization due to the reversible demagnetization tends to increase as the temperature of the rotor magnet 63a increases. That is, as the temperature of the rotor magnet 63a increases, the magnetic force of the rotor magnet 63a tends to decrease due to the reversible demagnetization. In this case, when the temperature of the rotor magnet 63a returns to a reference temperature such as a room temperature, the magnetic force of the rotor magnet 63a is restored to an original state.

When the irreversible demagnetization occurs in the rotor magnet 63a due to the thermal demagnetization, an amount of demagnetization due to the irreversible demagnetization tends to increase as the temperature of the rotor magnet 63a increases. That is, as the temperature of the rotor magnet 63a increases, the magnetic force of the rotor magnet 63a tends to decrease due to the irreversible demagnetization. When the irreversible demagnetization occurs in the rotor magnet 63a, even if the temperature of the rotor magnet 63a returns to the reference temperature such as the room temperature, the magnetic force of the rotor magnet 63a is not restored to the original state. As will be described later, in the rotor magnet 63a, the irreversible demagnetization is also likely to occur due to a motor current Im.

In the motor 61, a motor output changes according to the magnetic force of the rotor magnet 63a. The motor output is a parameter indicating an output of the motor 61. The motor output is, for example, an output torque of the motor 61. The output torque is a motor torque for rotating the motor rotor 63. In the motor 61, when the magnetic force of the rotor magnet 63a decreases, the motor output tends to decrease. For example, in the motor 61, the motor output tends to decrease as the irreversible demagnetization of the rotor magnet 63a progresses. For the rotor magnet 63a, the progress of irreversible demagnetization may be referred to as progress of deterioration.

The motor device 60 is a device of an air-cooling type. The motor device 60 includes motor fins. The motor fins release heat from the motor device 60 to external air. The motor fins are heat dissipation fins and are included in the motor housing 70. The motor fins are provided on an outer surface of the motor housing 70.

The inverter device 80 supplies electric power to the motor device 60 to drive the motor device 60. The inverter device 80 is a driving unit for driving the motor 61, and corresponds to a motor driving unit. The inverter device 80 includes an inverter circuit 85 and an inverter housing 90. The inverter housing 90 is a case and accommodates the inverter circuit 85. The inverter circuit 85 converts the electric power to be supplied to the motor 61. The inverter circuit 85 may be referred to as an inverter, a power conversion unit, or a control circuit. The inverter circuit 85 performs power conversion for each of the multiple phases. The motor 61 is driven in response to a voltage or a current supplied from the inverter circuit 85.

The inverter device 80 is a device of an air-cooling type. The inverter device 80 includes inverter fins. The inverter fins release heat from the inverter device 80 to the external air. The inverter fins are heat dissipation fins and are included in the inverter housing 90. The inverter fins are provided on an outer surface of the inverter housing 90.

The propulsion device 100 is a device of an air-cooling type. In the propulsion device 100, air cooling is possible using the motor fins and the inverter fins. In the propulsion device 100, a gas such as the external air may flow into the propulsion device 100. For example, the gas may pass through an interior of the motor housing 70 or an interior of the inverter housing 90. In the propulsion device 100 of an air cooling type, at least a part of the propulsion device 100 may be cooled by a gas such as air.

As shown in FIG. 2, the inverter device 80 includes an inverter control unit 81. The inverter control unit 81 performs a motor control via the inverter circuit 85. The motor control is a control for driving the motor 61. The inverter control unit 81 performs propulsion control. The propulsion control is a control for driving the propulsion device 100. The propulsion control includes the motor control. The propulsion control is also a control for controlling the EPU 50, and may be referred to as an EPU control.

The inverter control unit 81 includes, for example, an ECU. The ECU is an abbreviation of electronic control unit. The inverter control unit 81 includes a processor 82, a memory 83, and a program 84. The inverter control unit 81 is mainly implemented by a computer. The computer includes the processor 82, the memory 83, an input/output interface, and a bus connecting these components. The memory 83 stores the program 84. The program 84 is a program for performing the propulsion control. The program 84 corresponds to a propulsion control program.

The processor 82 is hardware for performing an arithmetic process coupled to the memory 83. The processor 82 executes various processes by accessing the memory 83. The memory 83 is a storage medium that stores a control program and the like. For example, the memory 83 is a non-transitory tangible storage medium that non-temporarily stores computer-readable programs and data. The non-transitory tangible storage medium is a non-transitory tangible storage medium, and is implemented by a semiconductor memory, a magnetic disk, or the like. The program 84 includes computer-readable instructions for causing the processor 82 to execute various functions. The processor 82 is a processing unit that executes predetermined processing by executing the instructions in the program 84.

The inverter control unit 81 performs the motor control according to a required output. The required output is a motor output required by the inverter control unit 81. Examples of the required output include a required torque required for the output torque. The required output is included in a command signal or the like output from the flight control device 40 to the inverter control unit 81. The inverter control unit 81 adjusts the motor output according to the required output. The required output and the required torque may be referred to as a target output and a target torque. As the motor output, a torque, a current, a voltage, a motor rotation speed, or the like may be used.

The inverter control unit 81 performs the motor control using the command signal from the flight control device 40, detection signals from various sensors, and the like. The various sensors are communicably connected to the inverter control unit 81. Examples of the various sensors include a motor sensor, a battery sensor, and an inverter sensor. The battery sensor is a temperature sensor or the like provided in the battery 31. The inverter sensor is a temperature sensor or the like provided in the inverter device 80.

Examples of the motor sensor include a temperature sensor 65 and a current sensor 66. The temperature sensor 65 is provided in the motor device 60. The temperature sensor 65 detects a temperature of the motor 61. Examples of the temperature of the motor 61 include the temperature of the rotor magnet 63a and a temperature of the stator coil 62a. The temperature sensor 65 can detect at least the temperature of the rotor magnet 63a. The temperature sensor 65 outputs a detection signal corresponding to the temperature of the rotor magnet 63a. The temperature sensor 65 outputs the detection signal to the inverter control unit 81. The temperature sensor 65 may detect a temperature of the motor device 60 such as the motor housing 70.

The current sensor 66 is provided in the motor device 60. The current sensor 66 detects a current flowing through the motor 61. For example, the current sensor 66 detects a current flowing through the stator coil 62a. The current sensor 66 outputs a detection signal corresponding to the current flowing through the stator coil 62a. The current sensor 66 outputs the detection signal to the inverter control unit 81.

The flight control device 40 is communicably connected to the inverter control unit 81. The flight control device 40 and the inverter control unit 81 may wirelessly communicate with each other. The flight control device 40 performs an integrated control for driving the multiple propulsion devices 100 integrally. In the integrated control, the propulsion control performed by each of the multiple inverter control units 81 is integrated. The flight control device 40 performs a flight control. The flight control is a control for causing the eVTOL 10 to fly. The flight control device 40 controls the propulsion system 30 and the EPU 50 as the flight control. The flight control is also a control for propelling the eVTOL 10, and may be referred to as the propulsion control. The flight control device 40 corresponds to a propulsion control device.

The flight control device 40 includes, for example, an ECU. The flight control device 40 includes a processor 42, a memory 43, and a program 44. The flight control device 40 is mainly implemented by a computer. The computer includes the processor 42, the memory 43, an input/output interface, and a bus connecting these components. The memory 43 stores the program 44. The program 44 is a program for performing the flight control.

The processor 42 is hardware for performing an arithmetic process coupled to the memory 43. The processor 42 executes various processes by accessing the memory 43. The memory 43 is a storage medium that stores a control program and the like. For example, the memory 43 is a non-transitory tangible storage medium that non-temporarily stores computer-readable programs and data. The program 44 includes computer-readable instructions for causing the processor 42 to execute various functions. The processor 42 is a processing unit that executes predetermined processing by executing the instructions in the program 44.

The flight control device 40 outputs information necessary for the propulsion control to the inverter control unit 81. The flight control device 40 is a host ECU for the inverter control unit 81. The flight control device 40 individually controls the multiple propulsion devices 100 according to a flight mode or the like of the eVTOL 10. The flight control device 40 is capable of individually adjusting, for each of the propulsion devices 100, an output of the propulsion device 100. For example, the flight control device 40 outputs the required output to each of the multiple propulsion devices 100. The required output is an output required by the propulsion device 100. Examples of the required output include a required torque required for the motor 61. As the required output, the torque, the current, the voltage, a propeller rotation speed, or the like may be used.

The flight control device 40 performs the flight control according to a flight state of the eVTOL 10, the detection signals from various sensors, and the like. Examples of the flight state of the eVTOL 10 include the flight mode and a flight attitude of the eVTOL 10. The various sensors are communicably connected to the flight control device 40. The temperature sensor 65 and the current sensor 66 serving as the various sensors are communicably connected to both the inverter control unit 81 and the flight control device 40. The temperature sensor 65 and the current sensor 66 output the detection signals to the flight control device 40. The temperature sensor 65 and the current sensor 66 may be directly connected to the flight control device 40, or may be indirectly connected to the flight control device 40 via the inverter control unit 81 or the like.

The flight control device 40 detects a motor temperature Tm using the detection signal of the temperature sensor 65. The motor temperature Tm is the temperature of the motor device 60. The motor temperature Tm is a temperature corresponding to a magnet temperature. The magnet temperature is the temperature of the rotor magnet 63a. In the present embodiment, the magnet temperature is detected as the motor temperature Tm. For example, the flight control device 40 calculates the motor temperature Tm by correcting the detection signal of the temperature sensor 65 such that the temperature of the rotor magnet 63a can be detected as the motor temperature Tm.

The flight control device 40 detects the motor current Im using the detection signal of the current sensor 66. The motor current Im is a current flowing through the motor 61. For example, the motor current Im is a current flowing through the stator coil 62a. The flight control device 40 detects the motor current Im for the stator coil 62a of at least one phase. In the motor control, the motor current tends to increase as the required torque required for the motor 61 increases. As the motor current increases, the output torque of the motor 61 is likely to increase.

In FIG. 2, the motor device 60 is illustrated as MOT, the motor stator 62 is illustrated as STA, and the motor rotor 63 is illustrated as ROT. The stator coil 62a is illustrated as Coil, the rotor magnet 63a is illustrated as Mag, the temperature sensor 65 is illustrated as TS, and the current sensor 66 is illustrated as CS. The inverter device 80 is illustrated as MCU, the inverter circuit 85 is illustrated as INV, and the inverter control unit 81 is illustrated as ICD. The processor 82 is illustrated as PRO, the memory 83 is illustrated as MEM, and the program 84 is illustrated as PG. The flight control device 40 is illustrated as FCD, the processor 42 is illustrated as PRO, the memory 43 is illustrated as MEM, the program 44 is illustrated as PG, and the communication unit 34 is illustrated as WCD.

In the motor 61, a state of the rotor magnet 63a changes according to a state of the motor 61. The state of the motor 61 changes according to the motor temperature $Tm$ and the motor current $Im$. For example, when the motor temperature $Tm$ is too high, an abnormality of the rotor magnet 63a is likely to occur. In a range in which the motor temperature $Tm$ is not too high, no abnormality occurs in the rotor magnet 63a, but the irreversible demagnetization of the rotor magnet 63a may occur. For example, in the range in which the motor temperature $Tm$ is not too high, the irreversible demagnetization of the rotor magnet 63a is more likely to occur as a value of at least one of the motor temperature $Tm$ and the motor current $Im$ increases. In particular, as values of both the motor temperature $Tm$ and the motor current $Im$ increase, the irreversible demagnetization of the rotor magnet 63a is more likely to occur. In the present embodiment, the irreversible demagnetization may be simply referred to as demagnetization.

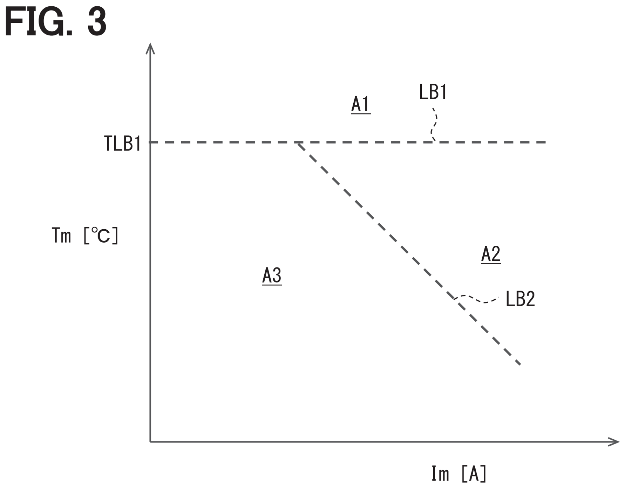

In the present embodiment, multiple state regions for indicating the state of the motor 61 are set for the motor temperature $Tm$ and the motor current $Im$. As shown in FIG. 3, the multiple state regions include an abnormal region A1, a demagnetization region A2, and a general region A3. The abnormal region A1 is a region indicating that an abnormality is likely to occur in the rotor magnet 63a. The abnormal region A1 is also a region indicating that the motor temperature $Tm$ rises to an extent corresponding to the abnormality of the rotor magnet 63a or the motor 61. When the state of the motor 61 is continuously in the abnormal region A1, there is a risk or a possibility that an abnormality occurs in the rotor magnet 63a or the motor 61 even if a duration is short. As the duration gets longer, the risk or possibility of occurrence of an abnormality in the rotor magnet 63a or the motor 61 increases.

The demagnetization region A2 and the general region A3 are regions indicating that the abnormality of the rotor magnet 63a is less likely to occur as compared with in the abnormal region A1. The demagnetization region A2 and the general region A3 are regions indicating that the rotor magnet 63a is normal, and may be referred to as a normal region. The demagnetization region A2 and the general region A3 are also regions indicating that the motor temperature $Tm$ does not rise to the extent corresponding to the abnormality of the rotor magnet 63a or the motor 61. The demagnetization region A2 and the general region A3 are regions different from the abnormal region A1 and are regions indicating that the motor temperature $Tm$ is lower than that in the abnormal region A1.

The general region A3 is a region in which the demagnetization of the rotor magnet 63a is less likely to occur than in the demagnetization region A2 within a range not corresponding to the abnormality of the rotor magnet 63a. When the state of the motor 61 is in the general region A3, the demagnetization of the rotor magnet 63a is less likely to occur.

The demagnetization region A2 is a region indicating that the demagnetization of the rotor magnet 63a is likely to occur within the range not corresponding to the abnormality of the rotor magnet 63a. In the motor 61, when the rotor magnet 63a is in the demagnetization region A2, the demagnetization of the rotor magnet 63a gradually proceeds. For example, when the rotor magnet 63a is implemented by a neodymium magnet, and the state of the motor 61 is in a high-temperature large-current region such as the demagnetization region A2, demagnetization of the neodymium magnet tends to progress significantly. In the motor 61, as an accumulated demagnetization time increases, the demagnetization of the rotor magnet 63a is more likely to progress. The magnetic force of the rotor magnet 63a is likely to decrease as the demagnetization progresses. The accumulated demagnetization time is a value obtained by accumulating a time during which the state of the motor 61 is in the demagnetization region A2. The accumulated demagnetization time is a value obtained by summing all times during which the state of the motor 61 is in the demagnetization region A2 after the eVTOL 10 is manufactured. The time during which the state of the motor 61 is in the abnormal region A1 or the general region A3 is not included in the accumulated demagnetization time.

A first boundary line LB1 and a second boundary line LB2 are present for the abnormal region A1, the demagnetization region A2, and the general region A3. The first boundary line LB1 indicates a boundary between the abnormal region A1 and the demagnetization region A2 and the general region A3. The first boundary line LB1 indicates that a boundary between the abnormal region A1 and the normal region is an upper limit temperature TLB1. The upper limit temperature TLB1 is an upper limit value of the normal region. The first boundary line LB1 extends parallel to an axis of the motor current $Im$.

The second boundary line LB2 indicates a boundary between the demagnetization region A2 and the general region A3 in the normal region. The second boundary line LB2 extends to be inclined with respect to both the axis of the motor current $Im$ and an axis of the motor temperature $Tm$. For example, the second boundary line LB2 extends such that the state of the motor 61 is more likely to be included in the demagnetization region A2 as the value of at least one of the motor temperature $Tm$ and the motor current $Im$ increases. In the motor 61, even if the motor temperature $Tm$ is low, the demagnetization of the rotor magnet 63a is likely to occur when the motor current $Im$ is large. Even if the motor current $Im$ is small, the demagnetization of the rotor magnet 63a is likely to occur when the motor temperature $Tm$ is high.

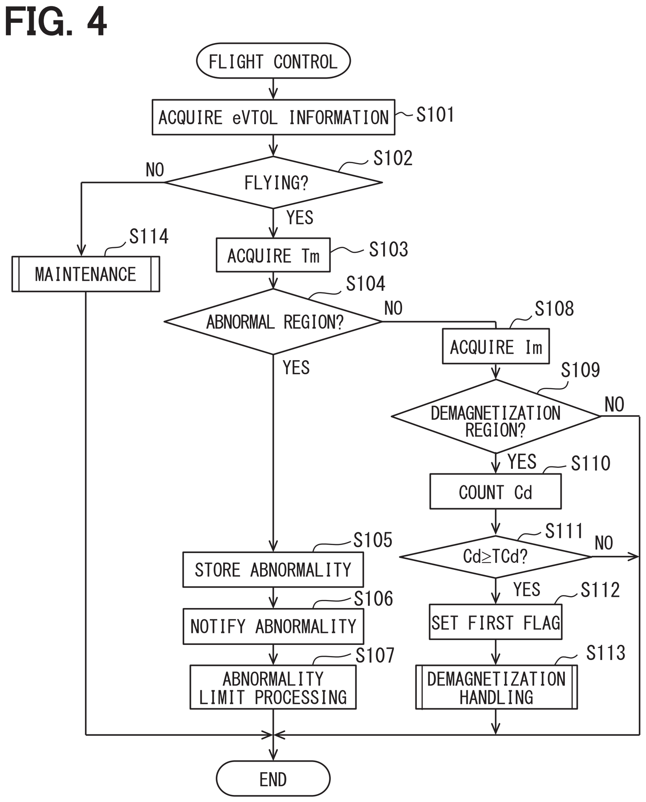

The flight control device 40 performs a flight control process. The flight control process will be described with reference to a flowchart of FIG. 4. The flight control device 40 repeatedly performs the flight control process at a predetermined control cycle.

As shown in FIG. 4, the flight control device 40 acquires eVTOL information in step S101. The eVTOL information is information indicating a state of the eVTOL 10. Examples of the eVTOL information include information indicating the flight state of the eVTOL 10, and information indicating a state of each of the multiple propulsion devices 100. The information indicating the state of the propulsion device 100 includes the detection signals of the temperature sensor 65 and the current sensor 66. Examples of the eVTOL information include information input from an external device to the flight control device 40 via the communication unit 34.

In step S102, the flight control device 40 determines whether the eVTOL 10 is flying. For example, it is determined that the eVTOL 10 is flying after take-off of the eVTOL 10 is started or before landing is completed. It is determined that the eVTOL 10 is not flying during preparation for the take-off of the eVTOL 10 or after the landing is completed.

When the eVTOL 10 is flying, the flight control device 40 individually performs processing in steps S103 to S113 for each of the multiple propulsion devices 100. In the present embodiment, steps S103 to S111 performed for one propulsion device 100 will be described basically. It is assumed that the processing in steps S103 to S111 is completed for other propulsion devices 100.

In step S103, the flight control device 40 acquires the motor temperature Tm by detection or calculation. The motor temperature Tm is a parameter indicating a driving state of the motor 61 and corresponds to driving information. A function of performing the processing in step S103 in the flight control device 40 corresponds to an information acquisition unit.

In step S104, the flight control device 40 determines whether the state of the motor 61 is in the abnormal region A1. For example, the flight control device 40 determines whether the motor temperature Tm is higher than the upper limit temperature TLB1. When the motor temperature Tm is higher than the upper limit temperature TLB1, the flight control device 40 determines that the state of the motor 61 is in the abnormal region A1.

When the state of the motor 61 is in the abnormal region A1, the flight control device 40 performs an abnormality handling process in steps S105 to S107. The abnormality handling process is a process for handling the abnormality of the rotor magnet 63a. The flight control device 40 performs abnormality storage processing in step S105. In the abnormality storage processing, processing for storing, in the memory 43 or the like, a fact that the state of the motor 61 is in the abnormal region A1 is performed. In the abnormality storage processing, it is stored that the motor temperature Tm rises to the extent corresponding to the abnormality of the rotor magnet 63a or the motor 61. For example, in the abnormality storage processing, an abnormality flag is set in a management storage unit or the like. The abnormality flag is a flag for indicating that the state of the motor 61 is in the abnormal region A1.

The management storage unit includes a volatile memory and a nonvolatile memory. Examples of the volatile memory include a RAM. The RAM is an abbreviation of random access memory. Examples of the nonvolatile memory include the memories 43, 83. A flag such as the abnormality flag is stored in the nonvolatile memory. Storage data such as the flag stored in the nonvolatile memory of the management storage unit does not disappear even when a power source of the eVTOL 10 is turned off, and remains in the management storage unit when the power source of the eVTOL 10 is turned on again. The flag such as the abnormality flag may be stored in the volatile memory such as the RAM.

The flight control device 40 performs abnormality notification processing in step S106. In the abnormality notification processing, processing for notifying that the state of the motor 61 is in the abnormal region A1 is performed. In the abnormality notification processing, the pilot, the external facility, or the like is notified that the motor temperature Tm rises to the extent corresponding to the abnormality of the rotor magnet 63a or the motor 61. Notifying various types of information may be referred to as issuing a notification of various types of information.

The flight control device 40 performs abnormality limit processing in step S107. In the abnormality limit processing, processing for limiting the motor current Im is performed. For example, by performing processing for reducing the motor current Im, the motor temperature Tm is likely to decrease, and the state of the motor 61 is likely to transition from the abnormal region A1 to the normal region. That is, the abnormality of the rotor magnet 63a or the motor 61 tends to be eliminated. For example, in the abnormality limit processing, the motor current Im is cut off.

When the state of the motor 61 is not in the abnormal region A1, the flight control device 40 proceeds to step S108. In step S108, the flight control device 40 acquires the motor current Im by detection or calculation. The motor current Im is a parameter indicating the driving state of the motor 61 and corresponds to the driving information. A function of performing the processing in step S108 in the flight control device 40 corresponds to the information acquisition unit.

In steps S109 to S113, the flight control device 40 performs management processing for managing the demagnetization of the rotor magnet 63a. In the management processing, a demagnetization state of the rotor magnet 63a is managed. The demagnetization state indicates a state of demagnetization in the rotor magnet 63a, such as whether the demagnetization of the rotor magnet 63a occurs. The demagnetization state includes a demagnetization degree of the rotor magnet 63a. The demagnetization degree is a degree indicating how much the demagnetization of the rotor magnet 63a progresses. The demagnetization degree may be referred to as a deterioration degree of the rotor magnet 63a. A function of performing the processing in steps S109 to S113 in the flight control device 40 corresponds to a demagnetization management unit.

In step S109, the flight control device 40 determines whether the state of the motor 61 is in the demagnetization region A2. In the determination, the motor temperature Tm and the motor current Im are used. Specifically, the flight control device 40 determines whether a current state of the motor 61 is in the demagnetization region A2. In the determination, the motor temperature Tm and the motor current Im acquired in steps S103 and S108 in the flight control process of this time are used as a current motor temperature Tm and current motor current Im.

When the state of the motor 61 is in the demagnetization region A2, the flight control device 40 proceeds to step S110. In step S110, the flight control device 40 counts a demagnetization counter Cd. The flight control device 40 adds a predetermined addition value to the demagnetization counter Cd. The addition value may be referred to as a count-up amount. For example, the flight control device 40 sets the addition value to 1 and increments the demagnetization counter Cd by 1. A counter value of the demagnetization counter Cd indicates the accumulated demagnetization time. The flight control device 40 acquires the demagnetization degree of the rotor magnet 63a by counting the demagnetization counter Cd. As the counter value of the demagnetization counter Cd increases, the demagnetization of the rotor magnet 63a tends to progress. The demagnetization counter Cd is set in the management storage unit. The demagnetization counter Cd may be counted as a RAM value of the management storage unit.

The counter value of the demagnetization counter Cd includes motor history information. For example, the count value of the demagnetization counter Cd corresponds to the motor history information. The motor history information is information indicating a past state of the motor 61 as a history. The motor history information is information indicating a history of the motor 61 regarding a past flight control process performed before this time. The history of the motor 61 includes a history of the motor temperature Tm and a history of the motor current Im. The history of the motor temperature Tm includes information indicating that the motor temperature Tm is a temperature higher than the second boundary line LB2 when the state of the motor 61 is in the demagnetization region A2. The history of the motor current Im includes information indicating that the motor current Im is larger than the second boundary line LB2 when the state of the motor 61 is in the demagnetization region A2. A function of performing the processing in step S110 in the flight control device 40 corresponds to a history acquisition unit. In steps S109 to S113, the flight control device 40 manages the demagnetization of the rotor magnet 63a using the counter value of the demagnetization counter Cd.

In step S111, the flight control device 40 determines whether the demagnetization counter Cd reaches a counter threshold TCd. The counter threshold TCd is a value determined in advance by a test or the like, and is stored in the management storage unit. The counter threshold TCd is a value indicating that the demagnetization counter Cd is counted such that the demagnetization of the rotor magnet 63a progresses to a certain extent.

In steps S109 to S111, the flight control device 40 determines whether the accumulated demagnetization time reaches a threshold time. In step S109, the state of the motor 61 being in the demagnetization region A2 corresponds to a state in which a condition causing the demagnetization of the rotor magnet 63a is satisfied. In step S110, the counter value of the demagnetization counter Cd corresponds to an accumulated driving time of the motor 61 in the state in which the condition causing the demagnetization of the rotor magnet 63a is satisfied. In step S111, the counter threshold TCd corresponds to the threshold time. A function of performing the processing in steps S109 to S111 in the flight control device 40 corresponds to an accumulation determination unit. In steps S109 to S113, the flight control device 40 manages the demagnetization of the rotor magnet 63a using the determination results of steps S109 to S111.

In step S109, when the state of the motor 61 is not in the demagnetization region A2, the flight control device 40 determines that the demagnetization of the rotor magnet 63a is less likely to occur, and ends the flight control process as it is. In step S111, when the demagnetization counter Cd does not reach the counter threshold TCd, the flight control device 40 determines that the demagnetization of the rotor magnet 63a does not progress so much, and ends the flight control process as it is.

When the demagnetization counter Cd reaches the counter threshold TCd, the flight control device 40 proceeds to step S112. In step S112, the flight control device 40 sets a first flag in the management storage unit. The first flag is a flag indicating that the demagnetization counter Cd reaches the counter threshold TCd. The first flag is a flag indicating that the demagnetization of the rotor magnet 63a may have progressed to a certain extent.

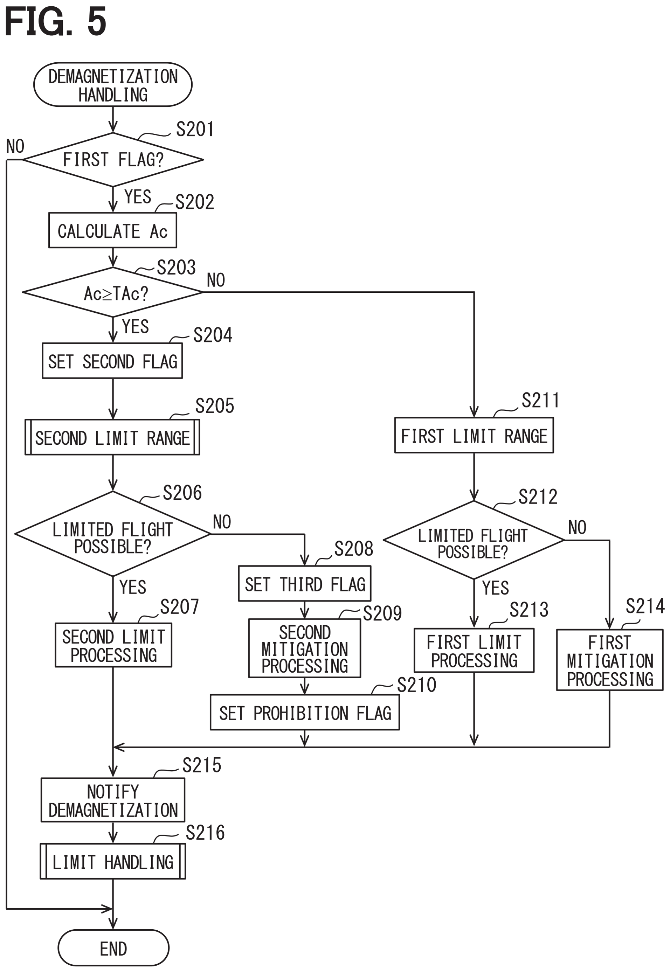

In step S113, the flight control device 40 performs a demagnetization handling process. The demagnetization handling process will be described with reference to a flowchart shown in FIG. 5. In step S201 shown in FIG. 5, the flight control device 40 determines whether the first flag is set.

When the first flag is set, the flight control device 40 proceeds to step S202 and calculates a correction amount Ac. The flight control device 40 performs the motor control on the motor 61 such that the motor output such as the output torque becomes the target output such as the target torque. In the motor control, a feedback control, a learning control, or the like is performed on the motor current Im such that the motor output becomes the target output. In the motor control, the correction amount Ac is calculated such that the motor output becomes the target output, and the correction amount Ac is used to control the motor current Im. For example, in the motor control, a target current is calculated using the target output, and the motor current Im is controlled by correcting the target current with the correction amount Ac. The target current is a target value of the motor current Im, and is calculated according to the target output using a map, an arithmetic formula, or the like. The motor output is calculated using the motor current Im or the like. For the motor 61, the motor output corresponds to an output value, and the target output corresponds to a target value. The target current may be referred to as a control initial value.

In the motor 61, the correction amount Ac tends to increase as the demagnetization of the rotor magnet 63a progresses. For example, as the demagnetization of the rotor magnet 63a progresses, the magnetic force of the rotor magnet 63a tends to be insufficient. When the magnetic force of the rotor magnet 63a is insufficient, the motor current Im tends to increase to compensate for the insufficient magnetic force in the motor control.

In step S203, the flight control device 40 determines whether the correction amount Ac is equal to or greater than a correction threshold TAc. The correction threshold TAc is a value determined in advance by a test or the like, and is stored in the memory 43 or the like. Determining whether the correction amount Ac is equal to or greater than the correction threshold TAc corresponds to determining whether the correction amount Ac is excessive and determining whether a magnetic force insufficiency condition is satisfied for the rotor magnet 63a. The insufficiency condition is a condition indicating that the magnetic force is insufficient due to the progress of the demagnetization in the rotor magnet 63a. The correction amount Ac being equal to or greater than the correction threshold TAc corresponds to the correction amount Ac being excessive and the magnetic force insufficiency condition for the rotor magnet 63a is satisfied. A function of performing the processing in step S203 in the flight control device 40 corresponds to a correction determination unit and a progress determination unit.

When the correction amount Ac is equal to or greater than the correction threshold TAc, the flight control device 40 proceeds to step S204 and sets a second flag in the management storage unit. The second flag is a flag indicating that the correction amount Ac is equal to or greater than the correction threshold TAc. The second flag is a flag indicating that the demagnetization of the rotor magnet 63a progresses to a certain extent.

In step S205, the flight control device 40 performs a second limit range process. The second limit range process is a process for adjusting, according to the motor temperature Tm, a limit range for limiting the motor current Im. By adjusting the limit range of the motor current Im, a limit degree for limiting the motor current Im is adjusted. For example, in the second limit range process, a current limit value that limits a maximum value of the motor current Im is set. The current limit value is set to a value corresponding to the limit degree of the motor current Im. The current limit value is set to a smaller value as the limit degree of the motor current Im increases. For example, the current limit value is set with respect to the target current. The current limit value limits the maximum value of the motor current Im by limiting a maximum value of the target current.

In the second limit range process, the motor output or the output torque is limited by the current limit value by setting the current limit value for the motor current Im. In the second limit range process, an output limit value for limiting the motor output or a torque limit value for limiting the output torque may be set. Even in a configuration in which the output limit value or the torque limit value is set, the motor current Im is still limited.

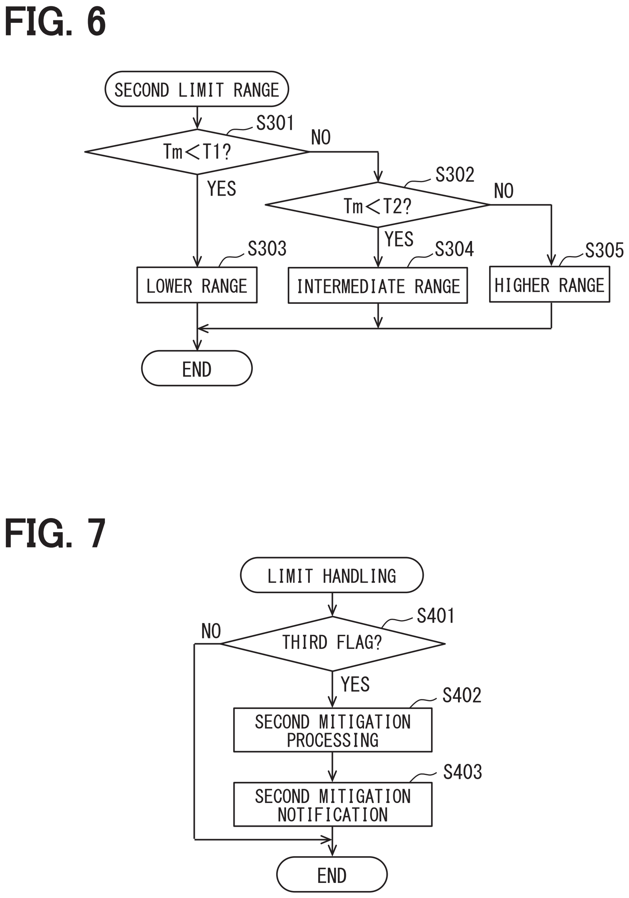

The second limit range process will be described with reference to a flowchart shown in FIG. 6. In steps S301 and S302 shown in FIG. 6, the flight control device 40 determines the motor temperature Tm is in which of multiple temperature ranges. The multiple temperature ranges include a lower range, an intermediate range, and a higher range. The lower range is a temperature range lower than the intermediate range. The higher range is a temperature range higher than the intermediate range.

In step S301, the flight control device 40 determines whether the motor temperature Tm is lower than a first temperature threshold T1. The first temperature threshold T1 is a value determined in advance by a test or the like, and is stored in the memory 43 or the like. The flight control device 40 determines whether the motor temperature Tm is in the lower range by determining whether the motor temperature Tm is lower than the first temperature threshold T1. When the motor temperature Tm is lower than the first temperature threshold T1, the flight control device 40 determines that the motor temperature Tm is in the lower range.

When the motor temperature Tm is not lower than the first temperature threshold T1 in step S301, the flight control device 40 determines whether the motor temperature Tm is lower than a second temperature threshold T2 in step S302. The second temperature threshold T2 is set to a value larger than the first temperature threshold T1. The second temperature threshold T2 is a value determined in advance by a test or the like, and is stored in the memory 43 or the like. When the motor temperature Tm is equal to or higher than the first temperature threshold T1, the flight control device 40 determines whether the motor temperature Tm is in the intermediate range by determining whether the motor temperature Tm is lower than the second temperature threshold T2. When the motor temperature Tm is equal to or higher than the first temperature threshold T1 and lower than the second temperature threshold T2, the flight control device 40 determines that the motor temperature Tm is in the intermediate range.

When the motor temperature Tm is lower than the first temperature threshold T1, the flight control device 40 proceeds to step S303 and performs lower range processing. In the lower range processing, the limit degree of the motor current Im is adjusted according to the motor temperature Tm being in the lower range. In the lower range processing, the limit degree of the motor current Im is set to be low. For example, in the lower range processing, the limit degree is set such that the motor current Im is not limited. In this case, the flight control device 40 sets the current limit value to a maximum output value of the motor current Im. The maximum output value is a maximum value of the motor current Im in a range that can be output by the motor 61. For example, the maximum output value is a value determined according to a rated output of the motor 61. In this case, the flight control device 40 may not limit the motor current Im by not setting the current limit value.

When the motor temperature Tm is equal to or higher than the first temperature threshold T1 and lower than the second temperature threshold T2, the flight control device 40 proceeds to step S304 and performs intermediate range processing. In the intermediate range processing, the limit degree of the motor current Im is set according to the motor temperature Tm being in the intermediate range. The limit degree of the motor current Im in the intermediate range processing is set to be stricter than the limit degree of the motor current Im in the lower range processing. For example, in the intermediate range processing, the limit degree is set such that the motor current Im is limited. In this case, the flight control device 40 sets the current limit value to a value smaller than the maximum output value of the motor current Im and larger than zero. For example, the current limit value is set to a value such as 50% of the maximum output value. The current limit value may be variably set according to the motor temperature Tm in a range smaller than the maximum output value and larger than zero.

When the motor temperature Tm is higher than or equal to the second temperature threshold T2, the flight control device 40 proceeds to step S305 and performs higher range processing. In the higher range processing, the limit degree of the motor current Im is set according to the motor temperature Tm being in the higher range. The limit degree of the motor current Im in the higher range processing is set to be stricter than the limit degree of the motor current Im in the intermediate range processing. For example, in the higher range processing, the limit degree is set such that the motor current Im is cut off. In this case, the flight control device 40 sets the current limit value to zero. That is, the flight control device 40 sets the current limit value such that the driving of the motor 61 is stopped.

Returning to FIG. 5, in step S206, the flight control device 40 determines whether limited flight of the eVTOL 10 is possible. The limited flight means that the eVTOL 10 flies in a state in which the motor current Im is limited to the current limit value. Examples of the case where the limited flight of the eVTOL 10 is possible include a case where the target current for the motor current Im is smaller than the current limit value. In this case, even if the current limit value is set, the motor current Im is not limited by the current limit value, so that the limited flight of the eVTOL 10 is possible. Examples of the case where the limited flight of the eVTOL 10 is possible include a case where the eVTOL 10 can fly by driving other propulsion devices 100 in which the second flag is not set. In this case, the flight control device 40 performs processing for performing the limited flight of the eVTOL 10, such as processing of changing the target output or the target torque for other propulsion devices 100.

When the limited flight of the eVTOL 10 is possible, the flight control device 40 proceeds to step S207 and performs second limit processing. The second limit processing is processing for limiting the motor current Im. In the second limit processing, the motor control is performed in a state in which the motor current Im is limited by the current limit value. The flight control device 40 adjusts the limit degree of the motor current Im according to the motor temperature Tm using the current limit value set in step S205. The flight control device 40 can limit the motor current Im by performing the second limit processing when the magnetic force insufficiency condition is satisfied for the rotor magnet 63a. A function of performing the processing in steps S205 and S207 in the flight control device 40 corresponds to a temperature handling unit and a current limit unit.

The second limit processing will be described. For example, when the motor temperature Tm is in the lower range, the flight control device 40 limits the motor current Im using the current limit value set in step S303. In this case, since the current limit value is set to the maximum output value, the motor current Im is not limited by the current limit value. Therefore, the flight control device 40 does not limit the motor current Im in steps S207 and S303. A function of performing the processing in steps S207 and S303 in the flight control device 40 corresponds to a non-limit unit.

When the motor temperature Tm is in the intermediate range, the flight control device 40 limits the motor current Im using the current limit value set in step S304. In this case, the current limit value is set to a value smaller than the maximum output value and larger than zero. Therefore, in steps S207 and S304, the flight control device 40 limits the motor current Im with the current limit value so as not to be cut off. A function of performing the processing in steps S207 and S304 in the flight control device 40 corresponds to a specific limit unit.

When the motor temperature Tm is in the higher range, the flight control device 40 limits the motor current Im using the current limit value set in step S305. In this case, the current limit value is set to zero. Therefore, in steps S207 and S305, the flight control device 40 cuts off the motor current Im such that the motor current Im does not flow. A function of performing the processing in S207 and S305 in the flight control device 40 corresponds to a current cutoff unit.

In the second limit range process, the current limit value is set according to the motor temperature Tm. The flight control device 40 selects, according to the motor current Im in steps S301 and S302, a certain one of steps S303 to S305 to set the current limit value. The flight control device 40 selects the non-limit unit, the current limit unit, and the current cutoff unit according to the motor temperature Tm. A function of performing the processing in steps S301 and S302 in the flight control device 40 corresponds to a limit selection unit.

After the second limit processing, the flight control device 40 proceeds to step S215 and performs demagnetization notification processing. In the demagnetization notification processing, demagnetization information of the rotor magnet 63a is notified via the communication unit 34 or the like. For example, the demagnetization information is notified to the pilot or the external device. The demagnetization information is stored in the memory 43 or the like. The demagnetization information is notified to an operator or a maintenance device via the memory 43 or the like. The demagnetization information is information related to the demagnetization of the rotor magnet 63a. The demagnetization information includes information indicating the demagnetization state or the demagnetization degree of the rotor magnet 63a. In the demagnetization notification processing, it is notified that a current state of the motor 61 is in the demagnetization region A2, the accumulated demagnetization time reaches the threshold time, or the like.

When the processing proceeds to step S215 after step S207 as this time, in the demagnetization notification processing, it is notified that the correction amount Ac is equal to or greater than the correction threshold TAc. That is, in the demagnetization notification processing, it is notified that the magnetic force insufficiency condition is satisfied for the rotor magnet 63a. A function of performing the processing in step S215 in the flight control device 40 corresponds to a notification execution unit. In the demagnetization notification processing of this time, it is notified that the limited flight of the eVTOL 10 is possible, the second limit processing is performed, or the like. In the second limit processing, whether the motor temperature Tm is in the lower range, the intermediate range, or the higher range is notified.

After step S215, the flight control device 40 proceeds to step S216 and performs a limit handling process. The limit handling process will be described later.

When the limited flight of the eVTOL 10 is impossible in step S206, the flight control device 40 proceeds to step S208. In step S208, the flight control device 40 sets a third flag in the management storage unit. The third flag is a flag indicating that the correction amount Ac is equal to or greater than the correction threshold TAc and the limited flight of the eVTOL 10 is impossible. The third flag is also a flag indicating that the second limit processing is not performed in a state in which the second flag is set.

The flight control device 40 performs second mitigation processing in step S209. The second mitigation processing is processing for prioritizing the flight of the eVTOL 10 over limiting the motor current Im. In the second mitigation processing, the limit on the motor current Im is mitigated. That is, in the second mitigation processing, the limit degree of the motor current Im is set to be low. For example, in the second mitigation processing, the limit degree of the motor current Im is adjusted such that the limit on the motor current Im is mitigated as compared with that in the second limit processing in step S207. The second mitigation processing is processing for temporarily mitigating the limit on the motor current Im on a premise that an appropriate measure is reliably taken in maintenance described later after the eVTOL 10 lands at a destination or the like.

As the second limit processing, the limited flight of the eVTOL 10 being impossible corresponds to the motor current Im being insufficient for the propulsion of the eVTOL 10 when the motor current Im is limited in the second limit processing. A function of performing the processing in step S209 in the flight control device 40 corresponds to a limit mitigation unit.

In the second mitigation processing, the motor current Im is limited such that the limit on the motor current Im is mitigated as compared with that in the second limit processing. For example, when the motor temperature Tm is in the lower range, the flight control device 40 does not limit the motor current Im as in step S303, and also mitigates a correction limit on the correction amount Ac. In the motor control, a correction amount range for limiting magnitude of the correction amount Ac is set. In the motor control, the correction amount Ac is not set to a value exceeding the correction amount range. For example, the correction amount Ac is set to a value equal to or less than an upper limit value of the correction amount range and equal to or greater than a lower limit value of the correction amount range.

The correction amount range is set based on magnitude of the target current. For example, in the correction amount range, the upper limit value is set to a value obtained by adding 20% to the target current, and the lower limit value is set to a value obtained by subtracting 20% from the target current. The flight control device 40 performs processing of expanding the correction amount range as a mitigation of the correction amount range. In the processing, at least one of the upper limit value and the lower limit value of the correction amount range is changed. For example, the flight control device 40 changes the upper limit value of the correction amount range to a value obtained by adding 40% to the target current. On the other hand, the lower limit value of the correction amount range is maintained at the value obtained by subtracting 20% from the target current.

When the motor temperature Tm is in the intermediate range, the flight control device 40 does not limit the motor current Im as in step S303. Therefore, in the second mitigation processing, when the motor temperature Tm is in the intermediate range, the same processing as in step S303 is performed instead of the same processing as in step S304, so that the limit on the motor current Im is mitigated.

When the motor temperature Tm is in the higher range, the flight control device 40 limits the motor current Im with the current limit value so as not to be cut off, as in step S304. Therefore, in the second mitigation processing, when the motor temperature Tm is in the higher range, the same processing as in step S304 is performed instead of the same processing as in step S305, so that the limit on the motor current Im is mitigated.

In step S210, the flight control device 40 sets a prohibition flag in the management storage unit. The prohibition flag is a flag for prohibiting re-takeoff of the eVTOL 10. The re-takeoff means that the eVTOL 10 takes off again after the eVTOL 10 lands at a destination or the like and the current flight ends. The prohibition flag is also a flag for restricting take-off such as the re-takeoff of eVTOL 10. By setting the prohibition flag, the flight control device 40 restricts the take-off of the eVTOL 10 when the magnetic force insufficiency condition is satisfied for the rotor magnet 63a. A function of performing the processing in step S210 in the flight control device 40 corresponds to a take-off restriction unit.

In step S210, the flight control device 40 performs prohibition processing for prohibiting the re-takeoff of the eVTOL 10. The prohibition processing includes setting the prohibition flag. Examples of the prohibition processing include processing for restricting an operation for the re-takeoff of the eVTOL 10 and processing for restricting the propulsion device 100 from being driven for the re-takeoff of the eVTOL 10. The prohibition processing can restrict the re-takeoff of the eVTOL 10. The prohibition processing may be referred to as restriction processing.

After performing the second mitigation processing and setting the prohibition flag, the flight control device 40 proceeds to step S215 and performs the demagnetization notification processing. When the processing proceeds to step S215 after step S209 as this time, in the demagnetization notification processing, as in the case where the processing proceeds to step S215 after step S207, it is notified that the magnetic force insufficiency condition is satisfied for the rotor magnet 63a. In the demagnetization notification processing of this time, it is notified that the limited flight of the eVTOL 10 is impossible, the second mitigation processing is performed, or the like. In the second mitigation processing, whether the motor temperature Tm is in the lower range, the intermediate range, or the higher range is notified. In the demagnetization notification processing of this time, it is notified that the re-takeoff of the eVTOL 10 is restricted.

After step S215, the flight control device 40 performs the limit handling process in step S216. The limit handling process will be described with reference to a flowchart shown in FIG. 7. In step S401 shown in FIG. 7, the flight control device 40 determines whether the third flag is set. Regarding the case where the third flag is set, there is a case where the processing proceeds to step S216 after it is determined in step S206 that the limited flight of the eVTOL 10 is possible, and a case where the processing proceeds to step S216 after it is determined that the limited flight of the eVTOL 10 is impossible.

A determination result as to whether the limited flight of the eVTOL 10 is possible in step S206 may change according to the flight state of the eVTOL 10. Therefore, an increase or a decrease of the target output or the target current in response to the flight state of the eVTOL 10 is reflected in the determination result as to whether the limited flight of the eVTOL 10 is possible. For example, even if it is determined in a previous flight control process that the limited flight of the eVTOL 10 is impossible and the third flag is set, in a current flight control process, it may be determined that the limited flight of the eVTOL 10 is possible and the second limit processing may be performed.

When there is the third flag, the flight control device 40 proceeds to step S402. In step S402, the flight control device 40 performs the second mitigation processing as in step S209. In this way, even when it is determined in step S206 in the current flight control process that the limited flight of the eVTOL 10 is possible, the flight control device 40 performs the second mitigation processing if the third flag is set. A function of performing the processing in step S402 in the flight control device 40 corresponds to the limit mitigation unit.

The flight control device 40 performs second mitigation notification processing in step S403. In the second mitigation notification processing, it is notified that the third flag is set, the second mitigation processing is performed even when the limited flight of the eVTOL 10 is possible, or the like. In the second mitigation notification processing, similar to the demagnetization notification processing, it is notified that the magnetic force insufficiency condition is satisfied for the rotor magnet 63a. A function of performing the processing in step S403 in the flight control device 40 corresponds to the notification execution unit.

When there is no third flag in step S402, the flight control device 40 ends the present limit handling process as it is. In this case, the flight control device 40 ends the flight control process as it is. Examples of the case where there is no third flag include a case where the second mitigation processing is never performed in step S209 during the flight of the eVTOL 10.

Returning to FIG. 5, in step S203, when the correction amount Ac is not equal to or greater than the correction threshold TAc, the flight control device 40 proceeds to step S211. The flight control device 40 performs a first limit range process in step S211. The first limit range process is a process for adjusting the limit range of the motor current Im. The first limit range process is a process for adjusting the limit range of the motor current Im such that the limit on the motor current Im is mitigated as compared with that in the second limit range process. In the first limit range process, as in the second limit range process, the limit degree of the motor current Im is adjusted according to the motor temperature Tm.

In step S212, the flight control device 40 determines whether the limited flight of the eVTOL 10 is possible as in step S206. When the limited flight of the eVTOL 10 is possible, the flight control device 40 proceeds to step S213 and performs first limit processing. The first limit processing is processing for limiting the motor current Im. The flight control device 40 adjusts the limit degree of the motor current Im according to the motor temperature Tm using the current limit value set in step S211. In the first limit processing, the motor current Im is limited such that the limit on the motor current Im is mitigated as compared with that in the second limit processing.

After the first limit processing, the flight control device 40 proceeds to step S215 and performs the demagnetization notification processing. When the processing proceeds to step S215 after step S213 as this time, in the demagnetization notification processing, it is notified that the correction amount Ac is not equal to or greater than the correction threshold TAc. That is, in the demagnetization notification processing of this time, it is notified that the magnetic force insufficiency condition is not satisfied for the rotor magnet 63a. In the demagnetization notification processing of this time, it is notified that the limited flight of the eVTOL 10 is possible, the first limit processing is performed, or the like.

When the limited flight of the eVTOL 10 is impossible in step S212, the flight control device 40 proceeds to step S214 and performs first mitigation processing. The first mitigation processing is processing for prioritizing the flight of the eVTOL 10 over limiting the motor current Im. In the first mitigation processing, the limit on the motor current Im is mitigated. That is, in the first mitigation processing, the limit degree of the motor current Im is set to be low. For example, in the first mitigation processing, the limit degree of the motor current Im is adjusted such that the limit on the motor current Im is mitigated as compared with that in the first limit processing in step S213. In the first mitigation processing, the limit degree of the motor current Im is adjusted such that the limit on the motor current Im is mitigated as compared with that in the second mitigation processing in step S209. For example, in the first mitigation processing, the motor current Im is not limited regardless of the motor temperature Tm.

After the first mitigation processing, the flight control device 40 proceeds to step S215 and performs the demagnetization notification processing. When the processing proceeds to step S215 after step S214 as this time, in the demagnetization notification processing, it is notified that the magnetic force insufficiency condition is not satisfied for the rotor magnet 63a. In the demagnetization notification processing of this time, it is notified that the limited flight of the eVTOL 10 is impossible, the first mitigation processing is performed, or the like.

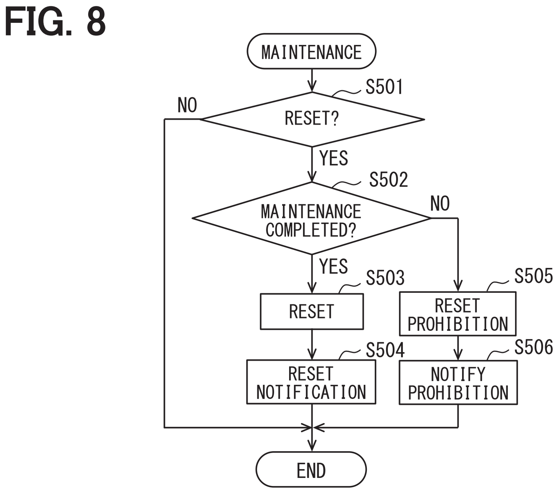

Returning to FIG. 4, when eVTOL 10 is not flying in step S102, the flight control device 40 proceeds to step S114. The flight control device 40 performs a maintenance process in step S114. The maintenance process is performed at a timing when the eVTOL 10 is not flying, such as after the landing or before the take-off of the eVTOL 10. The maintenance process will be described with reference to a flowchart shown in FIG. 8.

In step S501 shown in FIG. 8, the flight control device 40 determines whether there is a request for reset processing. The reset processing is processing for resetting various flags or the like. Examples of the various flags include the abnormality flag and the first flag. The flight control device 40 determines whether a reset request for requesting the reset processing is input. The reset request is input to the flight control device 40 when the operator such as the pilot operates an operation unit such as a maintenance device. Only when the operator performs an operation for the reset request using an appropriate tool or procedure, the reset request is input to the flight control device 40 from the maintenance device or the like, which is an appropriate tool. When the reset request is input to the flight control device 40, the flight control device 40 determines to perform the reset processing and proceeds to step S502.

In step S502, the flight control device 40 determines whether maintenance of the eVTOL 10 is performed. The flight control device 40 determines whether a maintenance record indicating that the maintenance is performed is stored in the management storage unit. The maintenance record is a record indicating that the maintenance is performed after the flight of the eVTOL 10 is completed. When the operator performs maintenance using the maintenance device or the like, the maintenance device or the like stores the maintenance record in the management storage unit. Examples of the maintenance include work of servicing the eVTOL 10, work of inspecting the eVTOL 10, and work of replacing components of the eVTOL 10.

When the maintenance is performed, the flight control device 40 proceeds to step S503. The flight control device 40 performs the reset processing in step S503. In the reset processing, various flags or the like are reset. For example, in the reset processing, the flag set in the management storage unit among the various flags is cleared to an initial value such as zero.

In the reset processing, the demagnetization counter Cd may be reset. For example, when the rotor magnet 63a or the motor 61 is repaired or components are replaced in the maintenance in a state in which the third flag is set, a request for requesting to reset the demagnetization counter Cd is included in the reset request. In this case, in the reset processing, the demagnetization counter Cd is reset. For example, the demagnetization counter Cd is reset by clearing the counter value of the demagnetization counter Cd to the initial value such as zero.

The management storage unit can set the various flags and the demagnetization counter Cd in a state corresponding to each of the multiple propulsion devices 100. The management storage unit can set the various flags and the demagnetization counter Cd in a state corresponding to each of the multiple motors 61. For example, in a configuration in which one propulsion device 100 includes multiple motors 61, it is preferable that the management storage unit can set multiple flags and demagnetization counters Cd for one propulsion device 100.

The flight control device 40 performs reset notification processing in step S504. In the reset notification processing, reset information indicating that the various flags or the like are reset is notified to the operator or the external device. The reset information includes information indicating which flag among the various flags is reset, information indicating whether the demagnetization counter Cd is reset, or the like.

When the maintenance is not performed in step S502, the flight control device 40 proceeds to step S505. The flight control device 40 performs reset prohibition processing in step S505. The reset prohibition processing is processing for prohibiting to reset the various flags, the demagnetization counter Cd or the like.

The flight control device 40 performs prohibition notification processing in step S506. In the prohibition notification processing, reset prohibition information indicating that reset of the various flags, the demagnetization counter Cd, or the like is prohibited is notified to the operator or the external device. The reset prohibition information includes information indicating that the maintenance is not performed, a type of the flag set in the management storage unit, or the like.

According to the present embodiment described above, the flight control device 40 manages the demagnetization of the rotor magnet 63a using the driving information such as the motor temperature Tm and the motor current Im. In the configuration, the motor 61 can be driven such that the demagnetization of the rotor magnet 63a is less likely to occur, for example, the motor current Im is limited by the first limit processing. Therefore, the demagnetization of the rotor magnet 63a can be restricted. Further, in the configuration, it is possible to take abnormality countermeasures such as reducing a load of the rotor magnet 63a by limiting the motor current Im by the second limit processing, at a timing before the demagnetization of the rotor magnet 63a progresses to such an extent that the abnormality of the motor 61 occurs. Therefore, a decrease in safety of the eVTOL 10 caused by progress of the demagnetization of the rotor magnet 63a can be restricted. As described above, the safety of the eVTOL 10 can be improved by managing the demagnetization of the rotor magnet 63a.

In the motor device 60, when the motor temperature Tm is high and the motor current Im is large, the demagnetization of the rotor magnet 63a is likely to occur. Meanwhile, in the present embodiment, the state in which the motor 61 has a high temperature and a large current is restricted by the first limit processing and the second limit processing. In the configuration, since the demagnetization of the rotor magnet 63a is less likely to occur due to the first limit processing and the second limit processing, performance deterioration of the motor 61 can be prevented. Further, in the configuration, a situation in which the motor temperature Tm is high to the extent corresponding to the abnormality of the motor 61 can be prevented by the first limit processing and the second limit processing.

In the motor device 60, the demagnetization of the rotor magnet 63a is more likely to occur as the motor temperature Tm such as the temperature of the rotor magnet 63a increases. Therefore, it is considered that the demagnetization of the rotor magnet 63a is less likely to occur by increasing an effect of cooling the motor device 60 or increasing a size of the motor 61 to reduce the current required to achieve the target torque. However, as the size and the effect of cooling the motor 61 are increased, there is a concern that mountability of the motor 61 may deteriorate and a weight and costs may increase. For example, it is conceivable to improve the effect of cooling the motor device 60 by using a device of a liquid-cooling type. Further, when the motor device 60 of a liquid-cooling type is applied, a flow path or a pump for circulating a cooling liquid, and a heat exchanger for heat dissipation need to be added to the motor device 60, and the size, weight, and costs of the motor device 60 increase. An increase in the size and weight of the motor device 60 is disadvantageous in ensuring the safety of the eVTOL 10 on which the motor device 60 is mounted.

Meanwhile, in the present embodiment, in the state in which the demagnetization of the rotor magnet 63a is likely to occur, such as when the motor temperature Tm is high, the motor current Im is limited by the first limit processing or the second limit processing, and thus it is possible to escape from the state in which the demagnetization of the rotor magnet 63a is likely to occur. Therefore, the demagnetization of the rotor magnet 63a can be restricted without increasing the output of and the effect of cooling the motor 61. Therefore, it is not necessary to increase the size, weight, and costs of the motor device 60 to restrict the demagnetization of the rotor magnet 63a.

In the eVTOL 10 as a manned flight vehicle, the motor 61 is strongly required to be lightweight, while a high output of several tens to several hundreds of kW is required. That is, it is required to increase an output density of the motor 61. In the motor 61, the motor temperature Tm tends to increase as the output density increases. As the motor temperature Tm increases, the demagnetization of the rotor magnet 63a is likely to occur. Therefore, as in the present embodiment, the configuration in which the motor current Im is limited in a state in which the demagnetization of the rotor magnet 63a is likely to occur is effective in restricting the demagnetization of the rotor magnet 63a in the manned flight vehicle.

The irreversible demagnetization occurring in the rotor magnet 63a gradually progresses as the motor 61 is driven. Therefore, the demagnetization degree of the rotor magnet 63a is easily affected by a past driving state of the motor 61. Meanwhile, according to the present embodiment, the flight control device 40 manages the demagnetization of the rotor magnet 63a using the motor history information such as the demagnetization counter Cd. In the configuration, the demagnetization and the load of the rotor magnet 63a can be restricted by using past information such as the motor history information for the motor 61. Therefore, control accuracy of the demagnetization of the rotor magnet 63a can be improved.

According to the present embodiment, the flight control device 40 manages the demagnetization of the rotor magnet 63a using the determination result as to whether the demagnetization counter Cd reaches the counter threshold TCd. Since the demagnetization degree of the rotor magnet 63a is reflected in the determination result, the flight control device 40 can manage the demagnetization state of the rotor magnet 63a by limiting the motor current Im according to the demagnetization degree of the rotor magnet 63a. For example, when the demagnetization counter Cd does not reach the counter threshold TCd, insufficiency of the motor output can be restricted by not limiting the motor current Im. When the demagnetization counter Cd reaches the counter threshold TCd, the demagnetization of the rotor magnet 63a can be restricted by limiting the motor current Im by the first limit processing or the second limit processing.

According to the present embodiment, when the correction amount Ac is equal to or greater than the correction threshold TAc, it is determined that the magnetic force insufficiency condition is satisfied for the rotor magnet 63a, and the motor current Im is limited by the second limit processing. In the configuration, when the demagnetization of the rotor magnet 63a progresses to such an extent that the magnetic force insufficiency condition is satisfied, further progress of the demagnetization can be restricted by limiting the motor current Im.

In the motor 61, the demagnetization of the rotor magnet 63a is more likely to occur as the motor temperature Tm increases. For example, if a current motor temperature Tm is sufficiently low, the demagnetization of the rotor magnet 63a is less likely to occur even if the motor current Im is large. Therefore, even if the correction amount Ac is equal to or greater than the correction threshold TAc, if the current motor temperature Tm is low, the demagnetization of the rotor magnet 63a is less likely to further progress.

Meanwhile, according to the present embodiment, the flight control device 40 adjusts the limit degree of the motor current Im by the second limit range processing according to the motor temperature Tm. In the configuration, even if the magnet insufficiency condition is satisfied for the rotor magnet 63a, the motor current Im can be adjusted according to ease of occurrence of the demagnetization in the rotor magnet 63a. In this way, by adding the current motor temperature Tm as temperature information, the demagnetization of the rotor magnet 63a can be managed more appropriately. For example, when the motor temperature Tm is low and the demagnetization of the rotor magnet 63a is less likely to occur, priority can be given to preventing insufficiency of the motor current Im over restricting the demagnetization of the rotor magnet 63a. When the motor temperature Tm is high and the demagnetization of the rotor magnet 63a is likely to occur, priority can be given to restricting the demagnetization of the rotor magnet 63a over securing the motor current Im.

According to the present embodiment, in the second limit rage processing, the lower range processing, the intermediate range processing, and the higher range processing are selected according to the motor temperature Tm. The motor current Im is not limited in the lower range processing, the motor current Im is limited so as not to be cut off in the intermediate range processing, and the motor current Im is cut off in the higher range processing. Therefore, a configuration can be provided in which the current limit of multiple stages is applied to the motor current Im according to the motor temperature Tm. In this way, the demagnetization of the rotor magnet 63a can be appropriately managed by, with respect to the motor temperature Tm, making the current limit strict in a high temperature range in which the demagnetization is likely to occur, not limiting the current in a low temperature range in which the demagnetization is less likely to occur, and mitigating the current limit in an intermediate range in which the demagnetization does not occur as much as in the high temperature range but occurs. For example, the driving of the motor 61 in a state in which the demagnetization of the rotor magnet 63a progresses to an extent corresponding to the abnormality can be prevented from being continued.

In the motor 61, when the magnetic force decreases due to the progress of the demagnetization in the rotor magnet 63a, the motor output such as the motor current Im is likely to be insufficient with respect to the target output. Then, the correction amount Ac is set to an excessively large value to compensate for the insufficiency. Meanwhile, according to the present embodiment, when the correction amount Ac is so excessive as to be equal to or greater than the correction threshold TAc, the magnetic force insufficiency condition is satisfied for the rotor magnet 63a. Therefore, in the demagnetization management of the rotor magnet 63a, the demagnetization of the rotor magnet 63a progressing to such an extent that the correction amount Ac is equal to or greater than the correction threshold TAc can be managed as the magnetic force of the rotor magnet 63a being likely to be insufficient.

When motor control is performed by the feedback control, the learning control, or the like, even if the demagnetization of the rotor magnet 63a gradually progresses and the performance of the motor 61 deteriorates, the motor output is less likely to be affected as long as the correction amount Ac is within the correction amount range. Therefore, even in a state in which the demagnetization of the rotor magnet 63a has progressed to some extent, it is difficult for the pilot or the like to notice the progress of the demagnetization. Meanwhile, in the present embodiment, the pilot or the like is notified that the correction amount Ac is equal to or greater than the correction threshold TAc by the demagnetization notification processing. For example, when the correction amount Ac is equal to or greater than the correction threshold TAc, the demagnetization information is stored or transmitted such that the inspection or the replacement is performed before the demagnetization of the rotor magnet 63a further progresses.

According to the present embodiment, when the motor current Im is limited by the second limit range processing and the motor current Im is insufficient for the propulsion of the eVTOL 10, the limit on the motor current Im is mitigated by the second mitigation processing. In the configuration, priority can be given to preventing insufficiency of the motor current Im for the propulsion of the eVTOL 10 over restricting the demagnetization of the rotor magnet 63a. Therefore, it is possible to achieve an appropriate balance between the demagnetization restriction of the rotor magnet 63a and the safety insurance of the eVTOL 10.

In order to prevent the demagnetization of the rotor magnet 63a, it is desirable to limit the motor current Im, but when a movement capability of the eVTOL 10 is hindered by limiting the motor current Im, there is a concern that the safety of the eVTOL 10 and the occupant may decrease. Meanwhile, in the present embodiment, when the movement capability of the eVTOL 10 is hindered by limiting the motor current Im, the limit on the motor current Im is mitigated to avoid a decrease in the safety of the eVTOL 10 and the occupant. In a state in which the motor current Im is limited to such an extent that the movement capability of the eVTOL 10 is hindered, it is estimated that the demagnetization of the rotor magnet 63a is actualized to an extent corresponding to the abnormality. Therefore, in the present embodiment, when the motor current Im is limited to such an extent that the movement capability of the eVTOL 10 is hindered, the demagnetization information is recorded or transmitted such that the inspection or the replacement is performed promptly.

In particular, in an aircraft such as the eVTOL 10, when the output of the propulsion device 100 decreases due to the limit on the motor current Im, there is a high risk that the flight attitude is unstable. For this reason, in a state in which the aircraft is flying, it may not be possible to perform desired current limit for the rotor magnet 63a. In such a case, recording and transmission of the demagnetization information are performed such that safe flight of the aircraft is prioritized over the restriction of the demagnetization of the rotor magnet 63a and the inspection or replacement is performed before next flight.

According to the present embodiment, the flight control device 40 notifies that the magnetic force insufficiency condition is satisfied for the rotor magnet 63a by the demagnetization notification processing or the like. In the configuration, the magnetic force insufficiency of the rotor magnet 63a can be notified to the pilot or the like at a timing before the demagnetization of the rotor magnet 63a progresses to such an extent that the abnormality or the performance deterioration of the motor 61 occurs. Therefore, occurrence of the abnormality or the performance deterioration of the motor 61 can be prevented by performing the inspection or the component replacement on the rotor magnet 63a before the abnormality or the performance deterioration of the motor 61 occurs.

When the magnetic force of the rotor magnet 63a is insufficient due to the irreversible demagnetization, it is necessary to maintain the motor 61 to eliminate the magnetic force insufficiency of the rotor magnet 63a. Meanwhile, according to the present embodiment, the flight control device 40 restricts the take-off of the eVTOL 10 when the magnetic force insufficiency condition is satisfied for the rotor magnet 63a. Therefore, it is possible to avoid a situation where the eVTOL 10 takes off again without performing maintenance on the motor 61, even though the magnetic force insufficiency of the rotor magnet 63a occurs. Therefore, the decrease in the safety of the eVTOL 10 due to the magnetic force insufficiency of the rotor magnet 63a can be reliably prevented.

In particular, in an aircraft such as the eVTOL 10, there is a very high risk that the propulsion device 100, in a state in which the demagnetization of the rotor magnet 63a progresses, continues to fly. Therefore, as in the present embodiment, the eVTOL 10 is prohibited from taking off until an appropriate countermeasure, such as inspecting or replacing the motor 61, is taken, which is preferable in ensuring the safety of the eVTOL 10.

In the present embodiment, as regions indicating the state of the motor 61, the abnormal region A1 and the demagnetization region A2 are set according to the motor temperature Tm. The abnormal region A1 has, regarding the motor temperature Tm, a temperature condition for quickly limiting the motor current Im. The demagnetization region A2 has, regarding the motor temperature Tm, a temperature condition for demagnetization determination, which is lower than the temperature condition of the abnormal region A1. When the state of the motor 61 is in the abnormal region A1, the motor current Im is quickly limited by the abnormality limit processing. Therefore, unintentional insufficiency of the output of the propulsion device 100 due to the state of the motor 61 being in the abnormal region A1 can be prevented.

In the motor 61, when the flight of the eVTOL 10 is continued without noticing the demagnetization of the rotor magnet 63a, there is a concern that the output performance of the motor 61 may deteriorate and the flight may be hindered. On the other hand, when trying to drive the motor 61 such that demagnetization of the rotor magnet 63a does not occur, it is necessary to drive the motor 61 such that an increase in the motor temperature Tm is limited to such an extent that the demagnetization does not occur and the motor current Im is a low current. Then, a cooling mechanism is added to the motor 61 or the motor 61 is increased in size, which increases the size and weight of the motor device 60. When the size and weight of the motor device 60 increase, the mountability on the eVTOL 10 deteriorates.

Meanwhile, in the present embodiment, the progress of the demagnetization in the rotor magnet 63a can be monitored by determining whether the state of the motor 61 is in any of the abnormal region A1, the demagnetization region A2, and the general region A3. Therefore, it is possible to take measures such as component replacement before the demagnetization of the rotor magnet 63a actually affects the flight of the eVTOL 10 while allowing the risk that the demagnetization of the rotor magnet 63a progresses to some extent along with the driving of the motor 61.

<Second Embodiment>

In a second embodiment, the demagnetization of the rotor magnet 63a is managed according to a change mode of the correction amount Ac. Configurations, operations, and effects not particularly described in the second embodiment are the same as those in the first embodiment described above. In the second embodiment, differences from the first embodiment will be mainly described.

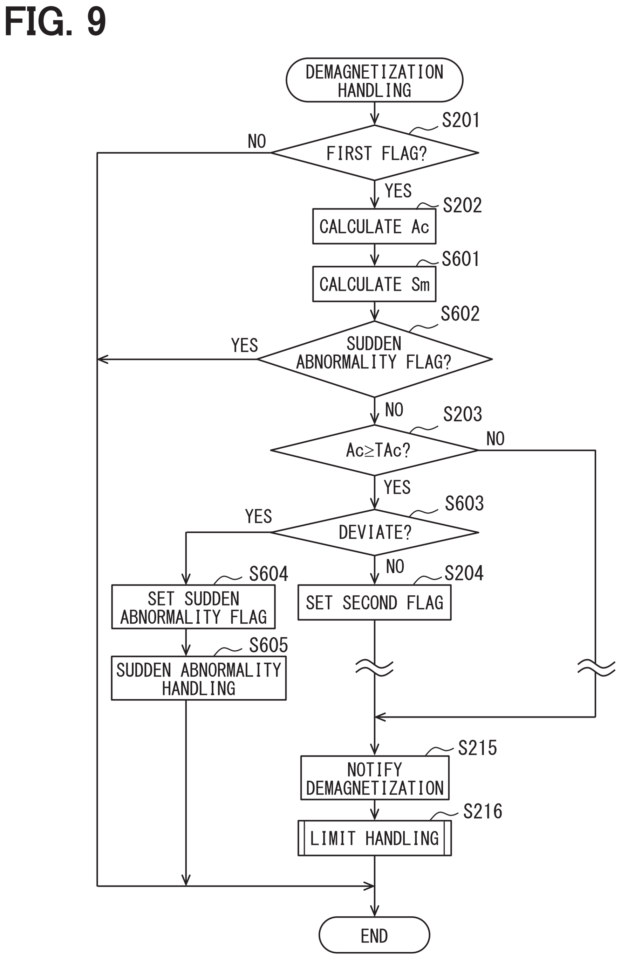

The flight control device 40 performs the flight control process as in the first embodiment. In the present embodiment, the demagnetization handling process in the flight control process will be described with reference to a flowchart of FIG. 9. As shown in FIG. 9, the flight control device 40 performs processing in steps S201 to S216 as in the first embodiment. However, the flight control device 40 performs processing in steps S601 and S602 after step S202.

The flight control device 40 calculates a smoothing value Sm in step S601. The smoothing value Sm is a value for smoothing the correction amount Ac. The smoothing value Sm is a value obtained by smoothing a change in the correction amount Ac. For example, the smoothing value Sm is calculated using Formula 1.

$$Sm[t] = \alpha \times Ac[t] + (1 - \alpha) \times Sm[t-1]... \quad \text{Formula 1}$$

In Formula 1, $\alpha$ is a value larger than zero and smaller than 1. That is, $0 < \alpha < 1$. In Formula 1, [t] is a value acquired in a current demagnetization handling process, and [t-1] is a value acquired in a previous demagnetization handling process. For example, Sm[t] is the smoothing value Sm calculated in step S601 in the current process. Sm [t-1] is the smoothing value Sm calculated in step S601 in the previous process. Ac[t] is the correction amount Ac calculated in step S202 in the current process. As the smoothing value Sm, an outer peripheral value calculated by learning control may be used.

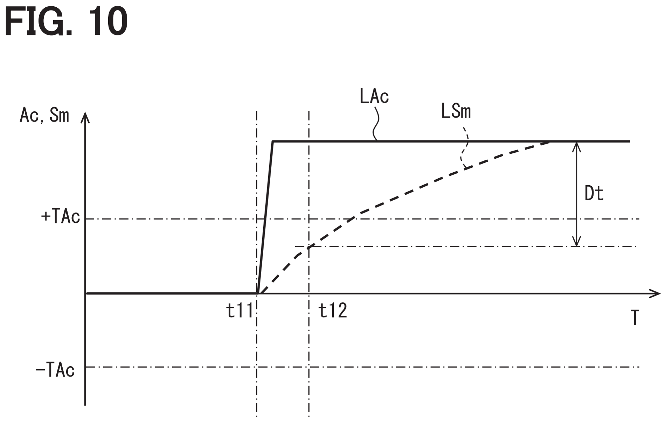

As shown in FIG. 10, a smoothing value line LSm changes more gently than a correction amount line LAC. The smoothing value line LSm is a line indicating a change mode of the smoothing value Sm. The correction amount line LAC is a line indicating a change mode of the correction amount Ac. In an example shown in FIG. 10, the correction amount Ac is equal to or greater than the correction threshold TAc.

Returning to FIG. 9, in step S602, the flight control device 40 determines whether a sudden abnormality flag is set. The sudden abnormality flag is a flag indicating that a sudden abnormality occurs. The sudden abnormality is an abnormality that suddenly occurs with a sudden change in the correction amount Ac. Examples of the sudden abnormality include an abnormality that occurs when foreign matter is caught in the motor shaft or the propeller shaft. Even if an abnormality occurs in the rotor magnet 63a or the motor 61 due to the progress of the demagnetization of the rotor magnet 63a, the abnormality is not included in the sudden abnormality. In other words, the sudden abnormality is not an abnormality caused by the demagnetization of the rotor magnet 63a.

When the sudden abnormality flag is not set and the correction amount Ac is equal to or greater than the correction threshold TAc in step S203, the flight control device 40 proceeds to step S603. In step S603, the flight control device 40 determines whether the smoothing value Sm and the correction amount Ac deviate from each other. For example, the flight control device 40 determines whether a deviation amount Dt is greater than a deviation threshold TDt. The deviation amount Dt is a difference between the smoothing value Sm and the correction amount Ac. The deviation threshold TDt is a value determined in advance by a test or the like, and is stored in the memory 43 or the like.

When the smoothing value Sm and the correction amount Ac do not deviate from each other, the flight control device 40 performs the processing in steps S204 to S216 as when the correction amount Ac is equal to or greater than the correction threshold TAc in the first embodiment.

When the smoothing value Sm and the correction amount Ac deviate from each other, the flight control device 40 proceeds to step S604. In step S604, the flight control device 40 sets the sudden abnormality flag in the management storage unit. As shown in FIG. 10, when a sudden abnormality occurs at a timing t11, the sudden abnormality flag is set at a timing t12 after the timing t11. In this case, the deviation amount Dt is a difference between the smoothing value Sm and the correction amount Ac at the timing t12.

The flight control device 40 performs sudden abnormality handling processing in step S605. In the sudden abnormality handling processing, processing for storing the occurrence of the sudden abnormality in the memory 43 or the like, processing for notifying the pilot, the external facility, or the like of the occurrence of the sudden abnormality, or the like is performed. In the sudden abnormality handling processing, the motor output such as the motor current Im may be limited, and the driving of the motor 61 may be stopped.

<Third Embodiment>

In a third embodiment, ease of occurrence of the demagnetization in the rotor magnet 63a is reflected in the accumulated driving time. Configurations, operations, and effects not particularly described in the third embodiment are the same as those in the first embodiment. In the third embodiment, differences from the first embodiment will be mainly described.

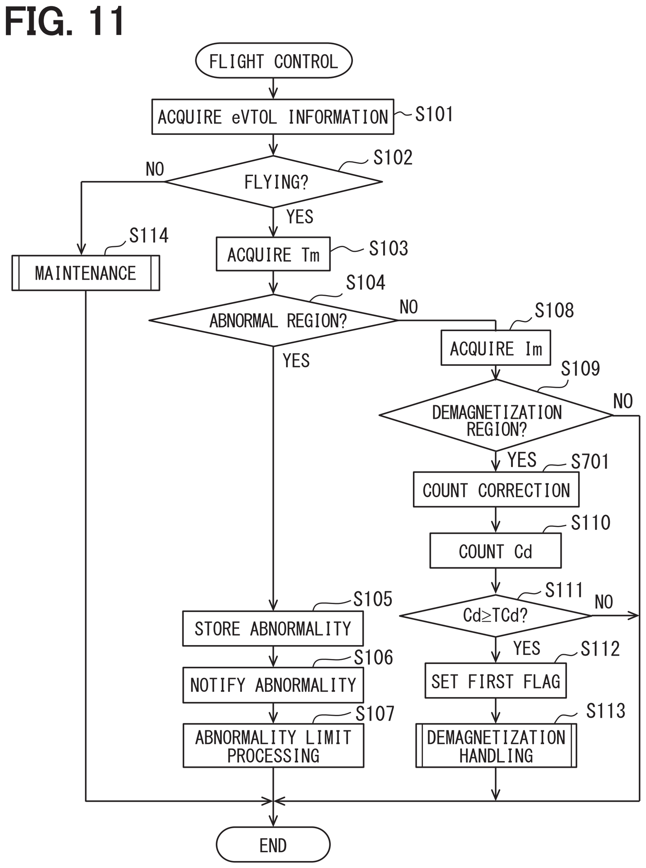

In the present embodiment, the flight control process will be described with reference to a flowchart of FIG. 11. As shown in FIG. 11, the flight control device 40 performs processing in steps S101 to S114 as in the first embodiment. However, when the state of the motor 61 is in the demagnetization region A2 in step S109, the flight control device 40 proceeds to step S701. A function of performing the processing in steps S109 to S113 and S701 in the flight control device 40 corresponds to the demagnetization management unit.

The flight control device 40 performs count correction processing in step S701. In the count correction processing, the addition value of the demagnetization counter Cd is corrected. The addition value is a value added to the demagnetization counter Cd in step S110. The addition value is a fixed value in the first embodiment, but the addition value is a variable value in the present embodiment. The flight control device 40 changes the addition value according to the ease of occurrence of the demagnetization of the rotor magnet 63a. For example, the addition value is variably set according to a position where the state of the motor 61 is in the demagnetization region A2.

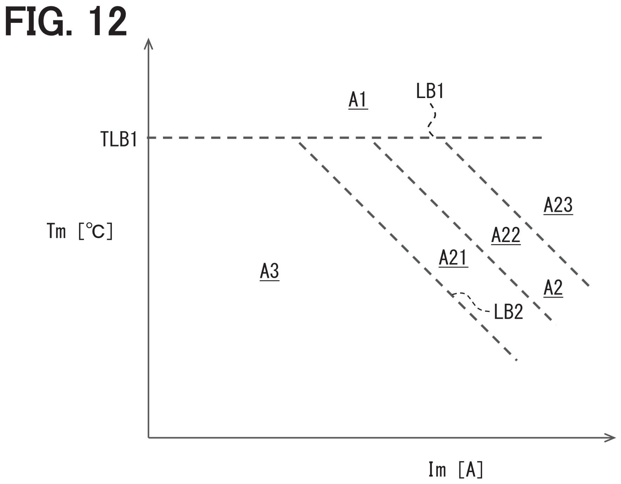

As shown in FIG. 12, the demagnetization region A2 includes a first demagnetization region A21, a second demagnetization region A22, and a third demagnetization region A23. The first demagnetization region A21 is a region in which the demagnetization of the rotor magnet 63a is less likely to occur than in the second demagnetization region A22. Therefore, the addition value for the first demagnetization region A21 is set to a value smaller than the addition value for the second demagnetization region A22. The third demagnetization region A23 is a region in which the demagnetization of the rotor magnet 63a is more likely to occur than in the second demagnetization region A22. Therefore, the addition value for the third demagnetization region A23 is set to a value larger than the addition value for the second demagnetization region A22. For example, the addition value for the first demagnetization region A21 is set to 1, the addition value for the second demagnetization region A22 is set to 2, and the addition value for the third demagnetization region A23 is set to 3.

After step S701, the flight control device 40 proceeds to step S110 and adds the addition value to the demagnetization counter Cd. For example, as a time during which the state of the motor 61 is in the third demagnetization region A23 increases, a time for the demagnetization counter Cd to reach the counter threshold TCd tends to decrease. Further, as a time during which the state of the motor 61 is in the first demagnetization region A21, the time for the demagnetization counter Cd to reach the counter threshold TCd tends to increase.

In the present embodiment, the region indicating the state of the motor 61 is weighted such that the addition value of the demagnetization counter Cd is variably set according to the ease of occurrence of the demagnetization of the rotor magnet 63a. In the demagnetization region A2, the demagnetization counter Cd increases earlier as the demagnetization of the rotor magnet 63a is more likely to occur in the region. When the count of the demagnetization counter Cd is weighted in this way, a processing load of the flight control device 40 is likely to increase as compared with a configuration in which weighting is not performed, but the demagnetization degree of the rotor magnet 63a can be accurately estimated. By increasing the estimation accuracy of the demagnetization degree of the rotor magnet 63a, the safety of the eVTOL 10 can be improved.

<Fourth Embodiment>

In the first embodiment described above, when the accumulated demagnetization time during which the motor 61 is in the demagnetization region A2 is long to some extent, the demagnetization handling process is performed. Meanwhile, in a fourth embodiment, when the correction amount Ac is large to some extent, the demagnetization handling process is performed. Configurations, operations, and effects not particularly described in the fourth embodiment are the same as those in the first embodiment. In the fourth embodiment, differences from the first embodiment will be mainly described.

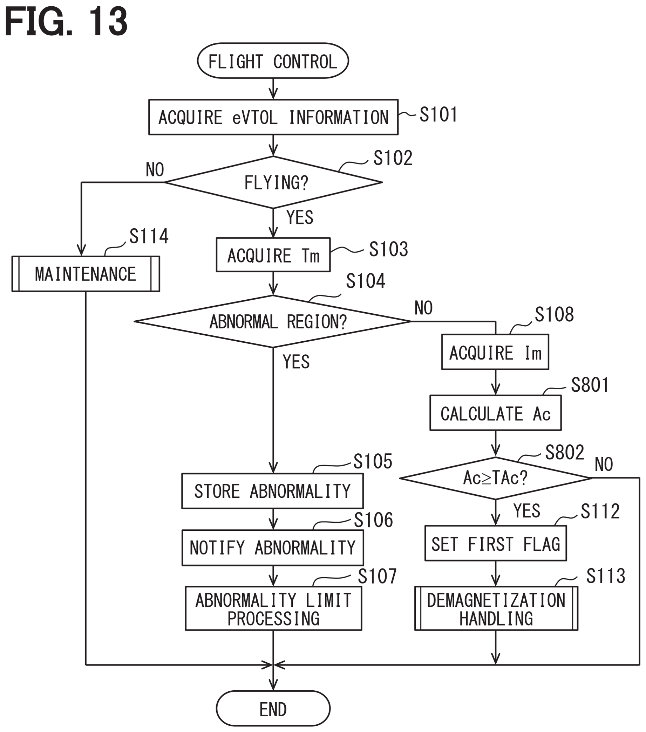

In the present embodiment, the flight control process will be described with reference to a flowchart of FIG. 13. As shown in FIG. 13, the flight control device 40 performs processing in steps S101 to S108 and S112 to S114 as in the first embodiment. However, the flight control device 40 performs processing in steps S801 and S802 after step S108.

In steps S801 and S802, the flight control device 40 performs the same processing as in steps S202 and S203 of the first embodiment. In step S801, the flight control device 40 calculates the correction amount Ac. The correction amount Ac is a parameter indicating the driving state of the motor 61 and corresponds to the driving information. A function of performing the processing in step S801 in the flight control device 40 corresponds to the information acquisition unit.

In step S802, the flight control device 40 determines whether the correction amount Ac is equal to or greater than the correction threshold TAc. Determining whether the correction amount Ac is equal to or greater than the correction threshold TAc corresponds to determining whether the motor output is insufficient with respect to the target output. A function of performing the processing in step S802 in the flight control device 40 corresponds to an output determination unit. A function of performing the processing in steps S109 to S113 and S802 in the flight control device 40 corresponds to the demagnetization management unit.

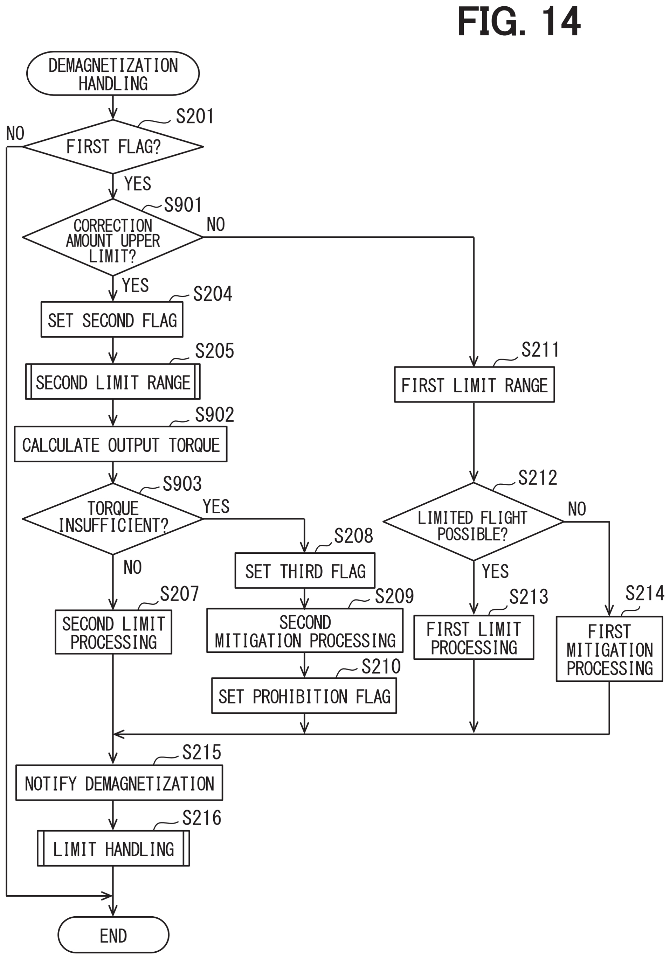

When the correction amount Ac is equal to or greater than the correction threshold TAc, the flight control device 40 performs the processing in steps S112 and S113. That is, the flight control device 40 performs the demagnetization handling process in step S113. The demagnetization handling process will be described with reference to a flowchart of FIG. 14.

When the first flag is set in step S201 shown in FIG. 14, the flight control device 40 proceeds to step S901. In step S901, the flight control device 40 determines whether the correction amount Ac reaches the upper limit value of the correction amount range. Examples of the case where the correction amount Ac reaches the upper limit value of the correction amount range include a case where the correction amount Ac needs to be set to a value larger than the upper limit value of the correction amount range in order to bring the motor output close to the target output. That is, even if the correction amount Ac is set to the upper limit value of the correction amount range, the motor output may be insufficient with respect to the target output. In this case, since the demagnetization of the rotor magnet 63a progresses to some extent, the motor current Im tends to be insufficient.

Determining whether the correction amount Ac reaches the upper limit value of the correction amount range corresponds to determining whether the motor output is insufficient with respect to the target output. A function of performing the processing in step S901 in the flight control device 40 corresponds to the output determination unit.

When the correction amount Ac reaches the upper limit value of the correction amount range, the flight control device 40 proceeds to step S204 and sets the second flag. The second flag of the present embodiment is a flag indicating that the correction amount Ac reaches the upper limit value of the correction amount range. In the present embodiment, as in the first embodiment, the second flag is also a flag indicating that demagnetization of the rotor magnet 63a progresses to some extent.

After steps S204 and S205, the flight control device 40 performs processing in steps S902 and S903. In step S902, the flight control device 40 calculates the output torque of the motor 61. For example, the flight control device 40 calculates the output torque using the motor current Im or the like. The output torque is a parameter indicating the driving state of the motor 61 and corresponds to the driving information. A function of performing the processing in step S902 in the flight control device 40 corresponds to the information acquisition unit.

In step S903, the flight control device 40 determines whether the torque is insufficient. That is, the flight control device 40 determines whether the output torque is insufficient with respect to the target torque. For example, the flight control device 40 determines whether a torque difference between the output torque and the target torque is smaller than a predetermined torque threshold. When the torque difference is smaller than the torque threshold, the flight control device 40 determines that the torque is insufficient. Determining whether the torque is insufficient corresponds to determining whether the motor output is insufficient with respect to the target output. A function of performing the processing in step S903 in the flight control device 40 corresponds to the output determination unit.

When the torque is not insufficient, the flight control device 40 performs the second limit processing in step S207. When the torque is insufficient, the flight control device 40 performs the second mitigation processing in step S209.

According to the present embodiment, the flight control device 40 manages the demagnetization of the rotor magnet 63a using the determination result as to whether the motor output is insufficient with respect to the target output. Since the demagnetization degree of the rotor magnet 63a is reflected in the determination result via the motor output, the flight control device 40 can manage the demagnetization state of the rotor magnet 63a by limiting the motor current Im according to the demagnetization degree of the rotor magnet 63a. For example, when the correction amount Ac is not equal to or greater than the correction threshold TAc, the motor output can be prevented from being insufficient by not limiting the motor current Im. When the correction amount Ac is equal to or greater than the correction threshold TAc, the demagnetization of the rotor magnet 63a can be restricted by limiting the motor current Im by the first limit processing or the second limit processing.

<Fifth Embodiment>

In a fifth embodiment, the propulsion system 30 includes a cooling mechanism capable of cooling the motor 61. Configurations, operations, and effects not particularly described in the fifth embodiment are the same as those of the first embodiment. In the fifth embodiment, differences from the first embodiment will be mainly described.

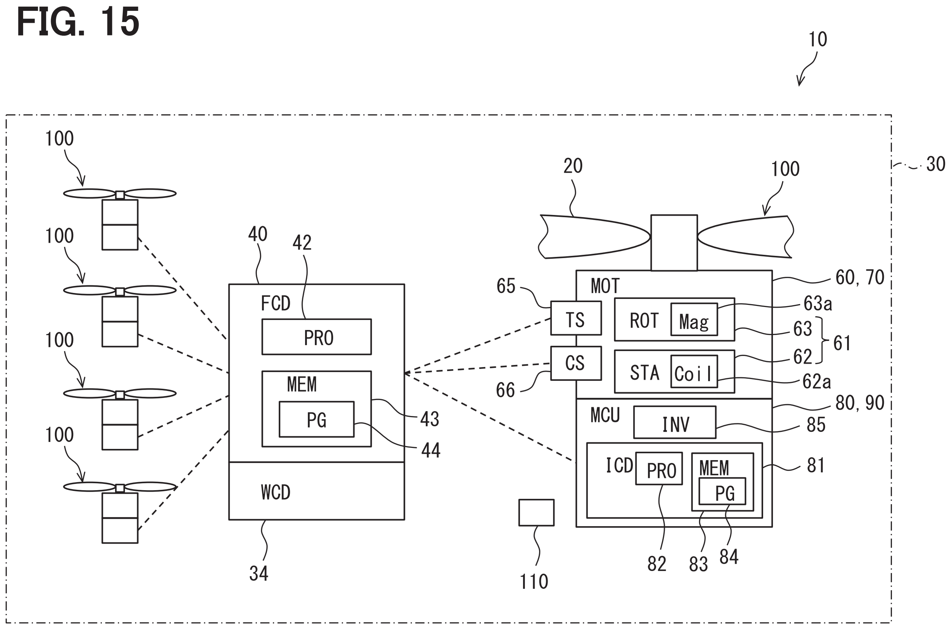

As shown in FIG. 15, the propulsion system 30 includes a cooling device 110. The cooling device 110 can cool the motor 61. The cooling device 110 is included in the cooling mechanism. The cooling device 110 is provided in the eVTOL 10. The cooling device 110 cools at least the motor 61 of the EPU 50. The cooling device 110 is provided in the EPU 50. A driving source of the cooling device 110 is the motor 61. The cooling device 110 is driven by the motor 61.

The cooling device 110 is a cooling device of an air-cooling type or a liquid-cooling type. For example, the cooling device 110 of the air-cooling type includes an air cooling fan. The air cooling fan is a blower fan that blows air as the motor 61 is driven. The air cooling fan is fixed to the motor shaft. The air cooling fan is aligned with the motor housing 70 or the inverter housing 90 along the motor shaft. The air cooling fan cools the motor 61 and the inverter device 80 by causing air such as outside air to flow along outer surfaces of the housings 70, 90.

The cooling device 110 of a liquid-cooling type cools the motor 61 with a refrigerant such as water. The cooling device 110 of the liquid-cooling type includes a flow path forming portion such as a pipe that forms a flow path, a refrigerant pump for causing a refrigerant to flow through the flow path, a heat dissipation portion for releasing heat of the refrigerant to the outside, and the like. The flow path is provided such that the refrigerant easily cools the motor 61 and the inverter device 80. The refrigerant pump is driven as the motor 61 is driven. For example, the refrigerant pump is provided on the motor shaft and pumps the refrigerant as the motor shaft rotates. The refrigerant may be a liquid refrigerant or a gas refrigerant.

The inverter circuit 85 includes multiple switching elements such as IGBTs and MOSFETs. For example, in the inverter circuit 85, each of an upper arm and a lower arm of an upper-lower arm circuit includes a switching element. The inverter circuit 85 drives the motor 61 by converting electric power by switching of the switching element. The inverter circuit 85 corresponds to an inverter. The inverter control unit 81 drives the inverter circuit 85 by outputting a PWM signal as a command signal. The PWM signal is a pulse signal. The inverter control unit 81 changes the driving state of the motor 61 such as the motor rotation speed by changing a frequency of the PWM signal. The frequency of the PWM signal is a frequency for driving the inverter circuit 85, and corresponds to a driving frequency. The frequency of the PWM signal may be referred to as a PWM frequency. The PWM signal is generated using a carrier signal such as a triangular wave. The frequency of the PWM signal is a frequency of the carrier signal.

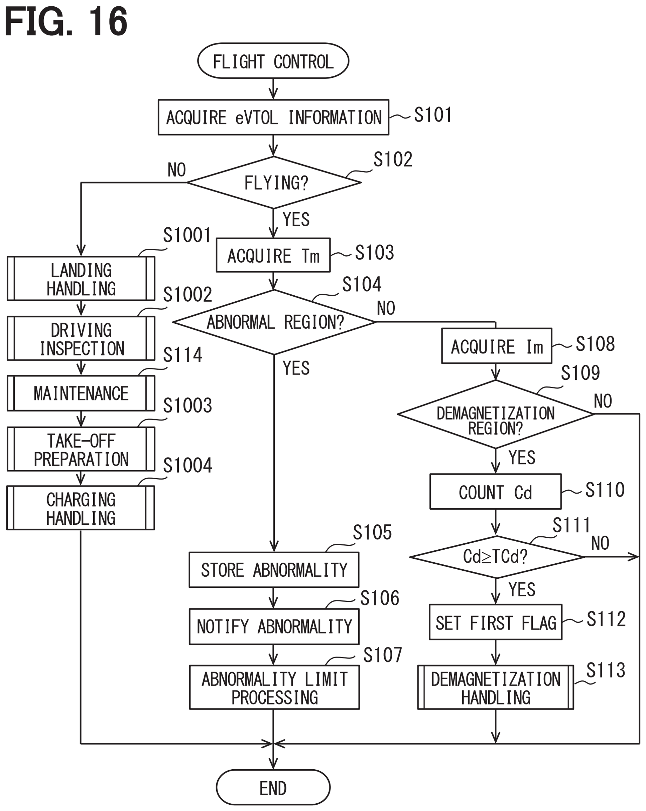

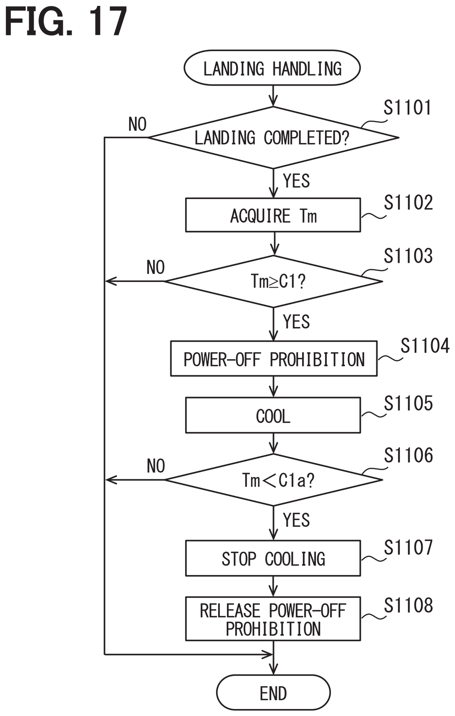

In the present embodiment, the flight control process will be described with reference to a flowchart of FIG. 16. As shown in FIG. 16, the flight control device 40 performs processing in steps S101 to S114 as in the first embodiment. In the present embodiment, when eVTOL 10 is not flying in step S102, the flight control device 40 performs processing in steps S1001 to S1004 in addition to the processing in step S114. The flight control device 40 performs a landing handling process in step S1001. The landing handling process is a process performed in response to the landing of the eVTOL 10. The landing handling process will be described with reference to a flowchart shown in FIG. 17.

In step S1101 of the landing handling process shown in FIG. 17, the flight control device 40 determines whether the landing of the eVTOL 10 is completed. When the landing of the eVTOL 10 is not completed, the flight control device 40 determines that the eVTOL 10 is flying, and ends the landing handling process. When the landing of the eVTOL 10 is completed, the flight control device 40 proceeds to step S1102.

In step S1102, the flight control device 40 acquires the motor temperature Tm as in step S103 of the first embodiment. In step S1103, the flight control device 40 determines whether the motor temperature Tm is equal to or higher than a first cooling threshold C1. The first cooling threshold C1 is a value determined in advance by a test or the like, and is stored in the memory 43 or the like. The first cooling threshold C1 is a value indicating that the motor temperature Tm is high to such an extent that cooling for the motor 61 is necessary in the eVTOL 10 after the landing, a value indicating the demagnetization of the rotor magnet 63a may progress, or the like. The first cooling threshold C1 corresponds to a cooling temperature. When the motor temperature Tm is equal to or higher than the first cooling threshold C1, the flight control device 40 determines that the motor 61 is at a high temperature for the eVTOL 10 after the landing.

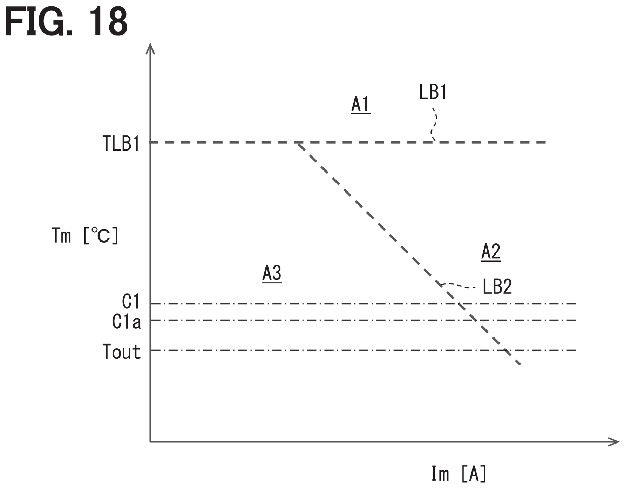

As shown in FIG. 18, the first cooling threshold C1 is set to a temperature between an outside air upper limit temperature Tout and the upper limit temperature TLB1. The outside air upper limit temperature Tout is a highest upper limit temperature in an assumed range assumed as an outside air temperature of the eVTOL 10. This assumed range is a range of the outside air temperature assumed when the eVTOL 10 is on the ground. The outside air upper limit temperature Tout is assumed to be a temperature lower than the upper limit temperature TLB1. For example, the first cooling threshold C1 is set to a temperature higher than the outside air upper limit temperature Tout by a predetermined temperature. The first cooling threshold C1 is set to a temperature lower than the upper limit temperature TLB1 by a predetermined temperature.

Returning to FIG. 17, when the motor temperature Tm is equal to or higher than the first cooling threshold C1, the flight control device 40 proceeds to step S1104. In step S1104, the flight control device 40 performs power-off prohibition processing. In the power-off prohibition processing, processing for prohibiting power-off of the eVTOL 10 is performed. For example, the flight control device 40 sets a prohibition flag for prohibiting the power-off of the eVTOL 10 in the memory 43 or the like. By prohibiting the power-off of the eVTOL 10, stop of the power supply from the battery 31 to the EPU 50 is prohibited. That is, in the power-off prohibition processing, the power supply from the battery 31 to the EPU 50 is forcibly continued.

The flight control device 40 restricts the power-off of the eVTOL 10 by prohibiting the power-off of the eVTOL 10. In the power-off prohibition processing, processing for preventing a power switch of the eVTOL 10 from being operated, processing for preventing the power source of the eVTOL 10 from being turned off even if the power switch of the eVTOL 10 is operated, or the like is performed.

In step S1105, the flight control device 40 performs cooling processing. In the cooling processing, processing for driving the motor 61 such that the cooling device 110 cools the motor 61 is performed. In the cooling processing, the flight control device 40 drives the motor 61 such that the eVTOL 10 does not fly even if the propeller 20 rotates, and the cooling device 110 cools the motor 61. For example, the flight control device 40 performs control while limiting the rotation speed of the motor 61 such that the eVTOL 10 does not float from the ground even if the propeller 20 rotates, and the attitude of the eVTOL 10 does not become unstable. After the eVTOL 10 lands, the flight control device 40 sets the rotation speed of the motor 61 driven for driving the cooling device 110 to a value smaller than the rotation speed of the motor 61 driven for causing the eVTOL 10 to fly.

The flight control device 40 sets the PWM frequency in the cooling processing to a value smaller than the PWM frequency during the flight of the eVTOL 10. In the inverter circuit 85, the number of times of switching of the switching element tends to decrease as the PWM frequency decreases. Therefore, in the cooling processing, the number of times of switching of the switching element in the inverter circuit 85 tends to be smaller than the number of times of switching during the flight of the eVTOL 10. Therefore, in the cooling processing, the heat generated in the inverter device 80 as the inverter circuit 85 is driven tends to be smaller than the heat generated in the inverter device 80 during the flight of the eVTOL 10. A function of performing the processing in step S1105 in the flight control device 40 corresponds to a cooling execution unit. The cooling execution unit may be included in the demagnetization management unit. The number of times of switching is the number of times of switching per unit time.

In step S1106, the flight control device 40 determines whether the motor temperature Tm is lower than a first stop threshold C1a. The first stop threshold C1a is a value determined in advance by a test or the like, and is stored in the memory 43 or the like. The first stop threshold C1a is a threshold for determining whether to stop cooling for the motor 61 performed by the cooling device 110. The first stop threshold C1a is a value indicating that the motor temperature Tm is sufficiently decreased by the cooling processing in the eVTOL 10 after the landing. When the motor temperature Tm becomes lower than the first stop threshold C1a, the flight control device 40 determines that a high-temperature state in which the motor 61 is at a high temperature is resolved by the cooling processing.

As shown in FIG. 18, the first stop threshold C1a is set to a temperature between the first cooling threshold C1 and the outside air upper limit temperature Tout. The first stop threshold C1a is set to a temperature lower than the first cooling threshold C1 by a predetermined temperature. The first stop threshold C1a is set to a temperature higher than the outside air upper limit temperature Tout by a predetermined temperature. The first stop threshold C1a may be set to the same temperature as the first cooling threshold C1 or a temperature equal to or lower than the outside air upper limit temperature Tout. However, in the cooling device 110 of an air-cooling type, it is considered that it is practically difficult to perform cooling to decrease the motor temperature Tm to the outside air upper limit temperature Tout or lower.

Returning to FIG. 17, when the motor temperature Tm is higher than the first cooling threshold C1, the flight control device 40 continuously performs the power-off prohibition processing and the cooling processing until the motor temperature Tm becomes lower than the first stop threshold C1a. The flight control device 40 prohibits to stop the cooling processing by executing the power-off prohibition processing in a state where the cooling processing is being performed. That is, in step S1104, the flight control device 40 restricts the stop of the cooling for the motor 61 performed by the cooling device 110, by restricting the power-off of the eVTOL 10. A function of performing the processing in step S1104 in the flight control device 40 corresponds to a stop restriction unit. The stop restriction unit may be included in the demagnetization management unit.

Since the flight control device 40 performs the cooling processing, heat accumulation in the motor 61, the motor housing 70, and the like is restricted after the eVTOL 10 lands. Therefore, after the landing of the eVTOL 10, the motor temperature Tm is less likely to rise to the upper limit temperature TLB1 due to the heat accumulated in the motor 61 and the motor housing 70. Therefore, it is possible to prevent the demagnetization of the rotor magnet 63a from progressing due to transition of the state of the motor 61 to the abnormal region A1 after the landing of the eVTOL 10. Since the takeoff is prevented from starting in a state in which the motor temperature Tm is high before a next takeoff, the motor temperature Tm is less likely to rise to the upper limit temperature TLB1 during the takeoff.

When the motor temperature Tm becomes lower than the first stop threshold C1a, the flight control device 40 proceeds to step S1107. The flight control device 40 performs cooling stop processing in step S1107. In the cooling stop processing, processing for stopping the cooling processing, processing for stopping the driving of the cooling device 110, or the like is performed. For example, in the cooling stop processing, the driving of the cooling device 110 is stopped by performing processing for stopping the driving of the motor 61.

In step S1108, the flight control device 40 performs release processing for releasing the power-off prohibition. In the release processing, processing for permitting the power-off of the eVTOL 10 is performed. For example, in the release processing, the prohibition flag for prohibiting the power-off of the eVTOL 10 is cleared. In the release processing, processing for making the power switch of the eVTOL 10 operable is performed.

The landing handling process will be described in summary. When the eVTOL 10 is powered off in a state in which the motor 61 is not cooled after the eVTOL 10 lands, there is a concern that dead soak may occur in the eVTOL 10. For example, the dead soak is a phenomenon in which the motor temperature Tm after landing tends to be higher than the motor temperature Tm during flight due to heat generated by the motor 61 during the flight of the eVTOL 10 accumulating in the motor device 60 after the eVTOL 10 is powered off. On the other hand, after the eVTOL 10 lands, the motor 61 is cooled by the cooling processing of the landing handling process, and thus occurrence of the dead soak is prevented. A function of performing the processing in step S1001 in the flight control device 40 may be included in the demagnetization management unit.

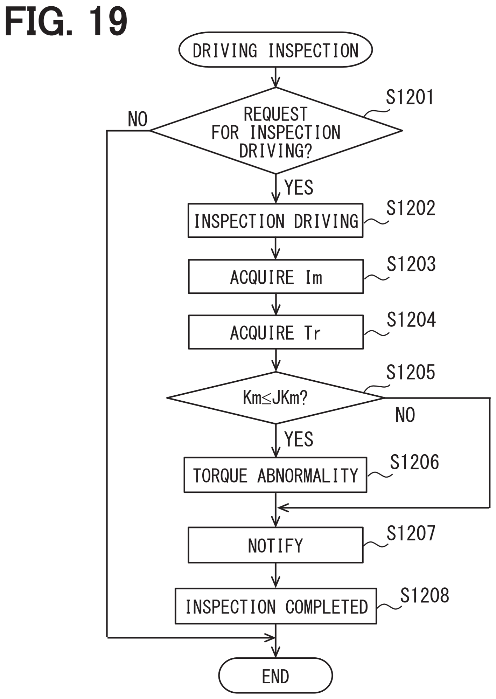

Returning to FIG. 16, after the landing handling process, the flight control device 40 proceeds to step S1002 and performs a driving inspection process. The driving inspection process is a process for inspecting the eVTOL 10 while driving the motor 61. The inspection includes an inspection related to the driving state of the motor 61, an inspection related to the demagnetization state of the rotor magnet 63a, or the like. The driving inspection process will be described with reference to a flowchart of FIG. 19.

In step S1201 of the driving inspection process shown in FIG. 19, the flight control device 40 determines whether there is a request for inspection driving for the motor 61. The inspection driving is to drive the motor 61 to perform driving inspection. The request for the inspection driving is input to the flight control device 40 when the operator operates the maintenance device or the operation unit of the eVTOL 10. When there is no request for the inspection driving, the flight control device 40 determines that it is not necessary to perform the driving inspection of the motor 61, and ends the driving inspection process as it is. When there is a request for the inspection driving, the flight control device 40 proceeds to step S1202.

The flight control device 40 performs inspection driving processing in step S1202. In the inspection driving processing, processing for driving the motor 61 for inspection is performed. In the inspection driving, the flight control device 40 drives the motor 61 such that the eVTOL 10 does not fly even if the propeller 20 rotates. In the inspection driving, the rotation speed of the motor 61 is restricted such that the eVTOL 10 does not float from the ground even if the propeller 20 rotates, and the attitude of the eVTOL 10 does not become unstable. In the inspection driving, the rotation speed of the motor 61 is set to a value smaller than the rotation speed of the motor 61 driven to cause the eVTOL 10 to fly.

In step S1203, the flight control device 40 acquires the motor current Im as in step S108 of the first embodiment. In step S1204, the flight control device 40 acquires an output torque Tr [Nm] of the motor 61. When the driving inspection of the eVTOL 10 is performed, the output torque Tr is detected by the maintenance device or the like including a torque sensor. For example, the flight control device 40 detects the output torque Tr using the detection signal of the torque sensor.

In step S1205, the flight control device 40 determines whether a torque constant Km [Nm/A] is equal to or less than a constant threshold JKm. That is, the flight control device 40 determines whether the output torque Tr with respect to the motor current Im is equal to or less than a predetermined value. The torque constant Km is a value indicating a torque per unit current. The flight control device 40 calculates a torque constant Km using the motor current Im and the output torque Tr. The constant threshold JKm is a value determined in advance by a test or the like, and is stored in the memory 43 or the like. The constant threshold JKm is a value indicating that the output torque Tr decreases as the torque constant Km becomes insufficient from the viewpoint of causing the eVTOL 10 to fly.

When the torque constant Km is equal to or less than the constant threshold JKm, the flight control device 40 determines that a torque abnormality occurs and proceeds to step S1206. The flight control device 40 performs torque abnormality processing in step S1206. In the torque abnormality processing, a diagnosis that a torque abnormality occurs is stored in the memory 43 or the like as torque abnormality information. The flight control device 40 performs notification processing in step S1207. In the notification processing, the occurrence of the torque abnormality in the eVTOL 10 is notified to the pilot, the external facility, or the like.

On the other hand, when the torque constant Km is not equal to or less than the constant threshold JKm, the flight control device 40 determines that no torque abnormality occurs, and proceeds to step S1207 to perform the notification processing. In the notification processing, the pilot, the external facility, or the like is notified that no torque abnormality occurs in the eVTOL 10.

In step S1208, the flight control device 40 performs inspection completion processing. In the inspection completion processing, inspection completion information indicating that the driving inspection of the motor 61 is completed is stored in the memory 43 or the external device such as the maintenance device. The inspection completion information includes a date and time when the driving inspection is performed, presence or absence of the torque abnormality, a value of the output torque Tr, a value of the torque constant Km, and the like. By leaving the record of the driving inspection in the memory 43 or the external device in this way, appropriate airframe management can be performed.

The operator performs a component replacement operation or the like according to the information recorded in the management storage unit or the memory 43. For example, when flag history information indicating a history in which a deterioration flag is set remains in the management storage unit, the operator performs component replacement according to both the flag information during the flight and the torque abnormality information in the driving inspection. Examples of the deterioration flag include the first flag, the second flag, and the third flag. The operator may determine to replace the components such as the rotor 63 and the rotor magnet 63a only by the flag information acquired during the flight of the eVTOL 10, but may determine necessary measures such as the component replacement after performing inspection such as the driving inspection again on the ground.

In step S1207, the flight control device 40 may notify both the flag history information during the flight and the torque abnormality information in the driving inspection. In step S1207, the flight control device 40 may notify information indicating the demagnetization state of the rotor magnet 63a, information indicating necessity of component replacement, or the like.

For example, when there is a history that the deterioration flag is set and the torque abnormality is diagnosed in the driving inspection, the flight control device 40 notifies the history and the diagnosis result. The flight control device 40 notifies that the motor output decreases due to the progress of the irreversible demagnetization of the rotor magnet 63a, the motor 61 or the motor component needs to be replaced, or the like.

When there is a history that the deterioration flag is set, but the torque abnormality is not diagnosed in the driving inspection, the flight control device 40 notifies the history and the diagnosis result. The flight control device 40 notifies that the motor 61 is in a state in which the deterioration flag is set, but the irreversible demagnetization of the rotor magnet 63a does not actually progress. In this case, the flight control device 40 may issue a notification for requesting the operator to perform an additional inspection to confirm that no abnormality occurs in the motor 61.

When there is no history in which the deterioration flag is set but the torque abnormality is diagnosed in the driving inspection, the flight control device 40 notifies the history and the diagnosis result. The flight control device 40 notifies that the motor 61 cannot provide a normal output due to a factor other than the demagnetization or the deterioration of the rotor magnet 63a. That is, the flight control device 40 notifies that an abnormality of the EPU 50 occurs. In this case, the flight control device 40 may notify that an inspection or investigation different from the driving inspection is necessary.

When there is no history that the deterioration flag is set and the torque abnormality is not diagnosed in the driving inspection, the flight control device 40 notifies the history and the diagnosis result. The flight control device 40 notifies that the EPU 50 is normal.

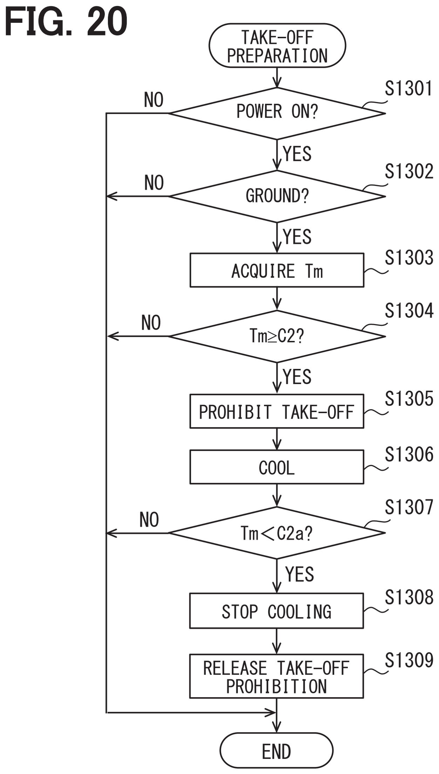

Returning to FIG. 16, after the driving inspection process, the flight control device 40 proceeds to step S114 and performs the maintenance process. Thereafter, the flight control device 40 proceeds to step S1003 and performs a take-off preparation process. The take-off preparation process is a process of advancing the preparation for the take-off of the eVTOL 10. The take-off preparation process will be described with reference to a flowchart shown in FIG. 20.

In step S1301 of the take-off preparation process shown in FIG. 20, the flight control device 40 determines whether the power source of the eVTOL 10 is turned on. When the power source of the eVTOL 10 is turned on, the battery 31 can supply power to the EPU 50. In step S1302, the flight control device 40 determines whether the eVTOL 10 is on the ground. That is, the flight control device 40 determines whether the eVTOL 10 is flying. When the eVTOL 10 is not flying, the flight control device 40 determines that the eVTOL 10 is on the ground.

When at least one of a fact that the power source of the eVTOL 10 is turned on and a fact that the eVTOL 10 is on the ground is denied, the flight control device 40 ends the take-off preparation process as it is. When both the fact that the power source of the eVTOL 10 is turned on and the fact that the eVTOL 10 is on the ground are confirmed, the flight control device 40 proceeds to step S1303. In step S1303, the flight control device 40 acquires the motor temperature Tm as in step S103 of the first embodiment.

In step S1304, the flight control device 40 determines whether the motor temperature Tm is equal to or higher than a second cooling threshold C2. The second cooling threshold C2 is a value determined in advance by a test or the like, and is stored in the memory 43 or the like. The second cooling threshold C2 is a value indicating that the motor temperature Tm is high to such an extent that the cooling for the motor 61 is necessary in the eVTOL 10 before the take-off, a value indicating the demagnetization of the rotor magnet 63a may progress, or the like. The second cooling threshold C2 corresponds to a limit temperature. When the motor temperature Tm is equal to or higher than the second cooling threshold C2, the flight control device 40 determines that the motor temperature Tm is at a high temperature for the eVTOL 10 before the take-off.

Similarly to the first cooling threshold C1, the second cooling threshold C2 is set to a temperature between the outside air upper limit temperature Tout and the upper limit temperature TLB1. The second cooling threshold C2 is set to a temperature higher than the outside air upper limit temperature Tout by a predetermined temperature. The second cooling threshold C2 is set to a temperature lower than the upper limit temperature TLB1 by a predetermined temperature. The second cooling threshold C2 may be set to a value different from the first cooling threshold C1 or the first stop threshold C1a, or may be set to the same value as the first cooling threshold C1 or the first stop threshold C1a.

When the motor temperature Tm is equal to or higher than the second cooling threshold C2, the flight control device 40 proceeds to step S1305. In step S1305, the flight control device 40 performs takeoff prohibition processing. In the take-off prohibition processing, processing for prohibiting the take-off of the eVTOL 10 is performed. For example, the flight control device 40 sets a prohibition flag for prohibiting the take-off of the eVTOL 10 in the memory 43 or the like. The flight control device 40 restricts the takeoff of the eVTOL 10 by prohibiting the take-off of the eVTOL 10. In the take-off prohibition processing, processing of restricting the pilot to perform an operation for causing the eVTOL 10 to take off is performed. A function of performing the processing in step S1305 in the flight control device 40 corresponds to a restriction execution unit. The restriction execution unit may be included in the demagnetization management unit.

In step S1306, the flight control device 40 performs the cooling processing as in step S1105. The flight control device 40 performs the cooling processing when the take-off of the eVTOL 10 is restricted due to the motor temperature Tm being equal to or higher than the second cooling threshold C2. A function of performing the processing in step S1306 in the flight control device 40 corresponds to a restriction cooling unit and the cooling execution unit. The restriction cooling unit and the cooling execution unit may be included in the demagnetization management unit.

In step S1307, the flight control device 40 determines whether the motor temperature Tm is lower than a second stop threshold C2a. The second stop threshold C2a is a value determined in advance by a test or the like, and is stored in the memory 43 or the like. The second stop threshold C2a is a value indicating that the motor temperature Tm is sufficiently decreased by the cooling processing in the eVTOL 10 before the take-off. When the motor temperature Tm is lower than the second stop threshold C2a, the flight control device 40 determines that the high-temperature state of the motor 61 is resolved by the cooling processing. When the motor temperature Tm is higher than the second cooling threshold C2, the flight control device 40 continuously performs the take-off prohibition processing and the cooling processing until the motor temperature Tm becomes lower than the second stop threshold C2a.

The second stop threshold C2a is set to a temperature between the second cooling threshold C2 and the outside air upper limit temperature Tout. The second stop threshold C2a is set to a temperature lower than the second cooling threshold C2 by a predetermined temperature. The second stop threshold C2a is set to a temperature higher than the outside air upper limit temperature Tout by a predetermined temperature. The second stop threshold C2a may be set to the same temperature as the second cooling threshold C2 or a temperature equal to or lower than the outside air upper limit temperature Tout. The second stop threshold C2a may be set to a value different from the first cooling threshold C1 or the first stop threshold C1a, or may be set to the same value as the first cooling threshold C1 or the first stop threshold C1a.

When the motor temperature Tm becomes lower than the second stop threshold C2a, the flight control device 40 proceeds to step S1308. In step S1308, the flight control device 40 performs the cooling stop processing as in step S1107.

In step S1309, the flight control device 40 performs release processing for releasing the take-off prohibition of the eVTOL 10. In the release processing, processing for permitting the take-off of the eVTOL 10 is performed. For example, in the release processing, the prohibition flag for prohibiting the take-off of the eVTOL 10 is cleared. Processing for permitting the pilot to perform an operation for causing the eVTOL 10 to take off is performed.

The take-off preparation process will be described in summary. In the eVTOL 10, in general, power consumed during a take-off operation for lifting the eVTOL 10 against a gravity is larger than power consumed when the eVTOL 10 flies horizontally. That is, a current flowing through the motor 61 during the take-off is larger than a current flowing through the motor 61 during the horizontal flight. During the take-off, since cooling for the motor 61 by flight wind as during the horizontal flight cannot be expected, it is considered that the motor temperature Tm tends to increase. Therefore, in the eVTOL 10, when the take-off is started while the motor temperature Tm is already high before the take-off, the motor temperature Tm further rises due to a large current, and a use time in the demagnetization region A2 increases, so that there is a concern that the demagnetization progress of the rotor magnet 63a may be accelerated. In this case, there is a concern that the motor temperature Tm may rise to the abnormal region A1 even though no abnormality occurs in EPU 50, or the motor 61 cannot output the output torque Tr required for the takeoff due to the reversible demagnetization of the rotor magnet 63a.

Meanwhile, in the take-off preparation process, when the motor temperature Tm is at a high temperature, the motor 61 is cooled before the take-off. Therefore, it is possible to prevent the demagnetization progress of the rotor magnet 63a from being accelerated during the take-off, the motor temperature Tm from rising to the abnormal region A1 even though no abnormality of the EPU 50 occurs, and insufficiency of the output torque Tr caused by the reversible demagnetization of the rotor magnet 63a. A function of performing the processing in step S1003 in the flight control device 40 may be included in the demagnetization management unit.

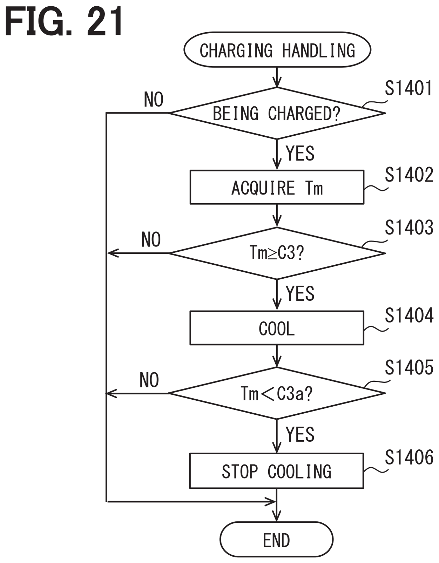

Returning to FIG. 16, after the take-off preparation process, the flight control device 40 proceeds to step S1004 and performs a charging handling process. The charging handling process is a process performed in response to charging of the battery 31. The charging handling process will be described with reference to a flowchart of FIG. 21.

In step S1401 of the charging handling process shown in FIG. 21, the flight control device 40 determines whether the battery 31 is being charged. That is, the flight control device 40 determines whether the battery 31 is being charged by a charging device provided in the external facility or the like. For example, when a power storage amount of the battery 31 is increasing, the flight control device 40 determines that the battery 31 is being charged. When the battery 31 is not being charged, the flight control device 40 ends the charging handling process as it is. When the battery 31 is being charged, the flight control device 40 proceeds to step S1402.

In step S1402, the flight control device 40 acquires the motor temperature Tm as in step S103 of the first embodiment. In step S1403, the flight control device 40 determines whether the motor temperature is equal to or higher than a third cooling threshold C3. The third cooling threshold C3 is a value determined in advance by a test or the like, and is stored in the memory 43 or the like. The third cooling threshold C3 is a value indicating that the motor temperature is high to such an extent that the cooling for the motor 61 is necessary in the eVTOL 10 that is being charged, a value indicating the demagnetization of the rotor magnet 63a may progress, or the like. The third cooling threshold C3 corresponds to a charging temperature. When the motor temperature Tm is equal to or higher than the third cooling threshold C3, the flight control device 40 determines that the motor 61 is at a high temperature for the eVTOL 10 that is being charged.

Similarly to the first cooling threshold C1, the third cooling threshold C3 is set to a temperature between the outside air upper limit temperature Tout and the upper limit temperature TLB1. The third cooling threshold C3 is set to a temperature higher than the outside air upper limit temperature Tout by a predetermined temperature. The third cooling threshold C3 is set to a temperature lower than the upper limit temperature TLB1 by a predetermined temperature. The third cooling threshold C3 may be set to a value different from the cooling thresholds C1, C2 or the stop thresholds C1a, C2a, or may be set to the same value as the cooling thresholds C1, C2 or the stop thresholds C1a, C2a.

When the motor temperature Tm is equal to or higher than the third cooling threshold C3, the flight control device 40 proceeds to step S1404. In step S1404, the flight control device 40 performs the cooling processing as in step S1105. The flight control device 40 cools the motor 61 by the cooling device 110 while the battery 31 is being charged. A function of performing the processing in step S1404 in the flight control device 40 corresponds to a charging cooling unit and a cooling execution unit. The charging cooling unit and the cooling execution unit may be included in the demagnetization management unit.

While the battery 31 is being charged, it is considered that the eVTOL 10 is in a power-off state. For example, the power supply from the battery 31 to the EPU 50 is cut off by a cutoff switch. The cutoff switch is a switch such as an SMR. The SMR is an abbreviation of system main relay. Therefore, when the cooling processing is to be performed, the flight control device 40 switches the cutoff switch to a conduction state, for example, and thus the power is supplied from the battery 31 to the EPU 50. Then, the flight control device 40 performs the motor cooling by the cooling device 110 by driving the motor 61.

In step S1405, the flight control device 40 determines whether the motor temperature Tm is lower than a third stop threshold C3a. The third stop threshold C3a is a value determined in advance by a test or the like, and is stored in the memory 43 or the like. The third stop threshold C3a is a value indicating that the motor temperature Tm is sufficiently decreased by the cooling processing in the eVTOL 10 that is being charged. When the motor temperature Tm is lower than the third stop threshold C3a, the flight control device 40 determines that the high-temperature state of the motor 61 is resolved by the cooling processing. When the motor temperature Tm is higher than the third cooling threshold C3, the flight control device 40 continuously performs the cooling processing until the motor temperature Tm becomes lower than the third stop threshold C3a.

The third stop threshold C3a is set to a temperature between the third cooling threshold C3 and the outside air upper limit temperature Tout. The third stop threshold C3a is set to a temperature lower than the third cooling threshold C3 by a predetermined temperature. The third stop threshold C3a is set to a temperature higher than the outside air upper limit temperature Tout by a predetermined temperature. The third stop threshold C3a may be set to the same temperature as the third cooling threshold C3 or a temperature equal to or lower than the outside air upper limit temperature Tout. The third stop threshold C3a may be set to a value different from the cooling thresholds C1, C2 or the stop thresholds C1a, C2a, or may be set to the same value as the cooling thresholds C1, C2 or the stop thresholds C1a, C2a.

When the motor temperature Tm becomes lower than the third stop threshold C3a, the flight control device 40 proceeds to step S1406. In step S1406, the flight control device 40 performs the cooling stop processing as in step S1107. The battery 31 is continuously charged until the power storage amount of the battery 31 reaches a predetermined amount, regardless of whether the motor temperature Tm is higher than the third cooling threshold C3 or the third stop threshold C3a.

The charging handling process will be described in summary. A state in which the motor temperature Tm is high before the takeoff of the eVTOL 10 is likely to occur when flying again without a time interval from a previous flight. The battery 31 is often charged before the eVTOL 10 flies again. Therefore, in the charging handling process, since the motor 61 is cooled while the battery 31 is being charged, not only the takeoff is less likely to be restricted due to the motor cooling, but also it is possible to avoid a situation in which the eVTOL 10 flies again with the power storage amount of the battery 31 being reduced by an amount corresponding to the cooling for the motor 61. A function of performing the processing in step S1004 in the flight control device 40 may be included in the demagnetization management unit.

According to the present embodiment, the flight control device 40 restricts the take-off of the eVTOL 10 when the motor temperature Tm is equal to or higher than the first cooling threshold C1. In the configuration, the motor temperature Tm can be prevented from further increasing from the first cooling threshold C1 as the eVTOL 10 takes off. Therefore, the motor temperature Tm can be prevented from rising to such an extent that the demagnetization of the rotor magnet 63a occurs when the eVTOL 10 takes off.

According to the present embodiment, the flight control device 40 cools the motor 61 by the cooling device 110 when the take-off of the eVTOL 10 is restricted due to the motor temperature Tm being equal to or higher than the first cooling threshold C1. In the configuration, after the motor 61 is cooled until the motor temperature Tm becomes lower than the first cooling threshold C1, the take-off of the eVTOL 10 can be started. Therefore, the motor temperature Tm can be prevented from becoming excessively high during the take-off of the eVTOL 10.

A state in which the motor 61 is already at a high temperature before the takeoff is likely to occur when flying again without a time interval from a previous flight. If no current is supplied to the motor 61 on the ground, the motor temperature Tm eventually decreases to near the outside air temperature, but it is considered that efficiency in operation decreases when the eVTOL 10 cannot fly during that time. Therefore, in the present embodiment, when the motor temperature Tm is high to such an extent that the take-off of the eVTOL 10 is restricted, the motor 61 is actively cooled by the cooling device 110 to shorten a time during which the take-off cannot be performed due to the high temperature of the motor 61. Thus, the efficiency in operation can be increased.

According to the present embodiment, the flight control device 40 cools the motor 61 by the cooling device 110 when the motor temperature Tm is equal to or higher than the third cooling threshold C3 while the battery 31 is being charged. In the configuration, by using a time required for charging the battery 31, the motor 61 can be cooled to decrease the motor temperature Tm. Therefore, a delay in the take-off of the eVTOL 10 by the time required for cooling the motor 61 can be prevented. Unlike a configuration in which the cooling device 110 cools the motor 61 after the charging of the battery 31 is completed, it is possible to avoid a situation in which the eVTOL 10 has to take off in a state in which the power storage amount of the battery 31 is reduced by the amount corresponding to the cooling for the motor 61.

According to the present embodiment, the flight control device 40 restricts the stop of the cooling for the motor 61 performed by the cooling device 110 when the motor temperature Tm is equal to or higher than the first cooling threshold C1 in a state in which the cooling device 110 is cooling the motor 61. In the configuration, it is possible to prevent a situation in which, even though the motor temperature Tm is high to such an extent that the cooling for the motor 61 is necessary, the cooling for the motor 61 is stopped and the heat is accumulated in the motor 61 and the motor housing 70.

According to the present embodiment, the flight control device 40 restricts the stop of the cooling for the motor 61 performed by the cooling device 110 when the motor temperature Tm is equal to or higher than the first cooling threshold C1 after the eVTOL 10 lands. In the configuration, it is possible to prevent the motor temperature Tm from rising more than during the flight of the eVTOL 10 due to the heat of the motor 61 accumulating in the motor housing 70 after the landing of the eVTOL 10.

A main reason why the motor 61 is at a high temperature during parking in which the eVTOL 10 is stopped on the ground is that the motor 61 is in a high-temperature state at the time of landing, and the eVTOL 10 is powered off in this state. For example, when the driving of the cooling device 110 is stopped along with the power-off of the eVTOL 10, there is a concern that the heat of the motor 61 in a high-temperature state at the time of landing may accumulated in the motor housing 70, the motor temperature Tm may increase, and the demagnetization of the rotor magnet 63a may occur. Meanwhile, in the present embodiment, even after the eVTOL 10 lands, the power-off of the eVTOL 10 is prohibited until the motor 61 is cooled, and the cooling device 110 is continuously driven, which is effective.

According to the present embodiment, when the eVTOL 10 is not flying, the flight control device 40 drives the motor 61 such that the rotation speed of the motor 61 is smaller than when the motor 61 causes the eVTOL 10 to fly, and the cooling device 110 cools the motor 61. In the configuration, the rotation speed of the motor 61 when the motor 61 drives the cooling device 110 can be set to a sufficiently small rotation speed to such an extent that the cooling device 110 can generate cooling air or the like for cooling the motor 61. Therefore, it is possible to avoid a situation in which the motor temperature Tm rises even though the cooling device 110 is cooling the motor 61. Since the rotation speed of the propeller 20 can be reduced by reducing the motor rotation speed as much as possible, it is possible to prevent the eVTOL 10 from floating from the ground and the attitude of the eVTOL 10 from becoming unstable.

According to the present embodiment, the flight control device 40 sets the PWM frequency for driving the motor 61 such that the cooling device 110 cools the motor 61 to a value smaller than the PWM frequency for driving the motor 61 to cause the eVTOL 10 to fly. In the configuration, the number of times of switching of the inverter circuit 85 when the cooling device 110 cools the motor 61 tends to be smaller than the number of times of switching of the inverter circuit 85 when the eVTOL 10 flies. Therefore, the heat generated by driving the inverter circuit 85 when the cooling device 110 cools the motor 61 can be reduced as compared with the heat generated by driving the inverter circuit 85 when the eVTOL 10 flies.

The PWM frequency during flight is often set to a frequency high to a certain extent or more to restrict current ripple, but a low frequency is advantageous from a viewpoint of restricting the heat of the inverter. Since the cooling control for cooling the motor 61 drives the motor 61 at a rotation speed lower than that during flight, there is little need to restrict the current ripple. Therefore, in the cooling control, it is preferable to prioritize restriction of the heat of the inverter and set the PWM frequency to a low frequency.

In the present embodiment, in a configuration in which the cooling device 110 of an air-cooling type is used for cooling the motor 61, it is effective to perform cooling by the cooling device 110 to restrict the demagnetization of the rotor magnet 63a caused by a cooling effect of the air-cooling type being relatively severe. On the other hand, in a configuration in which the cooling device 110 of a liquid-cooling type is used for cooling the motor 61, since an output margin in consideration of the demagnetization is reduced by restricting the irreversible demagnetization, an effect of reducing the size of the motor 61 can be obtained similarly to that of the air-cooling type. The liquid-cooling type has an effect of preventing a high-temperature abnormality, which reduces a margin for a cooling performance, and also has an effect of reducing a size of the cooling mechanism.

<Other Embodiments>

The disclosure in the present description is not limited to the illustrated embodiments. The disclosure encompasses the illustrated embodiments and modifications thereof made by those skilled in the art. For example, the disclosure is not limited to the combination of components and elements described in the embodiments, and various modifications and implementations can be performed. The disclosure may be implemented in various combinations. The disclosure may have an additional portion that can be added to the embodiments. The disclosure encompasses the omission of components and elements of the embodiments. The disclosure encompasses the replacement or combination of components, elements between one embodiment and another embodiment. The disclosed technical scope is not limited to those described in the embodiments. The disclosed technical scope is indicated by the description of the claims, and should be construed to include all changes within the meaning and range equivalent to the description of the claims.

In each of the embodiments described above, a state region indicating the state of the motor 61 may be set in any manner. For example, the demagnetization region A2 may include multiple regions as in the third embodiment. The state region may include at least one of the abnormal region A1, the demagnetization region A2, and the general region A3. The abnormal region A1 may be a region specified not only by the motor temperature Tm but also by both the motor temperature Tm and the motor current Im. For example, the first boundary line LB1 may be inclined with respect to the axis of the motor current Im.

In each of the embodiments described above, the demagnetization counter Cd may be counted when the state of the motor 61 is likely to cause the demagnetization of the rotor magnet 63a. For example, the demagnetization counter Cd may be counted when the state of the motor 61 is in the abnormal region A1, in addition to when the state of the motor 61 is in the demagnetization region A2. That is, the accumulated demagnetization time corresponding to the demagnetization counter Cd may include a time when the state of the motor 61 is in the abnormal region A1 in addition to the time when the state of the motor 61 is in the demagnetization region A2.

In each of the embodiments described above, when the first flag is not set, the motor current Im may not be limited. For example, even if the first flag is set, when the second flag is not set, the motor current Im may not be limited. For example, in the first embodiment, when the correction amount Ac is not equal to or greater than the correction threshold TAc, the first limit processing may not be performed. In the fourth embodiment, when the correction amount Ac is not the upper limit value of the correction amount range, the first limit processing may not be performed.

In each of the embodiments described above, when the second flag is set, the second limit processing may be performed regardless of the presence or absence of the third flag. For example, when the second flag is set, the limit on the motor current Im may not be mitigated.

In each of the embodiments described above, a parameter for determining whether to set the flag such as the first flag may be the same in at least two of the first flag, the second flag, and the third flag. For example, in the first embodiment, the demagnetization counter Cd may be used to determine whether to set the first flag and the second flag. For example, the counter threshold TCd used for determining whether to set the second flag is preferably set to a value larger than the counter threshold TCd used for determining whether to set the first flag.

In each of the embodiments described above, a history of the motor temperature Tm and a history of the motor current Im may be included in one piece of information such as the demagnetization counter Cd, or may be included in separate pieces of information. For example, the history of the motor temperature Tm may be included in temperature history information. The history of the motor current Im may be included in current history information. In the configuration, it may be determined whether the accumulated driving time of the motor 61 reaches the threshold time individually for each of the temperature history information and the current history information. For example, in the first embodiment, a counter for the temperature history information may be set, and it may be determined whether a counter value reaches a threshold. A counter for the current history information may be set, and it may be determined whether a counter value reaches a threshold. Then, when each of the counter for the temperature history information and the counter for the current history information reaches the threshold, the first flag may be set.

In each of the embodiments described above, the cooling thresholds C1, C2, and C3 and the stop thresholds C1a, C2a, and C3a may be variably set according to the outside air temperature or the like. For example, the cooling thresholds C1, C2, and C3 may be set to decrease as the outside air temperature increases, or may be set to increase as the outside air temperature decreases. Each of the cooling thresholds C1, C2, and C3 may be set to a temperature higher than the outside air temperature by a predetermined temperature.

In each of the embodiments described above, the driving source of the cooling device 110 may not be the motor 61. For example, in the eVTOL 10, the cooling device 110 may be driven by an independent driving source provided independently of the motor 61. The independent driving source may include an independent motor provided independently of the motor 61. In the configuration, even if the driving of the motor 61 is stopped, the cooling device 110 can be driven by the independent driving source. For example, in the cooling device 110 of an air-cooling type, the air cooling fan may blow air by driving the independent driving source. In the cooling device 110 of a liquid-cooling type, the refrigerant pump may pump the refrigerant by driving the independent driving source.

In each of the embodiments described above, when the eVTOL 10 is on the ground, the motor 61 may be cooled by a cooling facility provided in the external facility or the like. The cooling facility is a stationary facility capable of cooling the motor 61, the EPU 50, and the eVTOL 10. The cooling facility may include the air cooling fan. The cooling facility can perform wireless communication or wired communication with the flight control device 40. The cooling facility is driven to cool the motor 61 when a cooling request for cooling the motor 61 is received from the flight control device 40.

In each of the embodiments described above, the temperature sensor 65 may be any type of sensor as long as the sensor can detect the temperature of the motor 61. For example, the temperature sensor 65 may include a thermocouple. The temperature sensor 65 may include an electric resistor, a thermistor, or the like.

In each of the embodiments described above, the temperature sensor 65 may detect a temperature of any part in the eVTOL 10 as long as the motor temperature Tm can be detected. For example, the temperature sensor 65 may detect a temperature of the motor stator 62 as the motor temperature Tm. In a configuration in which the cooling device 110 of a liquid-cooling type is provided in the EPU 50, the temperature sensor 65 may detect a temperature of the refrigerant as the motor temperature Tm. For example, in the EPU 50 or the motor 61, as long as the temperature sensor 65 can be provided at a part where a temperature is desired to be known, it may be determined that the temperature of the part where the temperature is desired to be known can be detected simply by a detection value of the temperature sensor 65. Even if the temperature sensor 65 cannot be directly provided at a part where the temperature is desired to be known, the determination may be made based on a detection value of the temperature sensor 65 provided at a related part. The temperature of the part where the temperature is desired to be known is included in the motor temperature Tm.

In each of the embodiments described above, the flight control device 40 may estimate the motor temperature Tm using the detection value of the temperature sensor 65. For example, the flight control device 40 may estimate the temperature of the rotor magnet 63a as the motor temperature Tm using the detection value of the temperature sensor 65 and a parking history of the eVTOL 10. Examples of the parking history include a parking time of parking, an outside air temperature history indicating a history of the outside air temperature around the eVTOL 10. When a temperature sensor cannot be provided at a part where the temperature is desired to be known, but the temperature of the part is desired to be calculated as accurately as possible, the temperature of the part where the temperature is desired to be known may be estimated using the detection value of the temperature sensor 65. For example, a temperature really desired to be known is the temperature of the rotor magnet 63a, but may be estimated based on the temperature of the motor stator 62 and the parking history. The temperature of the rotor magnet 63a may be estimated based on the temperature of the liquid refrigerant and the parking history. In an environment in which the airframe 11 is exposed directly to sunlight, the temperature of the motor 61 may also be equal to or higher than the outside air temperature over long-time parking, and thus the temperature of the rotor magnet 63a may be estimated in consideration of a sunshine condition of a parking place.

In each of the embodiments described above, the flight control device 40 may estimate the motor temperature Tm without using the temperature sensor 65. For example, the flight control device 40 may estimate that the motor temperature Tm is high when the parking time is short. Examples of the case where the parking time is short include a case where an elapsed time from the end of a previous flight is short. In general, when the motor 61 and the cooling device 110 are stopped after landing, the temperature of the motor 61 temporarily increases due to the stop of a cooling function and then gradually decreases to near the outside air temperature. Therefore, whether the temperature of the motor 61 is high to such an extent that the cooling is necessary can be estimated only based on the parking time without depending on the temperature sensor 65.

The flight control device 40 may combine at least two of the configuration in which the motor temperature Tm is detected using only the temperature sensor 65, the configuration in which the motor temperature Tm is estimated using the detection value of the temperature sensor 65, and the configuration in which the motor temperature Tm is estimated without using the temperature sensor 65. For example, the flight control device 40 may determine that the motor 61 is at a high temperature by combining a configuration in which the motor temperature Tm is estimated using a fact that the parking time is short and a configuration in which the detection value of the temperature sensor 65 indicates that the temperature of the motor stator 62 is high.

In each of the embodiments described above, the abnormal region A1 may be a high-temperature region. Examples of the high-temperature region include a high-temperature region in which an influence of the reversible demagnetization is significant and an output required for flight may not be provided, and a high-temperature region exceeding a temperature range that may be a normal driving condition. Examples of the temperature range that may be a normal driving condition include a design value.

In each of the embodiments described above, at least a part of the programs stored in the memory 43 may be rewritten through wireless communication such as OTA. The OTA is an abbreviation of over the air.

In each of the embodiments described above, at least one of the inverter control unit 81 and the flight control device 40 may perform the flight control process. The propulsion control program may be included in at least one of the programs 44, 84. At least one of the processors 42 and 82 may be included in at least one processing unit that executes the propulsion control program.

In each of the embodiments described above, the vertical take-off and landing aircraft on which the flight control device 40 is mounted may be an electric-type vertical take-off and landing aircraft in which at least one propeller 20 is driven by at least one EPU 50. For example, one propeller 20 may be driven by multiple EPUs 50, or multiple propellers 20 may be driven by one EPU 50.

In each of the embodiments described above, the flight vehicle on which the EPU 50 is mounted may not be the vertical take-off and landing aircraft as long as being of an electric type. For example, the flight vehicle may be a flight vehicle capable of taking off and landing while gliding, as an example of the electric aircraft. The flight vehicle may be a rotorcraft, or a fixed-wing aircraft. The flight vehicle may be an unmanned flight vehicle carrying no person. The unmanned flight vehicle may or may not include the occupant compartment 14. The pilot may remotely control the flight vehicle.

In each of the embodiments described above, the moving object on which the EPU 50 is mounted may not be a flight vehicle as long as the moving object is movable by rotation of the rotary body. For example, the moving object may be a vehicle, a ship, a construction machine, or an agricultural machine. For example, when the moving object is a vehicle, a construction machine, or the like, the rotary body is a movement-wheel or the like, and an output shaft portion is an axle or the like. When the moving object is a ship, the rotary body is a propulsion-screw propeller or the like, and the output shaft portion is a propeller shaft or the like.

In each of the embodiments described above, the flight control device 40 or the inverter control unit 81 is provided by a control system including at least one computer. The control system includes at least one processor that is hardware. When the processor is referred to as a hardware processor, the hardware processor can be implemented by (i), (ii), or (iii) to be described below.

(i) The hardware processor may be a hardware logic circuit. In this case, the computer is implemented by a digital circuit including many programmed logic units (gate circuits). The digital circuit may include a memory in which at least one of a program and data is stored. The computer may be implemented by an analog circuit. The computer may be implemented by a combination of the digital circuit and the analog circuit.

(ii) The hardware processor may be at least one processor core that executes a program stored in at least one memory. In this case, the computer includes at least one memory and at least one processor core. The processor core is referred to as a CPU, for example. The memory is also referred to as a storage medium. The memory is a non-transitory and tangible storage medium non-temporarily storing "at least one of a program and data" readable by the processor.

(iii) The hardware processor may be a combination of (i) and (ii) described above. (i) and (ii) are provided on different chips or a common chip.

That is, at least one of means and functions provided by the flight control device 40 and the inverter control unit 81 can be provided by hardware alone, software alone, or a combination thereof.

(Disclosure of technical idea)

This description discloses multiple technical ideas described in multiple items listed below. Some items may be written in a multiple dependent form with subsequent items referring to the preceding item as an alternative. Some items may be written in a multiple dependent form referring to another multiple dependent form. These items written in a multiple dependent form define multiple technical ideas.

(Technical idea 1)

A propulsion system (30) is configured to propel a moving object (10). The propulsion system includes: a motor (61) including a permanent magnet (63a) and configured to be driven to propel the moving object; an information acquisition unit (S103, S108, S801, S902) configured to acquire driving information indicating a driving state of the motor; and a demagnetization management unit (S109 to S113, S701, S802) configured to manage demagnetization of the permanent magnet using the driving information acquired by the information acquisition unit.

(Technical idea 2)

The propulsion system according to technical idea 1, in which the information acquisition unit includes a history acquisition unit (S110) configured to acquire, as the driving information, motor history information (Cd) including a history of a motor temperature (Tm) of the motor and a history of a motor current (Im) of the motor, and the demagnetization management unit is configured to manage the demagnetization of the permanent magnet using the motor history information.

(Technical idea 3)

The propulsion system according to technical idea 1 or 2, in which the demagnetization management unit includes an accumulation determination unit (S109 to S111) configured to determine whether an accumulated driving time (Cd) of the motor in a state, in which a condition causing the demagnetization of the permanent magnet is satisfied, reaches a threshold time (TCd), and the demagnetization management unit is configured to manage the demagnetization of the permanent magnet using a determination result of the accumulation determination unit.

(Technical idea 4)

The propulsion system according to any one of technical ideas 1 to 3, in which the demagnetization management unit includes an output determination unit (S801, S901, S903) configured to determine whether an output value of the motor is insufficient with respect to a target value, and the demagnetization management unit is configured to manage the demagnetization of the permanent magnet using a determination result of the output determination unit.

(Technical idea 5)

The propulsion system according to any one of technical ideas 1 to 4, in which the demagnetization management unit includes a progress determination unit (S203) configured to determine whether an insufficiency condition, which indicates insufficiency of a magnetic force caused by progress of the demagnetization, is satisfied for the permanent

**EP 4 725 842 A1**

magnet, and a current limit unit (S205, S207) configured to limit a motor current (Im) of the motor when the insufficiency condition is satisfied.

(Technical idea 6)

The propulsion system according to technical idea 5, in which the current limit unit includes a temperature handling unit (S205, S207) configured to adjust a limit degree of the motor current according to a motor temperature (Tm) of the motor.

(Technical idea 7)

The propulsion system according to technical idea 5 or 6, in which the current limit unit includes: a non-limit unit (S207, S303) configured not to limit the motor current, a specific limit unit (S207, S304) configured to limit the motor current such that the motor current is not cut off, a current cutoff unit (S207, S305) configured to cut off the motor current, and a limit selection unit (S301, S302) configured to select the non-limit unit, the specific limit unit, and the current cutoff unit according to a motor temperature (Tm) of the motor.

(Technical idea 8)

The propulsion system according to any one of technical ideas 5 to 7, in which the progress determination unit includes a correction determination unit (S203) configured to determine whether a correction amount (Ac), which is for correcting a target current of the motor current, is excessive, and the progress determination unit is configured to determine that the insufficiency condition is satisfied when the correction amount is excessive.

(Technical idea 9)

The propulsion system according to any one of technical ideas 5 to 8, in which the demagnetization management unit includes a limit mitigation unit (S209, S402) configured to mitigate the limit on the motor current when the motor current is insufficient for the propulsion of the moving object in a state in which the current limit unit limits the motor current.

(Technical idea 10)

The propulsion system according to any one of technical ideas 1 to 9, in which the demagnetization management unit includes a notification execution unit (S215, S403) configured to, when an insufficiency condition, which indicates insufficiency of a magnetic force caused by progress of the demagnetization, is satisfied for the permanent magnet, notify that the insufficiency condition is satisfied.

(Technical idea 11)

The propulsion system according to any one of technical ideas 1 to 10, in which the moving object is a flight vehicle (10) configured to fly by driving the motor, and the demagnetization management unit includes a take-off restriction unit (S210) configured to, when an insufficiency condition, which indicates insufficiency of a magnetic force caused by progress of the demagnetization, is satisfied for the permanent magnet, restrict take-off of the flight vehicle.

(Technical idea 12)

The propulsion system according to any one of technical ideas 1 to 11, further includes: a restriction execution unit (S1305) configured to restrict take-off of the moving object, which is capable of flying, when a motor temperature (Tm) of the motor is equal to or higher than a predetermined limit temperature (C1).

(Technical idea 13)

The propulsion system according to technical idea 12, further includes: a cooling device (110) provided in the moving object and configured to cool the motor; and a restriction cooling unit (S1306) configured to cause the cooling device to cool the motor when the take-off of the moving object is restricted by the restriction execution unit.

33

(Technical idea 14)

The propulsion system according to any one of technical ideas 1 to 13, further includes: a cooling device (110) provided in the moving object and configured to cool the motor; and a charging cooling unit (S1404) configured to cause the cooling device to cool the motor when a motor temperature (Tm) of the motor is equal to or higher than a predetermined charging temperature (C3) while a power storage device (31), which is configured to supply electric power to the motor, in the moving object is being charged.

(Technical idea 15)

The propulsion system according to any one of technical ideas 1 to 14, further includes: a cooling device (110) provided in the moving object and configured to cool the motor; and a stop restriction unit (S1104) configured to restrict stop of cooling for the motor performed by the cooling device when a motor temperature (Tm) of the motor is equal to or higher than a predetermined cooling temperature (C1) in a state in which the cooling device is cooling the motor.

(Technical idea 16)

The propulsion system according to technical idea 15, in which the stop restriction unit is configured to restrict the stop of the cooling for the motor performed by the cooling device when the motor temperature is equal to or higher than the cooling temperature after the moving object, which is capable of flying, lands.

(Technical idea 17)

The propulsion system according to any one of technical ideas 1 to 16, further includes: a cooling device (110) provided in the moving object and configured to be driven to cool the motor by using the motor as a driving source; and a cooling execution unit (S1105, S1306, S1404) configured to drive the motor such that a rotation speed of the motor when the moving object, which is capable flying, is not flying is smaller than when the motor causes the moving object to fly, and the cooling device cools the motor.

(Technical idea 18)

The propulsion system according to technical idea 17, further includes: an inverter (85) configured to convert electric power supplied to the motor to drive the motor, in which the cooling execution unit is configured to set a driving frequency of the inverter for driving the motor such that the cooling device cools the motor to a value smaller than a driving frequency of the inverter for driving the motor to cause the moving object to fly.

(Technical idea 19)

A propulsion control device (40) is configured to control a propulsion system (30) including a motor (61), which is configured to be driven to propel a moving object (10). The propulsion control device includes: an information acquisition unit (S103, S108, S801, S902) configured to acquire driving information indicating a driving state of the motor; and a demagnetization management unit (S109 to S113, S701, S802) configured to manage demagnetization of a permanent magnet (63a) of the motor using the driving information acquired by the information acquisition unit.

(Technical idea 20)

A propulsion control program (44) is configured to cause at least one processor (42) to control a propulsion system (30) including a motor (61), which is configured to be driven to propel a moving object (10). The propulsion control program is configured to cause the at least one processor to execute: processing (S103, S108, S801, S902) of acquiring driving information indicating a driving state of the motor; and processing (S109 to S113, S701, S802) of managing demagnetization of a permanent magnet (63a) of the motor using the driving information.

**Claims**

1. A propulsion system (30) configured to propel a moving object (10), the propulsion system comprising:

   a motor (61) including a permanent magnet (63a) and configured to be driven to propel the moving object;

an information acquisition unit (S103, S108, S801, S902) configured to acquire driving information indicating a driving state of the motor; and

a demagnetization management unit (S109 to S113, S701, S802) configured to manage demagnetization of the permanent magnet using the driving information acquired by the information acquisition unit.

2. The propulsion system according to claim 1, wherein

the information acquisition unit includes a history acquisition unit (S110) configured to acquire, as the driving information, motor history information (Cd) including a history of a motor temperature (Tm) of the motor and a history of a motor current (Im) of the motor, and

the demagnetization management unit is configured to manage the demagnetization of the permanent magnet using the motor history information.

3. The propulsion system according to claim 1 or 2, wherein

the demagnetization management unit includes an accumulation determination unit (S109 to S111) configured to determine whether an accumulated driving time (Cd) of the motor in a state, in which a condition causing the demagnetization of the permanent magnet is satisfied, reaches a threshold time (TCd), and

the demagnetization management unit is configured to manage the demagnetization of the permanent magnet using a determination result of the accumulation determination unit.

4. The propulsion system according to claim 1 or 2, wherein

the demagnetization management unit includes an output determination unit (S801, S901, S903) configured to determine whether an output value of the motor is insufficient with respect to a target value, and

the demagnetization management unit is configured to manage the demagnetization of the permanent magnet using a determination result of the output determination unit.

5. The propulsion system according to claim 1 or 2, wherein
the demagnetization management unit includes

a progress determination unit (S203) configured to determine whether an insufficiency condition, which indicates insufficiency of a magnetic force caused by progress of the demagnetization, is satisfied for the permanent magnet, and

a current limit unit (S205, S207) configured to limit a motor current (Im) of the motor when the insufficiency condition is satisfied.

6. The propulsion system according to claim 5, wherein
the current limit unit includes a temperature handling unit (S205, S207) configured to adjust a limit degree of the motor current according to a motor temperature (Tm) of the motor.

7. The propulsion system according to claim 5, wherein
the current limit unit includes:

a non-limit unit (S207, S303) configured not to limit the motor current,

a specific limit unit (S207, S304) configured to limit the motor current such that the motor current is not cut off,

a current cutoff unit (S207, S305) configured to cut off the motor current, and

a limit selection unit (S301, S302) configured to select the non-limit unit, the specific limit unit, and the current cutoff unit according to a motor temperature (Tm) of the motor.

8. The propulsion system according to claim 5, wherein

the progress determination unit includes a correction determination unit (S203) configured to determine whether a correction amount (Ac), which is for correcting a target current of the motor current, is excessive, and

the progress determination unit is configured to determine that the insufficiency condition is satisfied when the correction amount is excessive.

9. The propulsion system according to claim 5, wherein

the demagnetization management unit includes a limit mitigation unit (S209, S402) configured to mitigate the limit on the motor current when the motor current is insufficient for propulsion of the moving object in a state in which the current limit unit limits the motor current.

10. The propulsion system according to claim 1 or 2, wherein
the demagnetization management unit includes a notification execution unit (S215, S403) configured to, when an insufficiency condition, which indicates insufficiency of a magnetic force caused by progress of the demagnetization, is satisfied for the permanent magnet, notify that the insufficiency condition is satisfied.

11. The propulsion system according to claim 1 or 2, wherein

the moving object is a flight vehicle (10) configured to fly by driving the motor, and
the demagnetization management unit includes a take-off restriction unit (S210) configured to, when an insufficiency condition, which indicates insufficiency of a magnetic force caused by progress of the demagnetization, is satisfied for the permanent magnet, restrict take-off of the flight vehicle.

12. The propulsion system according to claim 1 or 2, further comprising:
a restriction execution unit (S1305) configured to restrict take-off of the moving object, which is capable of flying, when a motor temperature (Tm) of the motor is equal to or higher than a predetermined limit temperature (C1).

13. The propulsion system according to claim 12, further comprising:

a cooling device (110) provided in the moving object and configured to cool the motor; and
a restriction cooling unit (S1306) configured to cause the cooling device to cool the motor when the take-off of the moving object is restricted by the restriction execution unit.

14. The propulsion system according to claim 1 or 2, further comprising:

a cooling device (110) provided in the moving object and configured to cool the motor; and
a charging cooling unit (S1404) configured to cause the cooling device to cool the motor when a motor temperature (Tm) of the motor is equal to or higher than a predetermined charging temperature (C3) while a power storage device (31), which is configured to supply electric power to the motor, in the moving object is being charged.

15. The propulsion system according to claim 1 or 2, further comprising:

a cooling device (110) provided in the moving object and configured to cool the motor; and
a stop restriction unit (S1104) configured to restrict stop of cooling for the motor performed by the cooling device when a motor temperature (Tm) of the motor is equal to or higher than a predetermined cooling temperature (C1) in a state in which the cooling device is cooling the motor.

16. The propulsion system according to claim 15, wherein
the stop restriction unit is configured to restrict the stop of the cooling for the motor performed by the cooling device when the motor temperature is equal to or higher than the cooling temperature after the moving object, which is capable of flying, lands.

17. The propulsion system according to claim 1 or 2, further comprising:

a cooling device (110) provided in the moving object and configured to be driven to cool the motor by using the motor as a driving source; and
a cooling execution unit (S1105, S1306, S1404) configured to drive the motor such that

a rotation speed of the motor when the moving object, which is capable flying, is not flying is smaller than when the motor causes the moving object to fly, and
the cooling device cools the motor.

18. The propulsion system according to claim 17, further comprising:

an inverter (85) configured to convert electric power supplied to the motor to drive the motor, wherein the cooling execution unit is configured to set a driving frequency of the inverter for driving the motor such that the cooling device cools the motor to a value smaller than a driving frequency of the inverter for driving the motor to cause the moving object to fly.

19. A propulsion control device (40) configured to control a propulsion system (30) including a motor (61), which is configured to be driven to propel a moving object (10), the propulsion control device comprising:

an information acquisition unit (S103, S108, S801, S902) configured to acquire driving information indicating a driving state of the motor; and
a demagnetization management unit (S109 to S113, S701, S802) configured to manage demagnetization of a permanent magnet (63a) of the motor using the driving information acquired by the information acquisition unit.

20. A propulsion control program (44) configured to cause at least one processor (42) to control a propulsion system (30) including a motor (61), which is configured to be driven to propel a moving object (10), the propulsion control program configured to cause the at least one processor to execute:

processing (S103, S108, S801, S902) of acquiring driving information indicating a driving state of the motor; and
processing (S109 to S113, S701, S802) of managing demagnetization of a permanent magnet (63a) of the motor using the driving information.

# FIG. 1

# FIG. 2

EP 4 725 842 A1

# FIG. 3

# FIG. 4

```
              ( FLIGHT CONTROL )
                      │
                      ▼
         ┌─────────────────────────────┐
         │  ACQUIRE eVTOL INFORMATION  │──── S101
         └─────────────────────────────┘
                      │
                      ▼
         NO    ◇─────────────────◇ ──── S102
     ◄─────────│     FLYING?     │
         │     ◇─────────────────◇
         │             │ YES
         │             ▼
  ┌──────┴──┐  ┌──────────────┐
  │  S114   │  │  ACQUIRE Tm  │──── S103
  ▼         │  └──────────────┘
┌───────────────┐      │
║  MAINTENANCE  ║      ▼
└───────────────┘  ◇──────────────────◇       NO      ┌──── S108
         │         │  ABNORMAL REGION? │───────────►┌──────────────┐
         │         ◇──────────────────◇            │  ACQUIRE Im  │
         │                 │ YES                    └──────────────┘
         │                 │                               │ S109
         │                 │                               ▼
         │                 │                ◇──────────────────────◇  NO
         │                 │                │    DEMAGNETIZATION    │────┐
         │                 │                │       REGION?         │    │
         │                 │                ◇──────────────────────◇    │
         │                 │                         │ YES  S110         │
         │                 │                         ▼                   │
         │                 │                ┌──────────────┐            │
         │                 │                │   COUNT Cd   │            │
         │                 │                └──────────────┘            │
         │                 │                         │ S111   NO        │
         │                 ▼                         ▼                  │
         │       ┌──────────────────┐       ◇─────────────◇────────────┤
         │       │ STORE ABNORMALITY│──S105 │   Cd≥TCd?   │            │
         │       └──────────────────┘       ◇─────────────◇            │
         │                 │                         │ YES  S112        │
         │                 ▼                         ▼                  │
         │       ┌──────────────────┐       ┌─────────────────┐        │
         │       │ NOTIFY ABNORMALITY│─S106  │ SET FIRST FLAG  │        │
         │       └──────────────────┘       └─────────────────┘        │
         │                 │                         │ S113             │
         │                 ▼                         ▼                  │
         │       ┌──────────────────┐       ┌─────────────────┐        │
         │       │   ABNORMALITY    │─S107  ║ DEMAGNETIZATION ║        │
         │       │ LIMIT PROCESSING │       ║    HANDLING     ║        │
         │       └──────────────────┘       └─────────────────┘        │
         │                 │                         │                  │
         └─────────────────┼─────────────────────────┴──────────────────┘
                           ▼
                      (  END  )
```

EP 4 725 842 A1

# FIG. 5

# FIG. 6

```
                    ┌─────────────────────┐
                    │ SECOND LIMIT RANGE  │
                    └─────────────────────┘
                               │
                              ╱│╲  S301
                            ╱      ╲         NO
                          ╱  Tm<T1?  ╲ ───────────────┐
                            ╲      ╱                   │
                              ╲  ╱                     │
                               │ YES                  ╱│╲  S302
                               │              ╱              ╲    NO
                               │            ╱     Tm<T2?       ╲ ──────────┐
                               │              ╲              ╱              │
                               │                ╲          ╱                │
         S303                  │                  │ YES  S304               │  S305
  ┌──────────────┐            │         ┌────────────────────┐    ┌──────────────┐
  │ LOWER RANGE  │            │         │ INTERMEDIATE RANGE │    │ HIGHER RANGE │
  └──────────────┘            │         └────────────────────┘    └──────────────┘
                               │                  │                      │
                               ▼◄─────────────────┴──────────────────────┘
                         ┌──────────┐
                         │   END    │
                         └──────────┘
```

# FIG. 7

```
                    ┌─────────────────────┐
                    │   LIMIT HANDLING    │
                    └─────────────────────┘
                               │
                              ╱│╲  S401
               NO           ╱      ╲
          ┌─────────────── ╱ THIRD   ╲
          │                ╲  FLAG?  ╱
          │                  ╲      ╱
          │                    ╲  ╱
          │                     │ YES
          │                     │        S402
          │         ┌────────────────────┐
          │         │ SECOND MITIGATION  │
          │         │    PROCESSING      │
          │         └────────────────────┘
          │                     │        S403
          │         ┌────────────────────┐
          │         │ SECOND MITIGATION  │
          │         │   NOTIFICATION     │
          │         └────────────────────┘
          │                     │
          └────────────────────►▼
                         ┌──────────┐
                         │   END    │
                         └──────────┘
```

# FIG. 8

```
                    ┌──────────────┐
                    │ MAINTENANCE  │
                    └──────────────┘
                           │
                           ▼  ╭─ S501
                        ╱RESET?╲
              NO ◄─────╱        ╲
                       ╲        ╱
                        ╲      ╱
                           │ YES
                           ▼  ╭─ S502
                    ╱MAINTENANCE╲
                   ╱ COMPLETED? ╲────► NO
                   ╲            ╱
                    ╲          ╱
                       │ YES              │
                       ▼  ╭ S503          ▼  ╭ S505
                  ┌─────────┐        ┌──────────────┐
                  │  RESET  │        │    RESET     │
                  └─────────┘        │ PROHIBITION  │
                       │             └──────────────┘
                       ▼  ╭ S504          ▼  ╭ S506
                  ┌──────────────┐   ┌──────────────┐
                  │    RESET     │   │    NOTIFY    │
                  │ NOTIFICATION │   │ PROHIBITION  │
                  └──────────────┘   └──────────────┘
                       │                  │
                       ▼                  │
                    ┌──────┐
                    │ END  │
                    └──────┘
```

EP 4 725 842 A1

# FIG. 9

```
        ┌─────────────────────┐
        │   DEMAGNETIZATION   │
        │      HANDLING       │
        └─────────────────────┘
                  │
                  ▼         S201
          ◇ FIRST FLAG? ◇──── NO ──┐
                  │ YES            │
                  ▼         S202   │
          ┌──────────────┐         │
          │ CALCULATE Ac │         │
          └──────────────┘         │
                  │         S601   │
          ┌──────────────┐         │
          │ CALCULATE Sm │         │
          └──────────────┘         │
                  │         S602   │
          ◇    SUDDEN    ◇─ YES ───┤
          ◇ ABNORMALITY  ◇         │
          ◇    FLAG?     ◇         │
                  │ NO             │
                  ▼         S203   │
          ◇   Ac≥TAc?   ◇── NO ────────┐
                  │ YES            │    │
                  ▼         S603   │    │
  ┌── YES ──◇  DEVIATE?  ◇         │    │
  │               │ NO             │    │
  ▼        S604   ▼         S204   │    │
┌────────────┐  ┌──────────────┐   │    │
│ SET SUDDEN │  │ SET SECOND   │   │    │
│ABNORMALITY │  │    FLAG      │   │    │
│   FLAG     │  └──────────────┘   │    │
└────────────┘         │           │    │
       │        S605   ~           │    ~
┌────────────┐         │           │    │
│SUDDEN      │         │           │    │
│ABNORMALITY │         │           │    │
│ HANDLING   │         │           │    │
└────────────┘         ▼◄──────────────┘
       │               │      S215
       │        ┌──────────────┐
       │        │   NOTIFY     │
       │        │DEMAGNETIZATION│
       │        └──────────────┘
       │               │      S216
       │        ┌──────────────┐
       │        │LIMIT HANDLING│
       │        └──────────────┘
       │               │
       └───────────────┤
                       ▼
                ┌─────────────┐
                │     END     │
                └─────────────┘
```

# FIG. 10

EP 4 725 842 A1

# FIG. 11

Flowchart:

FLIGHT CONTROL

ACQUIRE eVTOL INFORMATION — S101

FLYING? — S102
- NO → MAINTENANCE — S114
- YES → ACQUIRE Tm — S103

ABNORMAL REGION? — S104
- NO → ACQUIRE Im — S108
- YES → STORE ABNORMALITY — S105

ACQUIRE Im — S108

DEMAGNETIZATION REGION? — S109
- NO →
- YES → COUNT CORRECTION — S701

COUNT CORRECTION — S701

COUNT Cd — S110

Cd ≥ TCd? — S111
- NO →
- YES → SET FIRST FLAG — S112

SET FIRST FLAG — S112

DEMAGNETIZATION HANDLING — S113

STORE ABNORMALITY — S105

NOTIFY ABNORMALITY — S106

ABNORMALITY LIMIT PROCESSING — S107

END

47

## FIG. 12

# FIG. 13

```
                    ( FLIGHT CONTROL )
                             │
                             ▼
          ┌──────────────────────────────────┐
          │   ACQUIRE eVTOL INFORMATION       │ ─── S101
          └──────────────────────────────────┘
                             │
                             ▼
              NO          ◇ S102
        ◄──────────────  FLYING?  ───────────────
        │                   │
        │                  YES
        │                   ▼
        │         ┌──────────────────┐ ─── S103
        │         │   ACQUIRE Tm      │
        ▼         └──────────────────┘
S114                       │
┌────────────────┐         ▼                      S104
│  MAINTENANCE   │  ◇ ABNORMAL REGION? ◇ ──── NO ────┐            S108
└────────────────┘         │                         ▼
        │                 YES            ┌──────────────────┐
        │                  │             │   ACQUIRE Im      │
        │                  │             └──────────────────┘
        │                  │                      │
        │                  │                      ▼  S801
        │                  │             ┌──────────────────┐
        │                  │             │   CALCULATE Ac    │
        │                  │             └──────────────────┘
        │                  │                      │
        │                  ▼  S105                 ▼  S802
        │         ┌──────────────────┐      ◇ Ac≥TAc? ◇ ── NO ──┐
        │         │ STORE ABNORMALITY │            │             │
        │         └──────────────────┘           YES   S112      │
        │                  │  S106                 ▼             │
        │         ┌──────────────────┐     ┌──────────────────┐ │
        │         │ NOTIFY ABNORMALITY│     │  SET FIRST FLAG   │ │
        │         └──────────────────┘     └──────────────────┘ │
        │                  │  S107                 │  S113       │
        │         ┌──────────────────┐     ┌──────────────────┐ │
        │         │ ABNORMALITY LIMIT │     │ DEMAGNETIZATION  │ │
        │         │   PROCESSING      │     │    HANDLING      │ │
        │         └──────────────────┘     └──────────────────┘ │
        │                  │                       │             │
        └──────────────────┴───────────────────────┴─────────────┘
                           │
                           ▼
                       ( END )
```

# FIG. 14

```
        ( DEMAGNETIZATION )
        (   HANDLING      )
                │
                │ S201
               ╱◇╲
        NO  ╱       ╲
       ◄───◇ FIRST FLAG? ◇
            ╲       ╱
               ╲◇╱
                │ YES
                │ S901
               ╱◇╲
              ╱     ╲    NO
         ◇ CORRECTION  ◇──────────────────┐
         ◇ AMOUNT UPPER ◇                  │
          ╲  LIMIT? ╱                      │
            ╲◇╱                            │
             │ YES                         │
             │ S204                        │
       ┌─────────────────┐                 │
       │ SET SECOND FLAG │                 │
       └─────────────────┘                 │
             │ S205                        │ S211
       ┌─────────────────┐          ┌─────────────────┐
       ║SECOND LIMIT RANGE║          │ FIRST LIMIT RANGE│
       └─────────────────┘          └─────────────────┘
             │ S902                         │
       ┌─────────────────────┐              │ S212
       │CALCULATE OUTPUT TORQUE│            ╱◇╲
       └─────────────────────┘            ╱     ╲   NO
             │ S903                    ◇ LIMITED FLIGHT ◇───┐
            ╱◇╲        YES             ◇ POSSIBLE?  ◇       │
          ◇ TORQUE ◇─────────┐          ╲       ╱          │
          ◇INSUFFICIENT?◇     │            ╲◇╱             │
            ╲◇╱              │             │ YES           │
             │ NO            │ S208        │ S213          │ S214
             │ S207    ┌──────────────┐ ┌──────────────┐ ┌──────────┐
       ┌──────────┐    │SET THIRD FLAG│ │ FIRST LIMIT  │ │  FIRST   │
       │SECOND LIMIT│   └──────────────┘ │ PROCESSING   │ │MITIGATION│
       │PROCESSING │         │ S209      └──────────────┘ │PROCESSING│
       └──────────┘    ┌──────────────┐        │         └──────────┘
             │         │   SECOND     │        │              │
             │         │MITIGATION PROCESSING│  │              │
             │         └──────────────┘        │              │
             │               │ S210            │              │
             │         ┌──────────────────┐    │              │
             │         │SET PROHIBITION FLAG│   │              │
             │         └──────────────────┘    │              │
             │               │                 │              │
             └───────────────┴─────────────────┴──────────────┘
             │ S215
       ┌──────────────────────┐
       │ NOTIFY DEMAGNETIZATION│
       └──────────────────────┘
             │ S216
       ┌──────────────────┐
       ║  LIMIT HANDLING  ║
       └──────────────────┘
             │
           ( END )
```

FIG. 15

# FIG. 16

```
                    ( FLIGHT CONTROL )
                            │
                            ▼
        ┌──────────────────────────────────┐
        │   ACQUIRE eVTOL INFORMATION       ├── S101
        └──────────────────────────────────┘
                            │
                            ▼
    NO              ◇ FLYING? ◇ ── S102
  ◄─────────────────
        │                   │ YES
        │                   ▼
        │       S1001   ┌──────────────┐
        │               │  ACQUIRE Tm  ├── S103
        ▼               └──────────────┘
  ┌──────────────┐  S1001       │
  │   LANDING    │              ▼                        S104
  │   HANDLING   │        ◇ ABNORMAL REGION? ◇ ─── NO ──────┐
  └──────────────┘  S1002                                    │
        │                       │ YES                        ▼
        ▼                       │              ┌──────────────┐
  ┌──────────────┐              │              │  ACQUIRE Im  ├── S108
  │   DRIVING    │              │              └──────────────┘
  │  INSPECTION  │  S114        │                     │    S109
  └──────────────┘              │                     ▼
        │                       │          ◇ DEMAGNETIZATION ◇ ── NO ──┐
        ▼                       │            ◇  REGION?  ◇              │
  ┌──────────────┐              │                     │ YES            │
  │ MAINTENANCE  │  S1003       │                     ▼                │
  └──────────────┘              │              ┌──────────────┐        │
        │                       │              │  COUNT Cd    ├── S110  │
        ▼                       │              └──────────────┘        │
  ┌──────────────┐              │                     │    S111        │
  │   TAKE-OFF   │              │                     ▼                │
  │ PREPARATION  │  S1004       │          ◇ Cd≥TCd? ◇ ── NO ──────────┤
  └──────────────┘              │                     │ YES            │
        │                       │                     ▼                │
        ▼                       │              ┌──────────────┐        │
  ┌──────────────┐              ▼              │SET FIRST FLAG├── S112  │
  │   CHARGING   │       ┌──────────────┐      └──────────────┘        │
  │   HANDLING   │       │    STORE     ├─S105        │                │
  └──────────────┘       │  ABNORMALITY │             ▼                │
        │                └──────────────┘      ┌──────────────┐        │
        │                       │              │DEMAGNETIZATION├─S113   │
        │                       ▼              │   HANDLING   │        │
        │                ┌──────────────┐      └──────────────┘        │
        │                │    NOTIFY     ├─S106        │                │
        │                │  ABNORMALITY │             │                │
        │                └──────────────┘             │                │
        │                       │                     │                │
        │                       ▼                     │                │
        │                ┌──────────────┐             │                │
        │                │ABNORMALITY   ├─S107        │                │
        │                │LIMIT         │             │                │
        │                │PROCESSING    │             │                │
        │                └──────────────┘             │                │
        │                       │                     │                │
        └───────────────────────┤◄────────────────────┴────────────────┘
                                ▼
                          ( END )
```

# FIG. 17

```
        ( LANDING HANDLING )
                  │
                  ▼
  NO      ╱ LANDING COMPLETED? ╲ ─── S1101
 ◄───────╲                    ╱
  │         │ YES
  │         ▼
  │    ┌──────────────┐
  │    │  ACQUIRE Tm  │ ─── S1102
  │    └──────────────┘
  │         │
  │         ▼
  │  NO   ╱  Tm≧C1?  ╲ ─── S1103
 ◄────────╲          ╱
  │         │ YES
  │         ▼
  │    ┌────────────────────┐
  │    │ POWER-OFF PROHIBITION │ ─── S1104
  │    └────────────────────┘
  │         │
  │         ▼
  │    ┌──────────────┐
  │    │     COOL     │ ─── S1105
  │    └──────────────┘
  │         │
  │         ▼
  │  NO   ╱  Tm＜C1a?  ╲ ─── S1106
 ◄────────╲           ╱
  │         │ YES
  │         ▼
  │    ┌──────────────┐
  │    │ STOP COOLING │ ─── S1107
  │    └──────────────┘
  │         │
  │         ▼
  │    ┌──────────────────────┐
  │    │  RELEASE POWER-OFF    │ ─── S1108
  │    │     PROHIBITION       │
  │    └──────────────────────┘
  │         │
  └─────────┤
            ▼
         (  END  )
```

# FIG. 18

# FIG. 19

DRIVING INSPECTION

S1201 — REQUEST FOR INSPECTION DRIVING?

NO

YES

S1202 — INSPECTION DRIVING

S1203 — ACQUIRE Im

S1204 — ACQUIRE Tr

S1205 — $Km \leq JKm?$

NO

YES

S1206 — TORQUE ABNORMALITY

S1207 — NOTIFY

S1208 — INSPECTION COMPLETED

END

# FIG. 20

```
              ┌─────────────────┐
              │    TAKE-OFF     │
              │   PREPARATION   │
              └─────────────────┘
                       │
       NO      ◇───────────────◇  S1301
    ◄──────────   POWER ON?
                 ◇───────────────◇
                       │ YES
       NO      ◇───────────────◇  S1302
    ◄──────────    GROUND?
                 ◇───────────────◇
                       │ YES
              ┌─────────────────┐  S1303
              │   ACQUIRE Tm    │
              └─────────────────┘
                       │
       NO      ◇───────────────◇  S1304
    ◄──────────    Tm≥C2?
                 ◇───────────────◇
                       │ YES
              ┌─────────────────┐  S1305
              │ PROHIBIT TAKE-OFF│
              └─────────────────┘
                       │
              ┌─────────────────┐  S1306
              │      COOL       │
              └─────────────────┘
                       │
       NO      ◇───────────────◇  S1307
    ◄──────────    Tm<C2a?
                 ◇───────────────◇
                       │ YES
              ┌─────────────────┐  S1308
              │  STOP COOLING   │
              └─────────────────┘
                       │
              ┌─────────────────┐  S1309
              │ RELEASE TAKE-OFF│
              │   PROHIBITION   │
              └─────────────────┘
                       │
              ┌─────────────────┐
              │       END       │
              └─────────────────┘
```

# FIG. 21

```
                    ( CHARGING HANDLING )
                            │
                            ▼
      NO              ┌─────────────┐          S1401
  ◄───────────────────┤BEING CHARGED?├
                      └─────────────┘
                            │ YES
                            ▼
                    ┌─────────────┐            S1402
                    │  ACQUIRE Tm │
                    └─────────────┘
                            │
                            ▼
      NO              ┌─────────────┐          S1403
  ◄───────────────────┤   Tm≧C3?    ├
                      └─────────────┘
                            │ YES
                            ▼
                    ┌─────────────┐            S1404
                    │    COOL     │
                    └─────────────┘
                            │
                            ▼
      NO              ┌─────────────┐          S1405
  ◄───────────────────┤   Tm<C3a?   ├
                      └─────────────┘
                            │ YES
                            ▼
                    ┌─────────────┐            S1406
                    │STOP COOLING │
                    └─────────────┘
                            │
                            ▼
                         ( END )
```

## INTERNATIONAL SEARCH REPORT

| International application No. |
| --- |
| **PCT/JP2024/020358** |

| **A.** | **CLASSIFICATION OF SUBJECT MATTER** |
| --- | --- |

***B64D 27/24***(2024.01)i; ***H02P 29/62***(2016.01)i
FI:  B64D27/24; H02P29/62

According to International Patent Classification (IPC) or to both national classification and IPC

| **B.** | **FIELDS SEARCHED** |
| --- | --- |

Minimum documentation searched (classification system followed by classification symbols)

B64D27/24; H02P29/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 111211719 A (ZHUZHOU CRRC TIMES ELECTRIC CO., LTD.) 29 May 2020 (2020-05-29) | 1-2, 4-10, 19-20 |
|  | paragraphs [0002], [0023], [0028]-[0030], [0054], fig. 1-3 |  |
| Y |  | 3, 11-18 |
| Y | CN 114400941 A (MIDDLE VEHICLE PERMANENT MOTOR LIMITED COMPANY) 26 April 2022 (2022-04-26) | 3, 11-18 |
|  | paragraphs [0003]-[0004], [0026], fig. 1-8 |  |
| Y | CN 107591981 A (LI, Yangyuan) 16 January 2018 (2018-01-16) | 11-18 |
|  | paragraph [0012] |  |
| Y | WO 2022/123940 A1 (KYOCERA CORPORATION) 16 June 2022 (2022-06-16) | 14-18 |
|  | paragraph [0009], fig. 1-13 |  |
| Y | JP 6475899 B1 (THE CHUGOKU ELECTRIC POWER CO., INC.) 27 February 2019 (2019-02-27) | 14-18 |
|  | paragraphs [0012]-[0013], [0034], [0092], fig. 1-16 |  |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 August 2024** | **20 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (July 2022)

## INTERNATIONAL SEARCH REPORT

| | International application No. |
|---|---|
| | **PCT/JP2024/020358** |

### C. DOCUMENTS CONSIDERED TO BE RELEVANT

| Category* | Citation of document, with indication, where appropriate, of the relevant passages | Relevant to claim No. |
|---|---|---|
| Y | JP 2020-040550 A (SHINDENGEN ELECTRIC MANUFACTURING CO., LTD.) 19 March 2020 (2020-03-19)<br>paragraph [0036], fig. 1-24 | 18 |
| A | CN 114785225 A (CHONGQING MIDEA GENERAL REFRIGERATING EQUIPMENT CO., LTD.) 22 July 2022 (2022-07-22)<br>entire text, all drawings | 1-20 |

Form PCT/ISA/210 (second sheet) (July 2022)

**INTERNATIONAL SEARCH REPORT**
Information on patent family members

International application No.

**PCT/JP2024/020358**

| Patent document cited in search report | | | Publication date (day/month/year) | Patent family member(s) | Publication date (day/month/year) |
|---|---|---|---|---|---|
| CN | 111211719 | A | 29 May 2020 | (Family: none) | |
| CN | 114400941 | A | 26 April 2022 | (Family: none) | |
| CN | 107591981 | A | 16 January 2018 | (Family: none) | |
| WO | 2022/123940 | A1 | 16 June 2022 | (Family: none) | |
| JP | 6475899 | B1 | 27 February 2019 | WO 2019/135273 A1 paragraphs [0012]-[0013], [0034], [0092], fig. 1-16 | |
| JP | 2020-040550 | A | 19 March 2020 | (Family: none) | |
| CN | 114785225 | A | 22 July 2022 | WO 2023/213171 A1 entire text, all drawings | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023094322 A

- JP 2020205709 A